(19) Europäisches Patentamt
European Patent Office
Office européen des brevets

(11) **EP 2 091 168 B1**

(12) **EUROPEAN PATENT SPECIFICATION**

(45) Date of publication and mention
of the grant of the patent:
**26.12.2018 Bulletin 2018/52**

(21) Application number: **07832141.1**

(22) Date of filing: **19.11.2007**

(51) Int Cl.:
***H04B 7/0413*** *(2017.01)*    ***H04L 25/02*** *(2006.01)*

(86) International application number:
**PCT/JP2007/072411**

(87) International publication number:
**WO 2008/059985 (22.05.2008 Gazette 2008/21)**

(54) **MIMO COMMUNICATION SYSTEM HAVING DETERMINISTIC COMMUNICATION PATHS AND METHOD**

MIMO-KOMMUNIKATIONSSYSTEM MIT DETERMINISTISCHEN KOMMUNIKATIONSPFADEN UND VERFAHREN

SYSTÈME DE COMMUNICATION MIMO À TRAJETS DE COMMUNICATION DÉTERMINISTES, ET PROCÉDÉ

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **17.11.2006   JP 2006312277**

(43) Date of publication of application:
**19.08.2009   Bulletin 2009/34**

(73) Proprietor: **NEC Corporation**
**Minato-ku**
**Tokyo 108-8001 (JP)**

(72) Inventor: **MARU, Tsuguo**
**Tokyo 108-8001 (JP)**

(74) Representative: **Vossius & Partner**
**Patentanwälte Rechtsanwälte mbB**
**Siebertstrasse 3**
**81675 München (DE)**

(56) References cited:
EP-A2- 1 237 291        WO-A1-2005/039095
WO-A1-2005/088884    WO-A1-2006/104142
JP-A- 2001 505 723      JP-A- 2003 258 770
JP-A- 2004 524 758      US-A1- 2005 128 953

**Description**

Technical Field

The present invention relates to a space-division multiplexing method (hereinafter, referred to as "MIMO (Multiple-Input Multiple-Output) ") and, more particularly to a MIMO communication system suitably applied to a line-of-sight fixed point microwave communication system.

Background Art

In recent years, a technique using a MIMO has become popular in the field of wireless communication, and the MIMO itself is becoming no longer a new technology. Conventional techniques using the MIMO mainly focus on a mobile communication, and application of the MIMO to a fixed communication has not been fully examined. In a mobile communication radio channels, radio wave coming from a transmission antenna is reflected or scattered according to the surrounding terrain and reaches a receiver in the form of a group of waves, resulting in occurrence of fading phenomenon which has been an obstacle to achievement of high quality communication . The MIMO technique in a mobile communication does not demonize the fading phenomenon but considers it as environmental resources with great potential that are inherent in mobile communication radio propagation. In this point, the MIMO technique is regarded as a revolutionary technique.

Although smaller in the amount of examples than the mobile communication, Non-Patent Document 1 discloses consequents of application of such a MIMO technique to a line-of-sight fixed radio communication where radio channels are determined.

The mobile communication as described above deals with channels as a probabilistic matrix. On the other hand, the line-of-sight fixed radio communication needs to deal with radio channels as deterministic radio channels where the geometrical positional relationship between transmission and reception antennas is fixed.

The above Non-Patent Document 1 describes, as follows, what effect is produced on a channel matrix H constituting channels between transmission and reception antennas as a result of extension of antenna separation length on both the transmission side and reception side.

[Numeral 1]

$$\mathbf{H} \cdot \mathbf{H}^{H} = n \cdot \mathbf{I}_{n}$$

where n is the number of antennas, $H^H$ is the Hermitian transposed matrix of H, and I is a unit matrix.

According to Non-Patent Document 1, the phase rotation of a signal with respect to a transmission antenna i and reception antenna k linearly arranged so as to face each other between the transmission side and reception side is set by the following formula and thereby the transmission and reception antenna can be constituted by linear antennas.

[Numeral 2]

$$\frac{\pi}{n} \cdot [i - k]^{2}$$

Accordingly, when n=2, the channel matrix H is represented by the following formula:

[Numeral 3]

$$\mathbf{H}_{\text{max}} = \begin{bmatrix} 1 & j \\ j & 1 \end{bmatrix}$$

where j is a symbol representing an imaginary number.

In this case, an antenna configuration satisfying the condition of Numeral 1 is possible. Non-Patent Document 1 describes that when the condition of Numeral 1 is satisfied, channel capacity in the MIMO configuration becomes maximum by $H_{\text{max}}$.

That is, an increase in channel capacity based on the MIMO can be expected not only in a mobile communication environment that is subject to reflection or scattering but also in a deterministic line-of-sight communication environment.

On the other hand, a fixed point microwave communication system uses a frequency band of several GHz to several tens of GHz, which corresponds to several mm to several cm in terms of wavelength. Therefore, a significant phase rotation may occur due to movement in the antenna direction highly sensitive to a subtle change of weather condition such as wind or surrounding temperature. Under such a condition, it is difficult to ensure the deterministic channel matrix.

Note that theoretical analysis to be described later analytically reveals that the above increase in channel capacity can be achieved even when such a displacement in the highly sensitive antenna direction occurs.

In the MIMO technique, a plurality of independent signals are transmitted/received at the same frequency band. Therefore, signal separation/detection is necessary. As a means for realizing this, there is a known a method (hereinafter, referred to as SVD method) based on matrix calculation using a unitary matrix which is obtained by Singular Value Decomposition (SVD) . Assuming that feedback information for construction of the unitary matrix can ideally be send from a receiving end to transmission end in the SVD method. In this case, even when the above displacement in the highly sensitive antenna direction occurs, the unitary matrix acts so as to compensate for the displacement. As a result, large capacity fixed point microwave communication can be realized based on the MIMO.

Non-Patent Document 1: IEEE TRANSACTIONS ON COMMUNICATIONS , VOL.47, NO. 2, FEBRUARY 1999, PP. 173-176, On the Capacity Formula for Multiple Input-Multiple Output Wireless Channels: A Geometric Interpretation WO 2006/104 142 A1 refers to a MIMO decoder, which aims at changing the search range of transport signal vector in accordance with a change of a channel matrix. US 2005/128 953 A1 refers to techniques to calibrate the downlink and uplink channels to account for differences in the frequency responses of the transmit and receive chains at an access point and a user terminal. EP 123 7291 A2 refers to a communication device for transmitting and/or receiving signals using a communication antenna including signal characteristic information detection means for detecting information regarding signal characteristics of a calibration signal contained in a signal received by the communication antenna, calibration means for calibrating a communication antenna chain based on the detected signal characteristic information, cancellation signal generating means for generating a cancellation signal corresponding to a calibration signal contained in the signal received by the communication antenna based on the calibration signal, signal cancellation-by-subtraction means for subtracting the generated cancellation signal from the signal received by the communication antenna and receive signal processing means for processing the received signal diminished by the cancellation signal.

However, the above feedback information may increase system overhead. In addition, it is necessary to prepare an inverse channel for exchanging the feedback information. Note that a modeling of a channel matrix H to be described later performs analysis including the displacement in the highly sensitive antenna direction.

When the singular value analysis is carried out for the line-of-sight fixed channels where channels are deterministic, there exists an inter-antenna position at which an eigenvalue is multiplicity condition to generate a singular point. Although the singular value is uniquely determined, singular vectors are not unique. This state, which is particularly analytically troublesome, may cause significant transition of the singular vectors.

However, by utilizing this phenomenon, various configurations can be possible. Various examples of configurations that take advantage of the characteristics will be described later.

As a major problem in the deterministic line-of-sight MIMO, there is a problem that carrier synchronization between antennas must be achieved on the transmission side or reception side in the above conventional method. That is, the phase difference between a plurality of antennas on the transmission side or reception side needs to be equal or needs to have a constant phase difference.

On the other hand, in the fixed point microwave communication system, antenna separation length must be widened in view of a frequency to be used. Correspondingly, radio devices including local oscillators are installed near antennas. That is, the problem of the necessity of achievement of carrier synchronization between antennas imposes severe restriction on construction of the fixed point microwave communication system.

An object of the present invention is therefore to provide MIMO communication system having deterministic channels wherein the MIMO is applied to line-of-sight channels having a fixed geometrical positional relationship so as to increase the channel capacity and its method.

Another object of the present invention is to provide a MIMO communication system capable of offering performance equivalent to a conventional SVD method without feedback information that needs to be sent from a reception end to transmission end for construction of a unitary matrix in the SVD method.

Further, the main object of the present invention is to provide a MIMO communication system in which the problem of the necessity of achievement of carrier synchronization between antennas which imposes severe restriction on construction of the fixed point microwave communication system is solved.

Still another object of the present invention is to provide a MIMO communication system capable of offering performance equivalent to an SVD method even under the condition that it is difficult to ensure a deterministic channel matrix due to a significant phase rotation caused by movement in the antenna direction highly sensitive to a subtle change of weather condition such as wind or surrounding temperature.

The MIMO according to the present invention is a line-of-sight communication, so that there is some correlation between signals of a plurality of antennas and, in this point, differs from MIMO used in a conventional mobile communication. That is, a conventional mobile communication or indoor wireless LAN system is realized based on the assumption that there is no correlation between signals of a plurality of antennas. Therefore, it should be noted that, unlike the MIMO according the present invention, conventional MIMO does not operate in a state where there is some correlation between antennas.

Means for Solving the Problems

To solve the above problems, according to the present invention, there is provided a line-of-sight MIMO communication system including a plurality of channels characterized by comprising: a channel matrix calculation processing section on a transmission or reception side or both of the transmission and reception sides, wherein the channel matrix calculation processing section updates an orthogonal channel formation matrix in accordance with a fluctuation of a transmission antenna position (e.g., a transmission antenna, light-emitting device, speaker, and the like used in electric wave propagation) or reception antenna (e.g. , a reception antenna, light-receiving device, microphone, and the like used in electric wave propagation) or a fluctuation of the channels.

For formation of virtual orthogonal channels, geometric parameters of the channels are set so that the eigenvalue of the channel matrix become multiplicity condition, and calculation of a unitary matrix constituted based on an eigenvector obtained from the eigenvalue or an eigenvector obtained from the linear sum of eigenvector is performed on one of the transmission side or reception side.

The MIMO communication system is a fixed point microwave communication system using a plurality of antennas and is constituted by using local oscillators provided independently for respective antennas on one or both of the transmission and reception sides.

The MIMO communication system includes a means for detecting a fluctuation of a transmission antenna position or reception antenna position or a fluctuation of the channels and, based on a detection result from the means, updates a virtual orthogonal channel formation matrix.

Advantages of the Invention

The MIMO communication system according to the present invention includes a plurality of channels. Further, the system includes a channel matrix calculation processing section on a transmission or reception side or both of the transmission and reception sides. The channel matrix arithmetic processing section updates an orthogonal channel formation matrix in accordance with a fluctuation of a transmission antenna position or reception antenna position or a fluctuation of the channels. With this configuration, it is possible to absorb a fluctuation of a transmission antenna position or reception antenna position or a fluctuation of the channels, thereby providing a MIMO communication system capable of achieving the maximum communication capacity.

Further, for formation of virtual orthogonal channels, geometric parameters of the channels are set so that the eigenvalue of the channel matrix is multiplicity condition, and calculation of a unitary matrix constituted based on an eigenvector obtained from the eigenvalue or an eigenvector obtained from the linear sum of eigenvector is performed on one of the transmission side or reception side. This enables flexible system design and can realize a configuration in which there is no need to use an inverse channel for exchanging the feedback information and a configuration in which only transmission processing is performed.

Further, the MIMO communication system is a fixed point microwave communication system using a plurality of antennas and constituted by using local oscillators provided independently for respective antennas on one or both of the transmission and reception sides . With this configuration, it is possible to solve the problem of the necessity of achievement of carrier synchronization between antennas that imposes severe restriction on construction of the fixed point microwave communication system.

Further, matrix calculation processing for formation of the virtual orthogonal channels may be performed only on the reception side. With this configuration, a MIMO communication system where there is no need to use an inverse channel for periodically and frequently exchanging the feedback information can be provided.

Further, the MIMO communication system includes a means for detecting a fluctuation of a transmission antenna position or reception antenna position or a fluctuation of the channels and uses a detection result from the means to update a virtual orthogonal channel formation matrix. With this configuration, a problem-free MIMO communication system with satisfactory installation condition and rigid structure can be provided.

Further, the MIMO communication system includes a means for transmitting pilot signals from the transmission side to reception side, detects a fluctuation of a transmission antenna position or reception antenna position or a fluctuation of the channels by the pilot signals, and updates a virtual orthogonal channel formation matrix based on a result of the detection . With this configuration, a problem-free MIMO communication system with satisfactory installation condition and rigid structure can be provided.

Further, the MIMO communication system includes a means for transmitting pilot signals of respective antennas from the transmission side to reception side and, based on the pilot signals, performs matrix calculation processing for formation of the virtual orthogonal channels only on the reception side. With this simple processing, a MIMO communication system where there is no need to use an inverse channel for periodically and frequently exchanging the feedback information can be provided.

Further, the pilot signals to be transmitted from the transmission side to reception side are generated before processing performed by the local oscillators. With this configuration, phase noise between local oscillators generated on the transmission side can be detected on the reception end, and the generated phase noise can be compensated for by updating the matrix.

Further, the detection of the pilot signals that have been transmitted from the transmission side to reception side is performed after processing performed by the local oscillators on the reception side. With this configuration, phase noise between local oscillators generated on the reception side can be detected on the reception end, and the generated phase noise can be compensated for by updating the matrix.

Further, the pilot signals transmitted from the transmission side to reception side are orthogonal between transmission antennas . With this configuration, phase noise between the local oscillators and a displacement in the highly sensitive antenna direction caused due to weather condition can be detected by a simple correlator, and the detected phase noise or displacement can be compensated for by updating the matrix.

Further, the line-of-sight channels may be used as optical channels or acoustic channels , as well as electrical wave channels . Also in this case, the MIMO communication system can be provided.

Further, one or both of the separation length between a plurality of transmission antennas or a plurality of reception antennas and direction of a plurality of transmission antennas or a plurality of reception antennas are made changeable. With this configuration, a MIMO communication system where the maximum communication capacity can always be achieved by controlling one or both of the separation length between the transmission antennas or a reception antennas and axial direction of the transmission antennas or reception antennas, regardless of the type of a geometric form of the line-of-sight channels.

In the present invention, the abovementioned effects need not be achieved simultaneously but at least one of the effects may be achieved.

Brief Description of the Drawings

FIG. 1 is a view showing a configuration example of a line-of-sight MIMO where an SVD method in which antenna separation length is arbitrarily set and a fluctuation of antenna position in the highly sensitive antenna direction is taken into consideration;

FIG. 2 is a view showing a first example (first configuration example) of the line-of-sight MIMO according to the present invention, where matrix calculation based on a unitary matrix V is performed only on the transmission side;

FIG. 3 is a view showing a second example (second configuration example) of the line-of-sight MIMO according to the present invention, where matrix calculation based on a unitary matrix is performed only on the transmission side and where virtual orthogonal channels have different values;

FIG. 4 is a view showing a third example (third configuration example) of the line-of-sight MIMO according to the present invention, where matrix calculation based on a unitary matrix is performed only on the reception side and where local oscillators are provided independently for respective antennas on the transmission side;

FIG. 5 is a view showing a fourth example (fourth configuration example) of the line-of-sight MIMO according to the present invention, where matrix calculation based on a unitary matrix is performed only on the reception side and where local oscillators are provided independently for respective antennas both on the transmission and reception sides;

FIG. 6 is a view showing a fifth example (fifth configuration example) of the line-of-sight MIMO according to the present invention, where matrix calculation based on a unitary matrix is performed only on the reception side, where virtual orthogonal channels have different values, and where local oscillators are provided independently for respective antennas both on the transmission and reception sides;

FIG. 7 is a view showing a sixth example (sixth configuration example) of the line-of-sight MIMO according to the present invention, where three antennas are installed respectively on the transmission and reception sides, and where local oscillators are provided independently for respective antennas both on the transmission and reception sides;

FIG. 8 is a view showing a seventh example (seventh configuration example) of the line-of-sight MIMO according to the present invention, where four antennas are installed respectively on the transmission and reception sides, and where local oscillators are provided independently for respective antennas both on the transmission and reception sides;

FIG. 9 is a view showing comparison between SNRs of virtual orthogonal channels based on respective methods in terms of antenna separation length;

FIG. 10 is a view showing a configuration example in which antenna separation lengths differ from each other between transmission and reception sides;

FIG. 11 is a view showing a modeling of the channels of FIG. 10;

FIG. 12 is a view showing communication capacity in the case of FIG. 10 where antenna separation lengths differ from each other between transmission and reception sides;

FIG. 13 is a view showing a configuration example in which antenna arrangement between the transmission and reception sides is formed in diamond shape;

FIG. 14 is a view showing a configuration example in which antenna arrangement between the transmission and reception sides is formed in diamond shape and where matrix calculation based on a unitary matrix is performed only on reception side;

FIG. 15 is a view showing a case where antenna arrangement between the transmission and reception sides is formed in an arbitrary geometric form;

FIG. 16 is a view showing an example in which optical channels are used as deterministic channels;

FIG. 17 is a view showing an example in which acoustic channels are used as deterministic channels;

FIG. 18 is a view showing an configuration example of an antenna used in a configuration in which antenna arrangement between the transmission and reception sides is formed in an arbitrary geometric form;

FIG. 19 is a view showing eigenvalues on the virtual orthogonal channels; and

FIG. 20 is a view showing an application example of a configuration in which matrix calculation is performed only on transmission side.

Explanation of Reference Symbols

101, 201: Matrix calculation processing section based on unitary matrix V

102, 108, 402, 502, 510, 602, 610: Frequency conversion section

103, 105, 109, 111, 403, 407, 503, 507, 511, 515, 603, 607, 611, 615: Mixer

104, 110, 404, 405, 504, 505, 512, 513, 604, 605, 612, 613: Local oscillator

106, 107, 202, 203, 302, 303, 408, 409, 508, 509, 608, 609: Fixed antenna section

112, 410, 517: Matrix calculation processing section based on unitary matrix U

301: Matrix calculation processing section based on matrix V

401, 501, 601: Pilot signal generation section

406, 506, 514, 606, 614: Modeling of phase noise caused due to absent of synchronization between carriers

516, 616: Pilot detection section

617: Matrix calculation processing section based on matrix U

1601: Laser diode (LD)

1602: Photodetector (PD)
1701: Ultrasonic oscillator
1702: Ultrasonic microphone
1801, 1802: Antenna element
1803: Connection bar
1804: Hinge
2001: Transmission station
2002: Reception station 1
2003: Reception station 2

Best Mode for Carrying Out the Invention

An exemplary embodiment of the present invention will be described with reference to the accompanying formulas and accompanying drawings. Before that, a theoretical reasoning for the fact that channel capacity in the MIMO configuration becomes maximum even with deterministic line-of-sight channels will be explained.

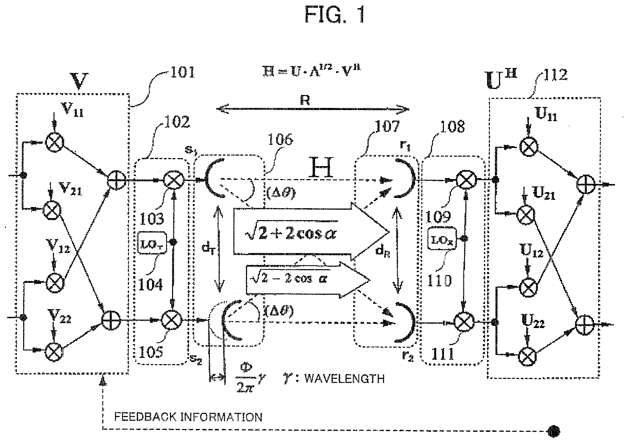

The channel capacity of virtual orthogonal channels based on the MIMO configuration is represented by eigenvalues of respective paths. Then, eigenvalue analysis is performed for a configuration using two antennas. The following modeling, whose antenna configuration and reference symbols are shown in FIG. 1, takes the displacement in the highly sensitive antenna direction into consideration. Although a case where two antennas are used will be described for convenience, the same calculation may be applied regardless of the number of antennas.

The propagation loss and common phase shift based on a transmitter-receiver distance R are not essential so those terms are ignored. The channel difference between diagonal channel and straight channel is represented by Numeral 4.

[Numeral 4]

$$R \cdot \left(1 - \cos(\Delta\theta)\right) \approx R \cdot \left(\frac{(\Delta\theta)^2}{2}\right) = R \cdot \left(\frac{1}{2}(\frac{d_R}{R})^2\right) = \frac{d_R^2}{2R} \quad \because \frac{d_R}{R} = \tan(\Delta\theta) \approx (\Delta\theta), \quad at \ d_T = d_R$$

Phase rotation a based on the channel difference is represented by Numeral 5.

[Numeral 5]

$$\alpha = 2\pi \left(\frac{d_R^2}{2R}\right) / \gamma = \frac{\pi}{\gamma} \cdot \frac{d_R^2}{R}$$

Incidentally, assuming that RF frequency=30GHz, R=5000m, antenna separation length $d_T$=$d_R$=5m, $\alpha$ is satisfied.

[Numeral 6]

$$\alpha = \frac{\pi}{\gamma} \cdot \frac{d_R^{\,2}}{R} = \frac{\pi}{(3 \cdot 10^8)/(30 \cdot 10^9)} \cdot \frac{5^2}{5000} = \frac{\pi}{2}$$

Therefore, channel matrix H considering phase shift Φ based on the fluctuation of a transmission antenna position for transmitting a signal $s_2$ which is one of two transmission antennas for transmitting signals $s_1$ and $s_2$ provided on the transmission side is represented by Numeral 7.

[Numeral 7]

$$\mathbf{H} = \begin{bmatrix} 1 & e^{-j\alpha} \cdot e^{j\Phi} \\ e^{-j\alpha} & 1 \cdot e^{j\Phi} \end{bmatrix}$$

Therefore, Numeral 8 is satisfied.

[Numeral 8]

$$\Omega = \mathbf{H}^H \cdot \mathbf{H} = \begin{bmatrix} 1 & e^{j\alpha} \\ e^{j\alpha} \cdot e^{-j\Phi} & e^{-j\Phi} \end{bmatrix} \cdot \begin{bmatrix} 1 & e^{-j\alpha} \cdot e^{j\Phi} \\ e^{-j\alpha} & e^{j\Phi} \end{bmatrix} = \begin{bmatrix} 2 & e^{j\Phi}(e^{j\alpha} + e^{-j\alpha}) \\ e^{-j\Phi}(e^{j\alpha} + e^{-j\alpha}) & 2 \end{bmatrix}$$

$$= \begin{bmatrix} 2 & 2 \cdot \cos\alpha \cdot e^{j\Phi} \\ 2 \cdot \cos\alpha \cdot e^{-j\Phi} & 2 \end{bmatrix}$$

As a result, eigenvalues $\lambda_1$ and $\lambda_2$ representing channel capacity of the virtual orthogonal channels can be calculated as follows. In the following formula, $H^H$ is the Hermitian transposed matrix of the channel matrix H.

[Numeral 9]

$$\begin{vmatrix} 2-\lambda & 2 \cdot \cos\alpha \cdot e^{j\Phi} \\ 2 \cdot \cos\alpha \cdot e^{-j\Phi} & 2-\lambda \end{vmatrix} = \lambda^2 + 4 - 4\lambda - 4\cos^2\alpha = \lambda^2 - 4\lambda - 4\sin^2\alpha = 0$$

$$\therefore \quad \lambda = 2 \pm \sqrt{4 - 4\sin^2\alpha} = 2 \pm 2\cos\alpha$$

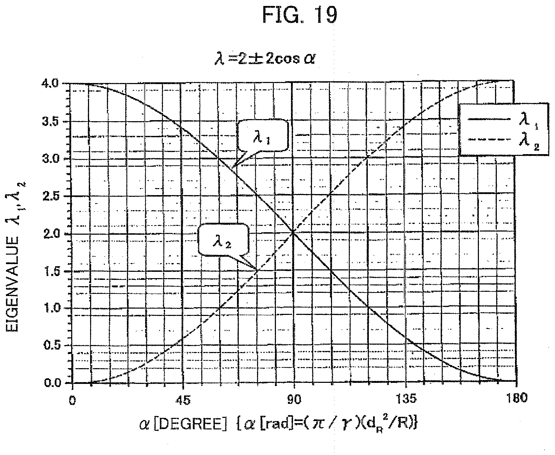

A calculation result of Numeral 9 is shown in FIG. 19. The numerical result in FIG. 19 shows a case where unit power is transmitted per one antenna and, therefore, channel capacity is double as same as the number of antennas. It should be noted here that the modeling used in the above calculation includes a displacement in the highly sensitive antenna direction . Despite this, the displacement component does not appear in a result of the eigenvalue representing a final channel capacity. That is, an increase in the channel capacity is possible by MIMO even in the line-of-sight fixed radio communication where radio channels are determined. The channel capacity is determined by the antenna separation length not relevant to the highly sensitive antenna displacement.

A case where two antennas are used has been described above. In the following, a case where three or more antennas are used will be described.

A phase rotation between a linearly arranged transmission antenna and reception antenna, which is based on the channel difference between orthogonal channel and straight channel, is obtained from Numeral 5. Assuming that the antenna separation length is a common value of d, the phase rotation is represented by Numeral 10.

[Numeral 10]

$$\frac{\pi}{\gamma} \cdot \frac{d^2}{R}$$

[Numeral 11]

$$\frac{\pi}{\gamma} \cdot \frac{d^2}{R} = \frac{\pi}{3} \quad \therefore \quad \frac{d^2}{R} = \frac{\gamma}{3}$$

Thus, when d and transmitter-receiver distance R are defined so that the above Numeral 11 is satisfied and a configuration in which three antennas are used is considered, a channel matrix $H_3$ represented by Numeral 12 can be obtained.

[Numeral 12]

$$\mathbf{H_3} = \begin{bmatrix} 1 & e^{-j\frac{\pi}{3}} & e^{-j4\frac{\pi}{3}} \\ e^{-j\frac{\pi}{3}} & 1 & e^{-j\frac{\pi}{3}} \\ e^{-j4\frac{\pi}{3}} & e^{-j\frac{\pi}{3}} & 1 \end{bmatrix}$$

Therefore, Numeral 13 is satisfied.

[Numeral 13]

$$\Omega = \mathbf{H}_3{}^H \cdot \mathbf{H}_3 = \begin{bmatrix} 1 & e^{j\frac{\pi}{3}} & e^{j4\frac{\pi}{3}} \\ e^{j\frac{\pi}{3}} & 1 & e^{j\frac{\pi}{3}} \\ e^{j4\frac{\pi}{3}} & e^{j\frac{\pi}{3}} & 1 \end{bmatrix} \cdot \begin{bmatrix} 1 & e^{-j\frac{\pi}{3}} & e^{-j4\frac{\pi}{3}} \\ e^{-j\frac{\pi}{3}} & 1 & e^{-j\frac{\pi}{3}} \\ e^{-j4\frac{\pi}{3}} & e^{-j\frac{\pi}{3}} & 1 \end{bmatrix} = \begin{bmatrix} 3 & 0 & 0 \\ 0 & 3 & 0 \\ 0 & 0 & 3 \end{bmatrix}$$

Thus, it can be understood that three eigenvalues corresponding to the channel capacity of the virtual orthogonal channels are all "3" and that the entire channel capacity is three times as same as the number of antennas.

[Numeral 14]

$$\frac{\pi}{\gamma} \cdot \frac{d^2}{R} = \frac{\pi}{4} \quad \therefore \quad \frac{d^2}{R} = \frac{\gamma}{4}$$

Similarly, when d and transmitter-receiver distance Rare defined so that a configuration in which four antennas are used is considered, a channel matrix $H_4$ represented by Numeral 15 can be obtained.

[Numeral 15]

$$\mathbf{H}_4 = \begin{bmatrix} 1 & e^{-j\frac{\pi}{4}} & e^{-j4\frac{\pi}{4}} & e^{-j9\frac{\pi}{4}} \\ e^{-j\frac{\pi}{4}} & 1 & e^{-j\frac{\pi}{4}} & e^{-j4\frac{\pi}{4}} \\ e^{-j4\frac{\pi}{4}} & e^{-j\frac{\pi}{4}} & 1 & e^{-j\frac{\pi}{4}} \\ e^{-j9\frac{\pi}{4}} & e^{-j4\frac{\pi}{4}} & e^{-j\frac{\pi}{4}} & 1 \end{bmatrix}$$

Therefore, Numeral 16 is satisfied.

[Numeral 16]

$$\Omega = \mathbf{H}_4{}^H \cdot \mathbf{H}_4 = \begin{bmatrix} 1 & e^{j\frac{\pi}{4}} & e^{j4\frac{\pi}{4}} & e^{j9\frac{\pi}{4}} \\ e^{j\frac{\pi}{4}} & 1 & e^{j\frac{\pi}{4}} & e^{j4\frac{\pi}{4}} \\ e^{j4\frac{\pi}{4}} & e^{j\frac{\pi}{4}} & 1 & e^{j\frac{\pi}{4}} \\ e^{j9\frac{\pi}{4}} & e^{j4\frac{\pi}{4}} & e^{j\frac{\pi}{4}} & 1 \end{bmatrix} \cdot \begin{bmatrix} 1 & e^{-j\frac{\pi}{4}} & e^{-j4\frac{\pi}{4}} & e^{-j9\frac{\pi}{4}} \\ e^{-j\frac{\pi}{4}} & 1 & e^{-j\frac{\pi}{4}} & e^{-j4\frac{\pi}{4}} \\ e^{-j4\frac{\pi}{4}} & e^{-j\frac{\pi}{4}} & 1 & e^{-j\frac{\pi}{4}} \\ e^{-j9\frac{\pi}{4}} & e^{-j4\frac{\pi}{4}} & e^{-j\frac{\pi}{4}} & 1 \end{bmatrix} = \begin{bmatrix} 4 & 0 & 0 & 0 \\ 0 & 4 & 0 & 0 \\ 0 & 0 & 4 & 0 \\ 0 & 0 & 0 & 4 \end{bmatrix}$$

Thus, it can be understood that four eigenvalues corresponding to the channel capacity of the virtual orthogonal channels are all "4" and that the entire channel capacity is four times as same as the number of antennas.

That is, it can be understood that even when the number of antennas exceeds 2, the channel capacity of deterministic line-of-sight channels is increased to an extent corresponding to the number of antennas which is equivalent to the maximum capacity of MIMO. Note that although a case where two antennas are used will be described for convenience in the following examples , it goes without saying that the same is applied to a case where the number of antennas exceeds 2.

Next, as a signal separation/detection method in MIMO, a method (hereinafter, referred to as SVD method) based on matrix calculation using a unitary matrix which is obtained by Singular Value Decomposition will be described. In the SVD method, matrix calculation using a unitary matrix V on the transmission side and matrix calculation using a unitary matrix U on the reception side are required. In order to perform the matrix calculation using the unitary matrix V, feedback information for construction of a unitary matrix needs to be sent from the reception end to transmission end.

An exemplary embodiment of the present invention will be described in detail below with reference to the accompanying formulas and accompanying drawings.

In FIG. 1, transmission signals processed by a transmission (transmitter) side matrix calculation processing section 101 based on the unitary matrix V are frequency converted into signals of a radio frequency by a transmission side frequency conversion section 102 including a local oscillator 104, a mixer 103, and a mixer 105 and then transmitted from a fixed antenna section 106 including a plurality of antennas as $s_1$ and $s_2$. The notation of the $s_1$ and $s_2$ is based on equivalent baseband representation.

It should be noted here that carrier synchronization between antennas is achieved by a local oscillation signal supplied from one local oscillator 104 to the mixers 103 and 105. This results from a restriction on a space-division multiplexing fixed point microwave communication system that deterministic channels are determined based on the phase difference between paths. However, as described later, the local oscillators may be provided independently for respective antennas.

The signals thus transmitted are received by a reception (receiver) side fixed antenna section 107 including a plurality of antennas as $r_1$ and $r_2$. The notation of the $r_1$ and $r_2$ is based on equivalent baseband representation. The reception signals $r_1$ and $r_2$ are frequency converted into signals of a baseband frequency by a reception side frequency conversion section 108 including a local oscillator 110, a mixer 109, and a mixer 111 and then processed by a reception side matrix calculation processing section 112 based on the unitary matrix U, whereby signal separation/detection in MIMO is completed.

It should be noted here that carrier synchronization between antennas is achieved by a local oscillation signal supplied from one local oscillator 110 to the mixers 109 and 111. This results from a restriction on a space-division multiplexing fixed point microwave communication system that deterministic channels are determined based on the phase difference between paths.

Also in this case, as described later, the local oscillators may be provided independently for respective antennas as in the case of the transmission end. The antennas to be used are not particularly limited and may be a parabola antenna or a horn antenna . The matrix calculation processing sections 101 and 112 may be realized by program control or constructed by hardware such as ASIC (Application Specific Integrated Circuit) or the like.

Next, a method of calculating the unitary matrixes V and U using the following channel matrix H considering a given antenna separation length and highly sensitive antenna displacement will concretely be described with reference to formulas.

Channel matrix H of line-of-sight channels used here is represented by Numeral 17.

[Numeral 17]

$$\mathbf{H} = \begin{bmatrix} 1 & e^{-j\alpha} \cdot e^{j\Phi} \\ e^{-j\alpha} & 1 \cdot e^{j\Phi} \end{bmatrix} \quad \text{where;} \quad \alpha = \frac{\pi}{\gamma} \cdot \frac{d_R^2}{R} \quad (\text{at } d_T = d_R), \quad \Phi \text{ ; phase change caused by displacement}$$

Singular value orthogonal matrix $\Lambda^{1/2}$ based on the eigenvalue is represented by Numeral 18.

[Numeral 18]

$$\Lambda^{1/2} = \begin{bmatrix} \sqrt{2+2\cos\alpha} & 0 \\ 0 & \sqrt{2-2\cos\alpha} \end{bmatrix} = \begin{bmatrix} 2\cdot\cos\left(\frac{\alpha}{2}\right) & 0 \\ 0 & 2\cdot\sin\left(\frac{\alpha}{2}\right) \end{bmatrix} = \begin{bmatrix} (e^{j\frac{\alpha}{2}}+e^{-j\frac{\alpha}{2}}) & 0 \\ 0 & -j(e^{j\frac{\alpha}{2}}-e^{-j\frac{\alpha}{2}}) \end{bmatrix} \quad \because \begin{cases} 1+\cos\alpha = 2\cos^2\left(\frac{\alpha}{2}\right) \\ 1-\cos\alpha = 2\sin^2\left(\frac{\alpha}{2}\right) \end{cases}$$

The unitary matrix V and unitary matrix U are calculated using the above channel matrix H in the order mentioned.

[Unitary matrix V]

First, calculation of the unitary matrix V will be described. It is assumed that an eigenvector corresponding to the channel matrix H represented by Numeral 19 is represented by Numeral 20.

[Numeral 19]

$$\mathbf{H} = \begin{bmatrix} 1 & e^{-j\alpha} \cdot e^{j\Phi} \\ e^{-j\alpha} & 1 \cdot e^{j\Phi} \end{bmatrix}$$

[Numeral 20]

$$\begin{bmatrix} a \\ b \end{bmatrix}$$

In this case, Numeral 21 is satisfied.

[Numeral 21]

$$\Omega = \mathbf{H}^H \cdot \mathbf{H} = \begin{bmatrix} 2 & 2 \cdot \cos\alpha \cdot e^{j\Phi} \\ 2 \cdot \cos\alpha \cdot e^{-j\Phi} & 2 \end{bmatrix}$$

Thus, from Numeral 22, Numeral 23 can be obtained.

[Numeral 22]

$$\begin{bmatrix} 2 - \lambda & 2 \cdot \cos\alpha \cdot e^{j\Phi} \\ 2 \cdot \cos\alpha \cdot e^{-j\Phi} & 2 - \lambda \end{bmatrix} \cdot \begin{bmatrix} a \\ b \end{bmatrix} = \mathbf{0}$$

[Numeral 23]

$$a = \frac{-2 \cdot \cos\alpha \cdot e^{j\Phi}}{2 - \lambda} b = \frac{\cos\alpha \cdot e^{j\Phi}}{\pm\cos\alpha} b = \pm e^{j\Phi} \cdot b \quad \because \quad \lambda = 2 \pm 2\cos\alpha$$

When both sides of Numeral 24 are multiplied by $V^H$ from the left, Numeral 25 is obtained.

[Numeral 24]

$$\Omega \cdot \mathbf{v} = \lambda \cdot \mathbf{v}$$

[Numeral 25]

$$\mathbf{v}^H \cdot \Omega \cdot \mathbf{v} = \lambda$$

Then, orthogonal "v" are collected and Numeral 26 is obtained.

[Numeral 26]

$$\mathbf{V}^{\mathbf{H}} \cdot \mathbf{\Omega} \cdot \mathbf{V} = \mathbf{\Lambda} \quad \therefore \quad \mathbf{\Omega} = \mathbf{V} \cdot \mathbf{\Lambda} \cdot \mathbf{V}^{\mathbf{H}}$$

From Numeral 27, Numeral 28 is satisfied.

[Numeral 27]

$$\mathbf{H} = \mathbf{U} \cdot \mathbf{\Lambda}^{1/2} \cdot \mathbf{V}^{\mathbf{H}}$$

[Numeral 28]

$$\mathbf{\Omega} = \mathbf{H}^{H} \cdot \mathbf{H} = \mathbf{V} \cdot \mathbf{\Lambda}^{1/2} \cdot \mathbf{U}^{H} \cdot \mathbf{U} \cdot \mathbf{\Lambda}^{1/2} \cdot \mathbf{V}^{\mathbf{H}} = \mathbf{V} \cdot \mathbf{\Lambda} \cdot \mathbf{V}^{\mathbf{H}}$$

Thus, the eigenvectors each represented by Numeral 29 are collected to obtain Numeral 30.

[Numeral 29]

$$\mathbf{v} = \begin{bmatrix} a \\ \pm a \cdot e^{-j\Phi} \end{bmatrix}$$

[Numeral 30]

$$\mathbf{V} = \begin{bmatrix} x & y \\ x \cdot e^{-j\Phi} & -y \cdot e^{-j\Phi} \end{bmatrix}$$

Here, when Numeral 31 is set as a special solution considering normalization and orthogonality, Numeral 32 is obtained.

[Numeral 31]

$$x = \frac{-1}{\sqrt{2}}, \quad y = \frac{1}{\sqrt{2}}$$

[Numeral 32]

$$\mathbf{V} = \begin{bmatrix} \dfrac{-1}{\sqrt{2}} & \dfrac{1}{\sqrt{2}} \\ \dfrac{-e^{-j\Phi}}{\sqrt{2}} & \dfrac{-e^{-j\Phi}}{\sqrt{2}} \end{bmatrix} \quad \therefore \quad \mathbf{V}^{H} = \begin{bmatrix} \dfrac{-1}{\sqrt{2}} & \dfrac{-e^{j\Phi}}{\sqrt{2}} \\ \dfrac{1}{\sqrt{2}} & \dfrac{-e^{j\Phi}}{\sqrt{2}} \end{bmatrix}$$

[Unitary matrix U]

Next, calculation of the unitary matrix U will be described. It is assumed that an eigenvector u is represented by Numeral 34 based on Numeral 33.

[Numeral 33]

$$\mathbf{\Omega'} = \mathbf{H} \cdot \mathbf{H}^{H} = \begin{bmatrix} 1 & e^{-j\alpha} \cdot e^{j\Phi} \\ e^{-j\alpha} & 1 \cdot e^{j\Phi} \end{bmatrix} \cdot \begin{bmatrix} 1 & e^{j\alpha} \\ e^{j\alpha} \cdot e^{-j\Phi} & 1 \cdot e^{-j\Phi} \end{bmatrix} = \begin{bmatrix} 2 & 2 \cdot \cos\alpha \\ 2 \cdot \cos\alpha & 2 \end{bmatrix}$$

[Numeral 34]

$$\begin{bmatrix} a \\ b \end{bmatrix}$$

In this case, from Numeral 35, Numeral 36 is obtained.

[Numeral 35]

$$\begin{bmatrix} 2-\lambda & 2\cdot\cos\alpha \\ 2\cdot\cos\alpha & 2-\lambda \end{bmatrix} \cdot \begin{bmatrix} a \\ b \end{bmatrix} = \mathbf{0}$$

[Numeral 36]

$$a = \frac{-2\cdot\cos\alpha}{2-\lambda}b = \frac{\cos\alpha}{\pm\cos\alpha}b = \pm b \quad \because \lambda = 2 \pm 2\cos\alpha$$

When both sides of Numeral 37 are multiplied by $u^H$ from the left, Numeral 38 is obtained.

[Numeral 37]

$$\mathbf{\Omega'}\cdot\mathbf{u} = \lambda\cdot\mathbf{u}$$

[Numeral 38]

$$\mathbf{u}^H \cdot \mathbf{\Omega'}\cdot\mathbf{u} = \lambda$$

Then, orthogonal "u"s are collected and Numeral 39 is obtained.

[Numeral 39]

$$\mathbf{U}^H \cdot \mathbf{\Omega'}\cdot\mathbf{U} = \Lambda \quad \therefore \quad \mathbf{\Omega'} = \mathbf{U} \cdot \Lambda \cdot \mathbf{U}^H$$

Thus, the eigenvectors each represented by Numeral 40 are collected to obtain Numeral 41.

[Numeral 40]

$$\mathbf{u} = \begin{bmatrix} a \\ \pm a \end{bmatrix}$$

[Numeral 41]

$$\mathbf{U} = \begin{bmatrix} x & y \\ x & -y \end{bmatrix}$$

Here, when Numeral 42 is set as a special solution considering normalization and orthogonality, Numeral 43 is obtained.

[Numeral 42]

$$x = \frac{-e^{-j\frac{\alpha}{2}}}{\sqrt{2}}, \quad y = \frac{j \cdot e^{-j\frac{\alpha}{2}}}{\sqrt{2}}$$

[Numeral 43]

$$\mathbf{U} = \begin{bmatrix} \dfrac{-e^{-j\frac{\alpha}{2}}}{\sqrt{2}} & \dfrac{j \cdot e^{-j\frac{\alpha}{2}}}{\sqrt{2}} \\ \dfrac{-e^{-j\frac{\alpha}{2}}}{\sqrt{2}} & \dfrac{-j \cdot e^{-j\frac{\alpha}{2}}}{\sqrt{2}} \end{bmatrix} \quad \therefore \mathbf{U}^H = \begin{bmatrix} \dfrac{-e^{j\frac{\alpha}{2}}}{\sqrt{2}} & \dfrac{-e^{j\frac{\alpha}{2}}}{\sqrt{2}} \\ \dfrac{-je^{j\frac{\alpha}{2}}}{\sqrt{2}} & \dfrac{j \cdot e^{j\frac{\alpha}{2}}}{\sqrt{2}} \end{bmatrix}$$

For confirmation of the unitary matrixes V and U obtained by the above calculation, singular value decomposition of the channel matrix H is performed with V and U.

[Singular value decomposition of H = U· Λ· V$^H$]

When singular value decomposition of the channel matrix H is performed with V and U, Numeral 44 is satisfied.

[Numeral 44]

$$
\mathbf{H} = \mathbf{U} \cdot \Lambda^{1/2} \cdot \mathbf{V}^{\mathbf{H}} = \begin{bmatrix} \dfrac{-e^{-j\frac{\alpha}{2}}}{\sqrt{2}} & \dfrac{j \cdot e^{-j\frac{\alpha}{2}}}{\sqrt{2}} \\ \dfrac{-e^{-j\frac{\alpha}{2}}}{\sqrt{2}} & \dfrac{-j \cdot e^{-j\frac{\alpha}{2}}}{\sqrt{2}} \end{bmatrix} \cdot \begin{bmatrix} (e^{j\frac{\alpha}{2}} + e^{-j\frac{\alpha}{2}}) & 0 \\ 0 & -j(e^{j\frac{\alpha}{2}} - e^{-j\frac{\alpha}{2}}) \end{bmatrix} \begin{bmatrix} \dfrac{-1}{\sqrt{2}} & \dfrac{-e^{j\Phi}}{\sqrt{2}} \\ \dfrac{1}{\sqrt{2}} & \dfrac{-e^{j\Phi}}{\sqrt{2}} \end{bmatrix}
$$

$$
= \begin{bmatrix} \dfrac{-(1+e^{-j\alpha})}{\sqrt{2}} & \dfrac{(1-e^{-j\alpha})}{\sqrt{2}} \\ \dfrac{-(1+e^{-j\alpha})}{\sqrt{2}} & \dfrac{-(1-e^{-j\alpha})}{\sqrt{2}} \end{bmatrix} \cdot \begin{bmatrix} \dfrac{-1}{\sqrt{2}} & \dfrac{-e^{j\Phi}}{\sqrt{2}} \\ \dfrac{1}{\sqrt{2}} & \dfrac{-e^{j\Phi}}{\sqrt{2}} \end{bmatrix} = \begin{bmatrix} 1 & e^{-j\alpha} \cdot e^{j\Phi} \\ e^{-j\alpha} & 1 \cdot e^{j\Phi} \end{bmatrix}
$$

Thus, it can be understood that, as in the above example, it is possible to form orthogonal channels regardless of whether the optimum position (R=5000m and $d_T$=$d_R$=5m) is achieved or not. However, in this case, the transmission qualities of the obtained virtual orthogonal channels are proportional from $\sqrt{2}$ and $\sqrt{2}$ to $\sqrt{(2+2\cos\alpha)}$ and $\sqrt{(2-2\cos\alpha)}$ and therefore differ from each other .

In the block diagram of FIG. 1, virtual orthogonal channels where $\sqrt{(2+2\cos\alpha)}$ and $\sqrt{(2-2\cos\alpha)}$ denoted by thick arrows have been constructed is shown. It should be noted that the above unitary matrix includes a fluctuation between the channels caused due to external factors such as a fluctuation (modeled by $\Phi$ in FIG. 1) of an antenna position highly sensitive to a subtle change of weather condition such as wind or surrounding temperature. Thus, even when the above displacement in the highly sensitive antenna direction occurs, the unitary matrix acts so as to compensate for the displacement. As described later, even in a configuration in which local oscillators are provided independently for respective antennas, the phase difference is modeled into the fluctuation of the antenna position. Therefore, in the configuration of this example, the local oscillators may be provided independently.

The feedback information for construction of the V matrix needs to be sent from the reception end to transmission end in this configuration. However, when a configuration is adopted in which the displacement is compensated only on the reception side, it is possible to eliminate the need to use the feedback information.

General virtual orthogonal channels including a case where the constructed paths have different widths has been described above. In the following, a singular point where the line-of-sight fixed channels have multiple roots will be considered.

When the singular value analysis is carried out for the line-of-sight fixed channels where channels are deterministic, there exists an inter-antenna position at which an eigenvalue is multiplicity condition to generate a singular point. Although the singularvalue is uniquely determined, singular vectors are not unique. This state (Deficient matrix), which is particularly analytically troublesome, may cause significant transition of the eigenvectors. However, by utilizing this phenomenon, various configurations can be possible. Various examples of configurations that take advantage of the characteristics will be described later. Before that, the principle will be described.

Here, an inter-antenna position where Numeral 46 is satisfied with $\alpha$ in Numeral 45 will be considered.

[Numeral 45]

$$\alpha = 2\pi\left(\frac{d^2}{2R}\right)/\gamma = \frac{\pi}{\gamma}\cdot\frac{d^2}{R}$$

[Numeral 46]

$$e^{j\alpha} = \pm j$$

The channel matrix H in this state is represented by Numeral 47.

[Numeral 47]

$$\mathbf{H} = \begin{bmatrix} 1 & e^{-j\alpha}\cdot e^{j\Phi} \\ e^{-j\alpha} & 1\cdot e^{j\Phi} \end{bmatrix} \Rightarrow \begin{bmatrix} 1 & -j\cdot e^{j\Phi} \\ -j & 1\cdot e^{j\Phi} \end{bmatrix}$$

Here, Numeral 48 is satisfied.

[Numeral 48]

$$\Omega' = \mathbf{H}\cdot\mathbf{H}^H = \begin{bmatrix} 1 & -j\cdot e^{j\Phi} \\ -j & 1\cdot e^{j\Phi} \end{bmatrix}\cdot\begin{bmatrix} 1 & j \\ j\cdot e^{-j\Phi} & 1\cdot e^{-j\Phi} \end{bmatrix} = \begin{bmatrix} 2 & 0 \\ 0 & 2 \end{bmatrix}$$

Thus, from Numeral 49, eigen equation has multiplicity condition. In this case, the following conversion can be possible.

[Numeral 49]

$$\begin{vmatrix} 2-\lambda & 0 \\ 0 & 2-\lambda \end{vmatrix} = (2-\lambda)^2$$

Numeral 50 is satisfied for a given eigenvector $u_1$ with respect to eigenvalue $\lambda$.

[Numeral 50]

$$\Omega' \cdot u_1 = \lambda \cdot u_1$$

Similarly, Numeral 51 is satisfied for a given eigenvector $u_2$ with respect to eigenvalue $\lambda$.

[Numeral 51]

$$\Omega' \cdot u_2 = \lambda \cdot u_2$$

Therefore, Numeral 52 is satisfied for the linear sum of both the eigenvectors. Accordingly, linear sum $(c_1 \cdot u_1 + c_2 \cdot u_2)$ becomes an eigenvector.

[Numeral 52]

$$\Omega' \cdot \left( c_1 \cdot u_1 + c_2 \cdot u_2 \right) = \lambda \cdot \left( c_1 \cdot u_1 + c_2 \cdot u_2 \right)$$

It is assumed that an asymptotic eigenvector based on another condition is set for the multiple root as Numeral 53.

[Numeral 53]

$$\begin{bmatrix} a \\ b \end{bmatrix}$$

In this case, from Numeral 54, Numeral 55 is satisfied.

[Numeral 54]

$$\begin{bmatrix} 2-\lambda & 2\cdot\cos\alpha \\ 2\cdot\cos\alpha & 2-\lambda \end{bmatrix} \cdot \begin{bmatrix} a \\ b \end{bmatrix} = 0$$

[Numeral 55]

$$a = \frac{-2\cdot\cos\alpha}{2-\lambda}b = \frac{\cos\alpha}{\pm\cos\alpha}b = \pm b \quad \because \lambda = 2 \pm 2\cos\alpha$$

When both sides of Numeral 56 are multiplied by $u^H$ from the left, Numeral 57 is obtained.

[Numeral 56]

$$\mathbf{\Omega'}\cdot\mathbf{u} = \lambda\cdot\mathbf{u}$$

[Numeral 57]

$$\mathbf{u}^H\cdot\mathbf{\Omega'}\cdot\mathbf{u} = \lambda$$

Then, orthogonal "u"s are collected and Numeral 58 is obtained.

[Numeral 58]

$$\mathbf{U}^H\cdot\mathbf{\Omega'}\cdot\mathbf{U} = \Lambda \quad \therefore \quad \mathbf{\Omega'} = \mathbf{U}\cdot\Lambda\cdot\mathbf{U}^H$$

Here, Numeral 59 is satisfied.

[Numeral 59]

$$\Omega' = H \cdot H^{H} = U \cdot \Lambda^{1/2} \cdot V^{H} \cdot V \cdot \Lambda^{1/2} \cdot U^{H} = U \cdot \Lambda \cdot U^{H}$$

Thus, the above eigenvectors represented by Numeral 60 are collected to obtain Numeral 61 with normalization and orthogonality taken into consideration.

[Numeral 60]

$$\mathbf{u} = \begin{bmatrix} a \\ \pm a \end{bmatrix}$$

[Numeral 61]

$$\mathbf{u}_1 = \begin{bmatrix} x \\ x \end{bmatrix}, \quad \mathbf{u}_2 = \begin{bmatrix} x \\ -x \end{bmatrix}$$

Here, when considering sum and difference as linear combination, Numeral 62 is satisfied.

[Numeral 62]

$$\mathbf{u}_1 + \mathbf{u}_2 = \begin{bmatrix} 2x \\ 0 \end{bmatrix}, \quad \mathbf{u}_1 - \mathbf{u}_2 = \begin{bmatrix} 0 \\ 2x \end{bmatrix}$$

From Numeral 62, Numeral 63 is obtained.

[Numeral 63]

$$\mathbf{U} = \begin{bmatrix} 1 & 0 \\ 0 & 1 \end{bmatrix}$$

Further, since Numeral 64 is satisfied, Numeral 65 is satisfied.

[Numeral 64]

$$\mathbf{H} = \mathbf{U} \cdot \Lambda^{1/2} \cdot \mathbf{V}^{\mathbf{H}} = \begin{bmatrix} 1 & -j \cdot e^{j\Phi} \\ -j & 1 \cdot e^{j\Phi} \end{bmatrix} = \begin{bmatrix} 1 & 0 \\ 0 & 1 \end{bmatrix} \cdot \begin{bmatrix} \sqrt{2} & 0 \\ 0 & \sqrt{2} \end{bmatrix} \cdot \mathbf{V}^{\mathbf{H}}$$

[Numeral 65]

$$\mathbf{V}^{\mathbf{H}} = \begin{bmatrix} \dfrac{1}{\sqrt{2}} & 0 \\ 0 & \dfrac{1}{\sqrt{2}} \end{bmatrix} \cdot \begin{bmatrix} 1 & -j \cdot e^{j\Phi} \\ -j & 1 \cdot e^{j\Phi} \end{bmatrix} = \begin{bmatrix} \dfrac{1}{\sqrt{2}} & \dfrac{-j \cdot e^{j\Phi}}{\sqrt{2}} \\ \dfrac{-j}{\sqrt{2}} & \dfrac{e^{j\Phi}}{\sqrt{2}} \end{bmatrix}$$

As a trial, when the channel matrix H is calculated using the obtained matrixes U, $\Lambda^{1/2}$, and $\mathbf{V}^{H}$, Numeral 66 is satisfied.

[Numeral 66]

$$\mathbf{H} = \mathbf{U} \cdot \Lambda^{1/2} \cdot \mathbf{V}^{\mathbf{H}} = \begin{bmatrix} 1 & 0 \\ 0 & 1 \end{bmatrix} \cdot \begin{bmatrix} \sqrt{2} & 0 \\ 0 & \sqrt{2} \end{bmatrix} \cdot \begin{bmatrix} \dfrac{1}{\sqrt{2}} & \dfrac{-j \cdot e^{j\Phi}}{\sqrt{2}} \\ \dfrac{-j}{\sqrt{2}} & \dfrac{e^{j\Phi}}{\sqrt{2}} \end{bmatrix} = \begin{bmatrix} 1 & -j \cdot e^{j\Phi} \\ -j & e^{j\Phi} \end{bmatrix}$$

As can be seen from Numeral 66, the channel matrix H is effected. However, this is merely an example, and various decomposition methods can be considered based on the same approach, depending on the singular point corresponding to the multiple root.

First Example

(Case where matrix calculation is performed only on transmission side)

As a first example (first configuration example) of the present invention, a configuration example in which the matrix calculation is performed only on the transmission side will be described.

[Singular value orthogonal matrix $\Lambda^{1/2}$]

In this case, the virtual orthogonal channels have the same value, so that singular value orthogonal matrix $\Lambda^{1/2}$ is represented by Numeral 67.

[Numeral 67]

$$\Lambda^{1/2} = \begin{bmatrix} \sqrt{\lambda_1} & 0 \\ 0 & \sqrt{\lambda_2} \end{bmatrix} = \begin{bmatrix} \sqrt{2+2\cos\alpha} & 0 \\ 0 & \sqrt{2-2\cos\alpha} \end{bmatrix} = \begin{bmatrix} \sqrt{2} & 0 \\ 0 & \sqrt{2} \end{bmatrix}$$

[Channel matrix H]

Thus, the channel matrix H is represented by Numeral 68.

[Numeral 68]

$$\mathbf{H} = \mathbf{U} \cdot \Lambda^{1/2} \cdot \mathbf{V}^H = \begin{bmatrix} 1 & 0 \\ 0 & 1 \end{bmatrix} \cdot \begin{bmatrix} \sqrt{2} & 0 \\ 0 & \sqrt{2} \end{bmatrix} \cdot \begin{bmatrix} \dfrac{1}{\sqrt{2}} & \dfrac{-j \cdot e^{j\Phi}}{\sqrt{2}} \\ \dfrac{-j \cdot}{\sqrt{2}} & \dfrac{e^{j\Phi}}{\sqrt{2}} \end{bmatrix}$$

$$\therefore \quad \mathbf{V} = \begin{bmatrix} V_{11} & V_{12} \\ V_{21} & V_{22} \end{bmatrix} = \begin{bmatrix} \dfrac{1}{\sqrt{2}} & \dfrac{j}{\sqrt{2}} \\ \dfrac{j \cdot e^{-j\Phi}}{\sqrt{2}} & \dfrac{e^{-j\Phi}}{\sqrt{2}} \end{bmatrix} \qquad \mathbf{U}^H = \begin{bmatrix} U_{11} & U_{12} \\ U_{21} & U_{22} \end{bmatrix} = \begin{bmatrix} 1 & 0 \\ 0 & 1 \end{bmatrix}$$

$$\text{where;} \quad \alpha = 2\pi\left(\frac{d_R^2}{2R}\right) / \gamma = \frac{\pi}{\gamma} \cdot \frac{d_R^2}{R} = \frac{\pi}{2}$$

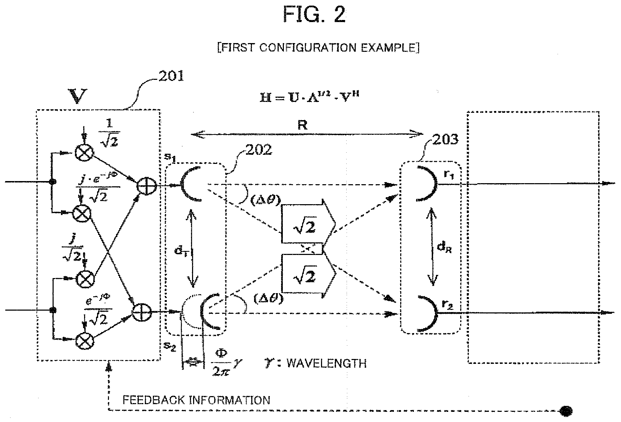

A configuration obtained based on the above result is shown in FIG. 2. In FIG. 2, transmission signals processed by a transmission side matrix calculation processing section 201 based on the unitary matrix V are transmitted from a fixed antenna section 202 including a plurality of antennas as $s_1$ and $s_2$. The notation of the $s_3$ and $s_2$ is based on equivalent baseband representation, and the frequency conversion processing is omitted here for avoiding complexity.
The signals thus transmitted are received by a reception side fixed antenna section 203 including a plurality of antennas as $r_1$ and $r_2$. The notation of the $r_1$ and $r_2$ is based on equivalent baseband representation, and the frequency conversion processing into a signal of a baseband frequency is omitted here for avoiding complexity. The point is that receiving side matrix calculation processing based on the unitary matrix U is not performed at all, but all matrix calculations are done on the transmission side.
As can be seen from Numeral 68, in the case where the matrix calculation is performed only on the transmission side, the matrix includes a fluctuation between the channels caused due to external factors such as a fluctuation (modeled by Φ in FIG. 2) of an antenna position highly sensitive to a subtle change of weather condition such as wind or surrounding temperature. Thus, even when the displacement in the highly sensitive antenna direction occurs, the unitary matrix acts so as to compensate for the displacement.

In this configuration, the feedback information for construction of the V matrix needs to be sent from the reception end to transmission end. The thick arrows of FIG. 2 denote virtual orthogonal channels in which channel qualities thereof are proportional to $\sqrt{2}$ and $\sqrt{2}$. The antennas to be used are not particularly limited and a parabola antenna or a horn antenna . The matrix calculation processing section 201 may be realized by program control or constructed by hardware such as ASIC or the like.

Second Example

(Case of virtual orthogonal channels having paths with different widths where matrix calculation is performed only on transmission side)

As a second example (second configuration example) of the present invention, a configuration example in which the matrix calculation is performed only on the transmission side in the virtual orthogonal channels having paths with different widths will be described.

[Singular value orthogonal matrix Λ$^{1/2}$]

In this case, the virtual orthogonal channels have different values, so that singular value orthogonal matrix Λ$^{1/2}$ is represented by Numeral 69.

[Numeral 69]

$$\Lambda^{1/2} = \begin{bmatrix} \sqrt{\lambda_1} & 0 \\ 0 & \sqrt{\lambda_2} \end{bmatrix} = \begin{bmatrix} \sqrt{2+2\cos\alpha} & 0 \\ 0 & \sqrt{2-2\cos\alpha} \end{bmatrix} = \begin{bmatrix} 2\cos\left(\frac{\alpha}{2}\right) & 0 \\ 0 & 2\sin\left(\frac{\alpha}{2}\right) \end{bmatrix} = \begin{bmatrix} (e^{j\frac{\alpha}{2}}+e^{-j\frac{\alpha}{2}}) & 0 \\ 0 & -j(e^{j\frac{\alpha}{2}}-e^{-j\frac{\alpha}{2}}) \end{bmatrix}$$

[Channel matrix H]

Thus, the channel matrix H is represented by Numeral 70.

[Numeral 70]

$$\mathbf{H} = \mathbf{U}\cdot\Lambda^{1/2}\cdot\mathbf{V}^H = \begin{bmatrix} 1 & e^{-j\alpha}\cdot e^{j\Phi} \\ e^{-j\alpha} & 1\cdot e^{j\Phi} \end{bmatrix} = \begin{bmatrix} 1 & 0 \\ 0 & 1 \end{bmatrix}\cdot\begin{bmatrix} (e^{j\frac{\alpha}{2}}+e^{-j\frac{\alpha}{2}}) & 0 \\ 0 & -j(e^{j\frac{\alpha}{2}}-e^{-j\frac{\alpha}{2}}) \end{bmatrix}\cdot\mathbf{V}^H$$

Thus, matrix V$^H$ is represented by Numeral 71.

[Numeral 71]

$$V^H = \begin{bmatrix} (e^{j\frac{\alpha}{2}} + e^{-j\frac{\alpha}{2}}) & 0 \\ 0 & -j(e^{j\frac{\alpha}{2}} - e^{-j\frac{\alpha}{2}}) \end{bmatrix}^{-1} \cdot \begin{bmatrix} 1 & e^{-j\alpha} \cdot e^{j\Phi} \\ e^{-j\alpha} & 1 \cdot e^{j\Phi} \end{bmatrix}$$

Here, Numeral 72 is satisfied, so that Numeral 73 can be obtained as the matrix $V^H$.

[Numeral 72]

$$\frac{1}{(e^{j\frac{\alpha}{2}} + e^{-j\frac{\alpha}{2}})} = \frac{1}{2 \cdot \cos\left(\frac{\alpha}{2}\right)}, \quad \frac{1}{-j(e^{j\frac{\alpha}{2}} - e^{-j\frac{\alpha}{2}})} = \frac{1}{2 \cdot \sin\left(\frac{\alpha}{2}\right)}$$

[Numeral 73]

$$V^H = \begin{bmatrix} \dfrac{1}{2 \cdot \cos\left(\frac{\alpha}{2}\right)} & 0 \\ 0 & \dfrac{1}{2 \cdot \sin\left(\frac{\alpha}{2}\right)} \end{bmatrix} \cdot \begin{bmatrix} 1 & e^{-j\alpha} \cdot e^{j\Phi} \\ e^{-j\alpha} & 1 \cdot e^{j\Phi} \end{bmatrix} = \begin{bmatrix} \dfrac{1}{2 \cdot \cos\left(\frac{\alpha}{2}\right)} & \dfrac{e^{-j\alpha} \cdot e^{j\Phi}}{2 \cdot \cos\left(\frac{\alpha}{2}\right)} \\ \dfrac{e^{-j\alpha}}{2 \cdot \sin\left(\frac{\alpha}{2}\right)} & \dfrac{e^{j\Phi}}{2 \cdot \sin\left(\frac{\alpha}{2}\right)} \end{bmatrix}$$

Here, the square norm of the vector is represented by Numeral 74.

[Numeral 74]

$$\frac{1}{4 \cdot \cos^2\left(\frac{\alpha}{2}\right)} + \frac{1}{4 \cdot \sin^2\left(\frac{\alpha}{2}\right)} = \frac{4}{16 \cdot \sin^2\left(\frac{\alpha}{2}\right) \cdot \cos^2\left(\frac{\alpha}{2}\right)} = \frac{1}{2 \cdot \sin^2(\alpha)}$$

Thus, the $V^H$ is no longer a unitary matrix. Therefore, in order to calculate the matrix V, inverse matrix calculation is required.
As a trial, when the channel matrix H is calculated using the obtained matrixes U, $\Lambda^{1/2}$, and $V^H$, Numeral 75 is satisfied.

[Numeral 75]

$$H = U \cdot \Lambda^{1/2} \cdot V^H = \begin{bmatrix} 1 & 0 \\ 0 & 1 \end{bmatrix} \cdot \begin{bmatrix} 2 \cdot \cos\left(\dfrac{\alpha}{2}\right) & 0 \\ 0 & 2 \cdot \sin\left(\dfrac{\alpha}{2}\right) \end{bmatrix} \cdot \begin{bmatrix} \dfrac{1}{2 \cdot \cos\left(\dfrac{\alpha}{2}\right)} & \dfrac{e^{-j\alpha} \cdot e^{j\Phi}}{2 \cdot \cos\left(\dfrac{\alpha}{2}\right)} \\ \dfrac{e^{-j\alpha}}{2 \cdot \sin\left(\dfrac{\alpha}{2}\right)} & \dfrac{e^{jK}}{2 \cdot \sin\left(\dfrac{\alpha}{2}\right)} \end{bmatrix} = \begin{bmatrix} 1 & e^{-j\alpha} \cdot e^{j\Phi} \\ e^{-j\alpha} & 1 \cdot e^{j\Phi} \end{bmatrix}$$

As can be seen from Numeral 75, the channel matrix H is effected.

Next, inverse matrix V of $V^H$ is considered. A given matrix A represented by Numeral 76 is assumed.

[Numeral 76]

$$A = \begin{bmatrix} a_{11} & a_{12} \\ a_{21} & a_{22} \end{bmatrix}$$

The inverse matrix $A^{-1}$ of the above matrix A is represented by Numeral 77.

[Numeral 77]

$$A^{-1} = \frac{1}{a_{11}a_{22} - a_{12}a_{21}} \begin{bmatrix} a_{22} & -a_{12} \\ -a_{21} & a_{11} \end{bmatrix}$$

$$\left( \because AA^{-1} = \frac{1}{a_{11}a_{22} - a_{12}a_{21}} \begin{bmatrix} a_{11} & a_{12} \\ a_{21} & a_{22} \end{bmatrix} \cdot \begin{bmatrix} a_{22} & -a_{12} \\ -a_{21} & a_{11} \end{bmatrix} = \frac{1}{a_{11}a_{22} - a_{12}a_{21}} \begin{bmatrix} a_{11}a_{22} - a_{12}a_{21} & 0 \\ 0 & a_{11}a_{22} - a_{12}a_{21} \end{bmatrix} \right)$$

Therefore, Numeral 78 is obtained as the matrix V.

[Numeral 78]

$$V = \begin{bmatrix} \dfrac{1}{2\cdot\cos\left(\frac{\alpha}{2}\right)} & \dfrac{e^{-j\alpha}\cdot e^{j\Phi}}{2\cdot\cos\left(\frac{\alpha}{2}\right)} \\ \dfrac{e^{-j\alpha}}{2\cdot\sin\left(\frac{\alpha}{2}\right)} & \dfrac{e^{j\Phi}}{2\cdot\sin\left(\frac{\alpha}{2}\right)} \end{bmatrix}^{-1} = \dfrac{1}{\dfrac{1}{2\cdot\cos\left(\frac{\alpha}{2}\right)}\cdot\dfrac{e^{j\Phi}}{2\cdot\sin\left(\frac{\alpha}{2}\right)} - \dfrac{e^{-j\alpha}\cdot e^{j\Phi}}{2\cdot\cos\left(\frac{\alpha}{2}\right)}\cdot\dfrac{e^{-j\alpha}}{2\cdot\sin\left(\frac{\alpha}{2}\right)}} \begin{bmatrix} \dfrac{e^{j\Phi}}{2\cdot\sin\left(\frac{\alpha}{2}\right)} & -\dfrac{e^{-j\alpha}\cdot e^{j\Phi}}{2\cdot\cos\left(\frac{\alpha}{2}\right)} \\ -\dfrac{e^{-j\alpha}}{2\cdot\sin\left(\frac{\alpha}{2}\right)} & \dfrac{1}{2\cdot\cos\left(\frac{\alpha}{2}\right)} \end{bmatrix}$$

$$= \dfrac{2\cdot\left(2\cdot\sin\left(\frac{\alpha}{2}\right)\cdot\cos\left(\frac{\alpha}{2}\right)\right)}{1-e^{-j2\alpha}} \begin{bmatrix} \dfrac{1}{2\cdot\sin\left(\frac{\alpha}{2}\right)} & -\dfrac{e^{-j\alpha}}{2\cdot\cos\left(\frac{\alpha}{2}\right)} \\ -\dfrac{e^{-j\alpha}\cdot e^{-j\Phi}}{2\cdot\sin\left(\frac{\alpha}{2}\right)} & \dfrac{e^{-j\Phi}}{2\cdot\cos\left(\frac{\alpha}{2}\right)} \end{bmatrix} = \dfrac{2}{1-e^{-j2\alpha}} \begin{bmatrix} \cos\left(\frac{\alpha}{2}\right) & -e^{-j\alpha}\sin\left(\frac{\alpha}{2}\right) \\ -e^{-j\Phi}e^{-j\alpha}\cos\left(\frac{\alpha}{2}\right) & e^{-j\Phi}\sin\left(\frac{\alpha}{2}\right) \end{bmatrix}$$

$$= \dfrac{2}{e^{j\alpha}-e^{-j\alpha}} \begin{bmatrix} e^{j\alpha}\cos\left(\frac{\alpha}{2}\right) & -\sin\left(\frac{\alpha}{2}\right) \\ -e^{-j\Phi}\cos\left(\frac{\alpha}{2}\right) & e^{-j\Phi}e^{j\alpha}\sin\left(\frac{\alpha}{2}\right) \end{bmatrix} = \dfrac{1}{j\sin\alpha} \begin{bmatrix} e^{j\alpha}\cos\left(\frac{\alpha}{2}\right) & -\sin\left(\frac{\alpha}{2}\right) \\ -e^{-j\Phi}\cos\left(\frac{\alpha}{2}\right) & e^{-j\Phi}e^{j\alpha}\sin\left(\frac{\alpha}{2}\right) \end{bmatrix}$$

$$= \begin{bmatrix} -je^{j\alpha}\dfrac{\cos(\alpha/2)}{\sin\alpha} & \dfrac{j\sin(\alpha/2)}{\sin\alpha} \\ je^{-j\Phi}\dfrac{\cos(\alpha/2)}{\sin\alpha} & -je^{-j\Phi}e^{j\alpha}\dfrac{\sin(\alpha/2)}{\sin\alpha} \end{bmatrix} \qquad \text{where;} \quad \alpha = 2\pi\left(\dfrac{d_R^{\,2}}{2R}\right)/\gamma = \dfrac{\pi}{\gamma}\cdot\dfrac{d_R^{\,2}}{R}$$

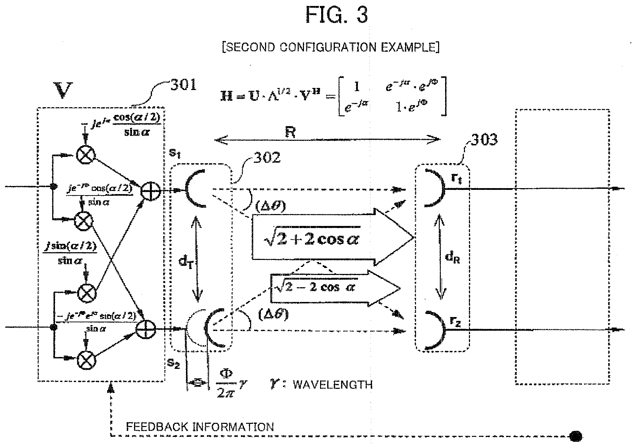

A configuration obtained based on the above result is shown in FIG. 3.

In FIG. 3, transmission signals processed by a transmission side matrix calculation processing section 301 based on the unitary matrix V are transmitted from a fixed antenna section 302 including a plurality of antennas as $s_1$ and $s_2$. The notation of the $s_1$ and $s_2$ is based on equivalent baseband representation, and the frequency conversion processing is omitted here for avoiding complexity.

The signals thus transmitted are received by a reception side fixed antenna section 303 including a plurality of antennas as $r_1$ and $r_2$. The notation of the $r_1$ and $r_2$ is based on equivalent baseband representation, and the frequency conversion processing into a signal of a baseband frequency is omitted here for avoiding complexity. The point is that receiving side matrix calculation processing based on the unitary matrix U is not performed at all, but all matrix calculations are done on the transmission side.

As can be seen from Numeral 78, in the case where the matrix calculation is performed only on the transmission side, the matrix includes a fluctuation between the channels caused due to external factors such as a fluctuation (modeled by $\Phi$ in FIG. 3) of an antenna position highly sensitive to a subtle change of weather condition such as wind or surrounding temperature. Thus, even when the displacement in the highly sensitive antenna direction occurs, the transmission side matrix acts so as to compensate for the displacement.

In this configuration, the feedback information for construction of the V matrix needs to be sent from the reception end to transmission end. The antennas to be used are not particularly limited and a parabola antenna or a horn antenna. The matrix calculation processing section 301 may be realized by program control or constructed by hardware such as ASIC or the like.

Thus, it can be understood that it is possible to form virtual orthogonal channels regardless of whether the optimum position (R=5000m and $d_T=d_R=5m$) is achieved or not and by the matrix calculation processing only on the transmission side.

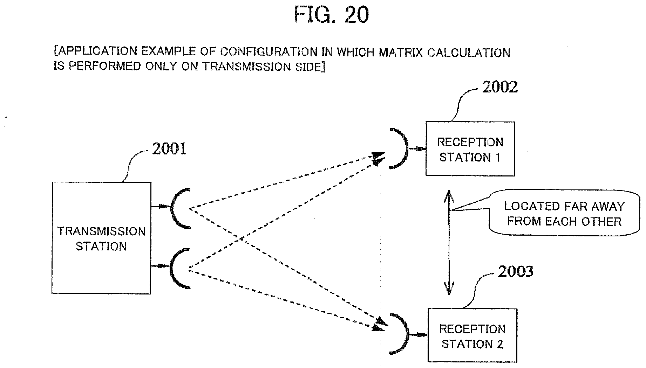

An application of the configuration in which the matrix calculation is performed only on the transmission side is shown in FIG. 20. As shown in FIG. 20, a plurality of antennas are provided in a transmission station 2001 located near a backbone network, and one antenna is provided in reception stations 2002 and 2003, located near a user network, respectively. The reception station 2001 and reception station 2003 are located far away from each other and, therefore, matrix calculation cannot be performed. On the other hand, the transmission station 2001 can perform the matrix calculation. Thus, it is possible to apply the configuration in which the matrix calculation is performed only on the transmission side to the configuration of FIG. 20. Such a concept in "one station to many stations" configuration may be applied to "many stations to one station" configuration to be described later as a configuration in which the matrix calculation is performed only on the reception side.

Third Example

(Case where unitary matrix calculation is performed only on reception side and where local oscillators on transmission side are provided independently for respective antennas)

As a third example (third configuration example) of the present invention, a configuration example in which the unitary matrix calculation is performed only on the reception side will be described. This third configuration has the following features : the feedback information to be sent from the reception end to transmission end is not required; local oscillators may be provided independently for respective antennas on the transmission side; and exactly the same characteristics as those of the SVD method can be shown.

[Singular value orthogonal matrix $\Lambda^{1/2}$]

In this case, the virtual orthogonal channels have the same value, so that singular value orthogonal matrix $\Lambda^{1/2}$ is represented by Numeral 79.

[Numeral 79]

$$\Lambda^{1/2} = \begin{bmatrix} \sqrt{\lambda_1} & 0 \\ 0 & \sqrt{\lambda_2} \end{bmatrix} = \begin{bmatrix} \sqrt{2 + 2\cos\alpha} & 0 \\ 0 & \sqrt{2 - 2\cos\alpha} \end{bmatrix} = \begin{bmatrix} \sqrt{2} & 0 \\ 0 & \sqrt{2} \end{bmatrix}$$

[Channel matrix H]

Thus, Numeral 80 can be obtained as the channel matrix H.

[Numeral 80]

$$\mathbf{H} = \mathbf{U} \cdot \Lambda^{1/2} \cdot \mathbf{V}^H = \mathbf{U} \cdot \begin{bmatrix} \sqrt{2} & 0 \\ 0 & \sqrt{2} \end{bmatrix} \cdot \begin{bmatrix} 1 & 0 \\ 0 & 1 \end{bmatrix} \qquad \text{where;} \quad \Phi = \Phi_L + \Phi_A$$

$$\therefore \ \mathbf{U} = \begin{bmatrix} U_{11} & U_{12} \\ U_{21} & U_{22} \end{bmatrix} = \begin{bmatrix} 1 & -j \cdot e^{j\Phi} \\ -j & 1 \cdot e^{j\Phi} \end{bmatrix} \cdot \begin{bmatrix} 1/\sqrt{2} & 0 \\ 0 & 1/\sqrt{2} \end{bmatrix} = \begin{bmatrix} 1/\sqrt{2} & -j \cdot e^{j\Phi}/\sqrt{2} \\ -j/\sqrt{2} & e^{j\Phi}/\sqrt{2} \end{bmatrix}$$

$$\therefore \ \mathbf{U}^H = \begin{bmatrix} 1/\sqrt{2} & j/\sqrt{2} \\ j \cdot e^{-j\Phi}/\sqrt{2} & e^{-j\Phi}/\sqrt{2} \end{bmatrix} \qquad \text{where;} \quad \alpha = 2\pi \left( \frac{d_R^2}{2R} \right) / \gamma = \frac{\pi}{\gamma} \cdot \frac{d_R^2}{R} = \frac{\pi}{2}$$

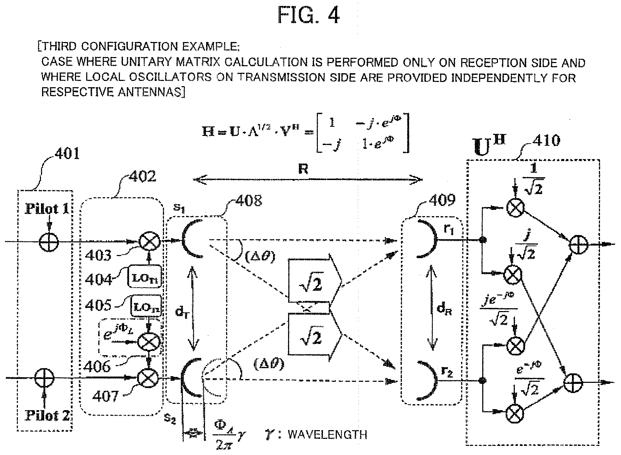

A configuration obtained based on the above result is shown in FIG. 4. As shown in FIG. 4, transmission side matrix calculation processing based on the unitary matrix V is not performed at all, but all matrix calculations are done on the reception side.

As can be seen from Numeral 80, in the case where the matrix calculation is performed only on the reception side, the matrix includes a fluctuation between the channels caused due to external factors such as a fluctuation (modeled by $\Phi$ in FIG. 4) of an antenna position highly sensitive to a subtle change of weather condition such as wind or surrounding temperature. Thus, even when the displacement in the highly sensitive antenna direction occurs, the unitary matrix acts so as to compensate for the displacement.

In this configuration, antenna separation length must be widened in view of a frequency to be used in the fixed point microwave communication system. Correspondingly, local oscillators are installed near the antennas. That is, the point that the local oscillators are provided independently for respective antennas on the transmission side is the biggest feature of the third configuration.

In FIG. 4, transmission signal are added with pilot signals of respective antennas by a pilot signal generation section 401, frequency converted into signals of a radio frequency by a transmission side frequency conversion section 402 including local oscillators 404 and 405, mixers 403 and 407, and then transmitted from a fixed antenna section 408 including a plurality of antennas as $s_1$ and $s_2$. The notation of the $s_1$ and $s_2$ is based on equivalent baseband representation.

It should be noted here that the local oscillators 404 and 405 are used independently for respective antennas . Thus , carrier synchronization is not achieved between carriers from the respective antennas, resulting in generation of phase noise $\Phi_L$. Reference numeral 406 is the modeling of the phase noise $\Phi_L$.

The signals thus transmitted are received by a reception side fixed antenna section 409 including a plurality of antennas as $r_1$ and $r_2$. The notation of the $r_1$ and $r_2$ is based on equivalent baseband representation, and the frequency conversion processing into a signal of a baseband frequency is omitted here for avoiding complexity. The reception signals $r_1$ and $r_2$ are processed by a reception side matrix calculation processing section 410 based on the unitary matrix U, whereby signal separation/detection in MIMO is completed.

It should be noted here that transmission side matrix calculation processing based on the unitary matrix V is not performed at all, but all matrix calculations are done on the reception side.

As can be seen from Numeral 80, in the case where the matrix calculation is performed only on the reception side, the matrix includes a fluctuation between the channels caused due to external factors such as a fluctuation (modeled by $\Phi_A$ in FIG. 4) of an antenna position highly sensitive to a subtle change of weather condition such as wind or surrounding temperature. Further, the matrix includes the phase noise $\Phi_L$ due to absence of synchronization between carriers. Thus, even when the displacement in the highly sensitive antenna direction or phase variation between carriers occurs, the unitary matrix acts so as to compensate for the displacement or phase variation.

The greatest merit of the third example is that it is not necessary to send the feedback information for construction of the V matrix from the reception end to transmission end. The thick arrows of FIG. 4 denote virtual orthogonal channels in which channel qualities thereof are proportional to $\sqrt{2}$ and $\sqrt{2}$. The antennas to be used are not particularly limited and may be a parabola antenna or a horn antenna. The matrix calculation processing section 401 may be realized by program control or constructed by hardware such as ASIC or the like.

As described above, even in the configuration in which the unitary matrix calculation is not performed on the transmission end, the orthogonal channels can be formed. Further, even when the local oscillators are provided independently for respective antennas on the transmission end, if phase difference $\Phi = \Phi_L + \Phi_A$ can be detected by pilot signals, the virtual orthogonal channels can be formed. The orthogonal channels thus formed are not influenced by the phase difference $\Phi$. Further, the feedback from the reception end to transmission end is not required. Since the matrix used is the unitary matrix, exactly the same characteristics as those of the SVD method can be shown.

Fourth Example

(Case where unitary matrix calculation is performed only on reception side and where local oscillators on both transmission and reception ends are independently provided for respective antennas)

As a fourth example (fourth configuration example) of the present invention, a configuration example in which virtual orthogonal channels having the same width are formed, the unitary matrix calculation is performed only on the reception side, and local oscillators are provided independently for respective antennas on both the transmission and reception sides will be described.

This fourth configuration has the following features: the feedback information to be sent from the reception end to transmission end is not required; local oscillators may be provided independently for respective antennas on both the transmission and reception sides ; and exactly the same characteristics as those of the SVD method can be shown. Further, analysis is made based on a fact that a significant phase rotation due to movement in the antenna direction highly sensitive to a subtle change of weather condition such as wind or surrounding temperature can be traced to the same modeling as a phase rotation in the local oscillators provided for respective antennas both on the transmission and reception sides. Note that the above theoretical analysis analytically reveals that the above increase in channel capacity can be achieved even when such a displacement in the highly sensitive antenna direction occurs.

[Singular value orthogonal matrix $\Lambda^{1/2}$]

In this case, singular value orthogonal matrix $\Lambda^{1/2}$ is represented by Numeral 81.

[Numeral 81]

$$\Lambda^{1/2} = \begin{bmatrix} \sqrt{\lambda_1} & 0 \\ 0 & \sqrt{\lambda_2} \end{bmatrix} = \begin{bmatrix} \sqrt{2 + 2\cos\alpha} & 0 \\ 0 & \sqrt{2 - 2\cos\alpha} \end{bmatrix} = \begin{bmatrix} \sqrt{2} & 0 \\ 0 & \sqrt{2} \end{bmatrix}$$

[Channel matrix H]

Thus, Numeral 82 can be obtained as the channel matrix H.

[Numeral 82]

$$\mathbf{H} = \begin{bmatrix} 1 & -j \cdot e^{j\Phi} \\ -j \cdot e^{j\phi} & 1 \cdot e^{j(\Phi+\phi)} \end{bmatrix} = \mathbf{U} \cdot \Lambda^{1/2} \cdot \mathbf{V}^H = \mathbf{U} \cdot \begin{bmatrix} \sqrt{2} & 0 \\ 0 & \sqrt{2} \end{bmatrix} \cdot \begin{bmatrix} 1 & 0 \\ 0 & 1 \end{bmatrix} \quad \text{where;} \quad \begin{cases} \Phi = \Phi_L + \Phi_A \\ \phi = \phi_L + \phi_A \end{cases}$$

$$\therefore \quad \mathbf{U} = \begin{bmatrix} U_{11} & U_{12} \\ U_{21} & U_{22} \end{bmatrix} = \begin{bmatrix} 1 & -j \cdot e^{j\Phi} \\ -j \cdot e^{j\phi} & 1 \cdot e^{j(\Phi+\phi)} \end{bmatrix} \cdot \begin{bmatrix} 1/\sqrt{2} & 0 \\ 0 & 1/\sqrt{2} \end{bmatrix} = \begin{bmatrix} 1/\sqrt{2} & -j \cdot e^{j\Phi}/\sqrt{2} \\ -j \cdot e^{j\phi}/\sqrt{2} & e^{j(\Phi+\phi)}/\sqrt{2} \end{bmatrix}$$

$$\therefore \quad \mathbf{U}^H = \begin{bmatrix} 1/\sqrt{2} & j \cdot e^{-j\phi}/\sqrt{2} \\ j \cdot e^{-j\Phi}/\sqrt{2} & e^{-j(\Phi+\phi)}/\sqrt{2} \end{bmatrix} \quad \text{where;} \quad \alpha = 2\pi\left(\frac{d_R^2}{2R}\right)/\gamma = \frac{\pi}{\gamma} \cdot \frac{d_R^2}{R} = \frac{\pi}{2}$$

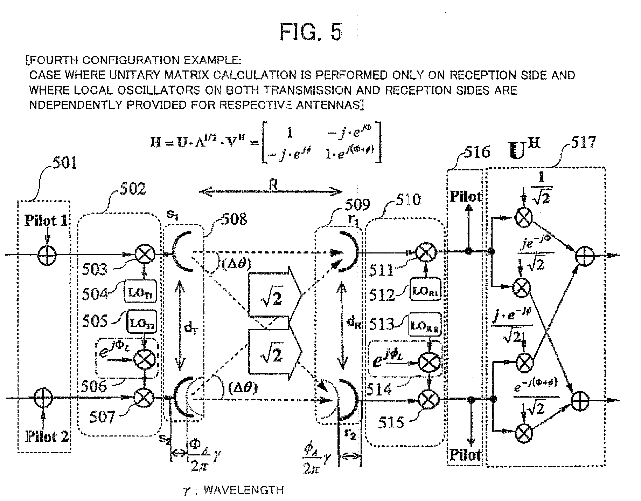

A configuration obtained based on the above result is shown in FIG. 5. As shown in FIG. 5, transmission side matrix calculation processing based on the unitary matrix V is not performed at all, but all matrix calculations are done on the reception side. In the case where the matrix calculation is performed only on the reception side, the matrix includes a fluctuation between the channels caused due to external factors such as a fluctuation (modeled by $\Phi_A$ and $\phi_A$ in FIG. 5) of a transmission antenna position and reception antenna position highly sensitive to a subtle change of weather condition such as wind or surrounding temperature. Thus, even when the displacement in the highly sensitive antenna direction occurs, the unitary matrix acts so as to compensate for the displacement. In this configuration, antenna separation length must be widened in view of a frequency to be used in the fixed point microwave communication system. Correspondingly, local oscillators are installed near the antennas. That is, the point that the local oscillators are provided independently for respective antennas on both the transmission and reception sides is the biggest feature of the fourth configuration. Thus, even if the local oscillators are used independently for respective antennas on both the transmission and reception sides, it is possible to obtain characteristics equivalent to the SVD method by appropriately detecting the pilot signals.

In FIG. 5, transmission signal are added with pilot signals of respective antennas by a pilot signal generation section 501, frequency converted into signals of a radio frequency by a transmission side frequency conversion section 502 including local oscillators 504 and 505, mixers 503 and 507, and then transmitted from a fixed antenna section 508 including a plurality of antennas as $s_1$ and $s_2$. The notation of the $s_1$ and $s_2$ is based on equivalent baseband representation. It should be noted here that the local oscillators 504 and 505 are used independently for respective antennas. Thus, carrier synchronization is not achieved between carriers from the respective antennas, resulting in generation of phase noise $\Phi_L$. Reference numeral 506 is the modeling of the phase noise $\Phi_L$.

The signals thus transmitted are received by a reception side fixed antenna section 509 including a plurality of antennas as $r_1$ and $r_2$. The notation of the $r_1$ and $r_2$ is based on equivalent baseband representation. The reception signals $r_1$ and $r_2$ are frequency converted into signals of a baseband frequency by a reception side frequency conversion section 510 including local oscillators 512 and 513, mixers 511 and 515, passed through a pilot signal detection section 516, and processed by a reception side matrix calculation processing section 517 based on the unitary matrix U, whereby signal separation/detection in MIMO is completed. It should be noted here that the local oscillators 512 and 513 are used independently for respective antennas on the reception side. Thus, phase noise $\Phi_L$ is generated due to absence of synchronization between carriers. Reference numeral 514 is the modeling of the phase noise $\Phi_L$. The antennas to be used are not particularly limited and may be a parabola antenna or a horn antenna . The matrix calculation processing section 517 may be realized by program control or constructed by hardware such as ASIC or the like.

Since the pilot signals are generated before the processing performed by the transmission side local oscillators and the pilot signals are detected after the processing performed by the reception side local oscillators, the pilot signal detection section 516 can detect $\Phi=\Phi_L+\Phi_A$ and $\phi=\phi_L+\phi_A$ in Numeral 82. Thus, all matrix calculations can be done only on the reception side with the transmission side matrix calculation processing based on the unitary matrix V omitted. This is because that, as can be seen from Numeral 82, the unitary matrix acts so as to compensate for a fluctuation between the channels caused due to external factors such as a fluctuation (modeled by $\Phi_A$ and $\phi_A$ in FIG. 5) of an antenna position highly sensitive to a subtle change of weather condition such as wind or surrounding temperature and phase noise $\Phi_L$ or $\phi_L$ caused due to absence of synchronization between carriers. The greatest merit of the fourth example is that it is not necessary to send the feedback information for construction of the V matrix from the reception end to transmission end. The thick arrows of FIG. 5 denote virtual orthogonal channels in which channel qualities thereof are proportional to $\sqrt{2}$ and $\sqrt{2}$.

As described above, even in the configuration in which the unitary matrix calculation is not performed on the transmission end, the orthogonal channels can be formed. Further, phase difference $\Phi=\Phi_L+\Phi_A$ and $\phi_A=\phi_L+\phi_A$ can be detected using the pilot signals. Thus, even in the case where the local oscillators are provided independently for respective antennas on the transmission end and/or reception end, the virtual orthogonal cannels can be formed. The orthogonal channels thus formed are not influenced by the phase difference $\Phi$ or $\phi$. Feedback from the reception end to the transmission end is not necessary. Further, since the matrix used is the unitary matrix, exactly the same characteristics as those of the SVD method can be shown.

Fifth Example

(Case where virtual orthogonal channels have different widths, where matrix calculation is performed only on reception side, and where local oscillators on both transmission and reception ends are independently provided for respective antennas)

As a fifth example (fifth configuration example) of the present invention, a configuration example in which virtual orthogonal channels having different widths are formed, the matrix calculation is performed only on the reception side, and local oscillators are provided independently for respective antennas on both the transmission and reception sides will be described.

This fifth configuration has the following features : virtual orthogonal channels have different values; feedback information to be sent from the reception side to transmission side is not required; and local oscillators may be provided independently for respective antennas on both the transmission and reception sides . Further, analysis is made based on a fact that a significant phase rotation due to movement in the antenna direction highly sensitive to a subtle change of weather condition such as wind or surrounding temperature can be traced to the same modeling as a phase rotation in the local oscillators provided for respective antennas both on the transmission and reception sides. Further, for flexibility, antenna separation length is set based on antenna positions different from optimum antenna positions. Therefore, different characteristics from the SVD method are shown. The characteristic analysis of this configuration will be described later.

[Singular value orthogonal matrix $\Lambda^{1/2}$]

In this case, the virtual orthogonal channels have different values, so that singular value orthogonal matrix $\Lambda^{1/2}$ is represented by Numeral 83.

[Numeral 83]

$$\Lambda^{1/2} = \begin{bmatrix} \sqrt{\lambda_1} & 0 \\ 0 & \sqrt{\lambda_2} \end{bmatrix} = \begin{bmatrix} \sqrt{2+2\cos\alpha} & 0 \\ 0 & \sqrt{2-2\cos\alpha} \end{bmatrix} = \begin{bmatrix} 2\cos\left(\frac{\alpha}{2}\right) & 0 \\ 0 & 2\sin\left(\frac{\alpha}{2}\right) \end{bmatrix} = \begin{bmatrix} (e^{j\frac{\alpha}{2}}+e^{-j\frac{\alpha}{2}}) & 0 \\ 0 & -j(e^{j\frac{\alpha}{2}}-e^{-j\frac{\alpha}{2}}) \end{bmatrix}$$

[Channel matrix H]

Thus, the channel matrix H is represented by Numeral 84.

[Numeral 84]

$$\mathbf{H} = \begin{bmatrix} 1 & e^{-j\alpha} \cdot e^{j\Phi} \\ e^{-j\alpha} \cdot e^{j\phi} & 1 \cdot e^{j(\Phi+\phi)} \end{bmatrix} \quad \text{where;} \quad \begin{cases} \Phi = \Phi_L + \Phi_A \\ \phi = \phi_L + \phi_A \end{cases}$$

Here, transmission side highly sensitive antenna displacement $\Phi_A$ is included in phase variation $\Phi_L$ in the transmission side local oscillators provided independently for respective antennas to obtain $\Phi$, and reception side highly sensitive antenna displacement $\phi_A$ is included in phase variation $\phi_L$ in the reception side local oscillators provided independently for respective antennas to obtain $\phi$.

Here, Numeral 85 is satisfied and thus Numeral 86 is satisfied.

[Numeral 85]

$$\mathbf{H} = \mathbf{U} \cdot \Lambda^{1/2} \cdot \mathbf{V}^{\mathbf{H}} = \begin{bmatrix} 1 & e^{-j\alpha} \cdot e^{j\Phi} \\ e^{-j\alpha} \cdot e^{j\phi} & 1 \cdot e^{j(\Phi+\phi)} \end{bmatrix} = \mathbf{U} \cdot \begin{bmatrix} (e^{j\frac{\alpha}{2}} + e^{-j\frac{\alpha}{2}}) & 0 \\ 0 & -j(e^{j\frac{\alpha}{2}} - e^{-j\frac{\alpha}{2}}) \end{bmatrix} \begin{bmatrix} 1 & 0 \\ 0 & 1 \end{bmatrix}$$

[Numeral 86]

$$\mathbf{U} = \begin{bmatrix} 1 & e^{-j\alpha} \cdot e^{j\Phi} \\ e^{-j\alpha} \cdot e^{j\phi} & 1 \cdot e^{j(\Phi+\phi)} \end{bmatrix} \cdot \begin{bmatrix} (e^{j\frac{\alpha}{2}} + e^{-j\frac{\alpha}{2}}) & 0 \\ 0 & -j(e^{j\frac{\alpha}{2}} - e^{-j\frac{\alpha}{2}}) \end{bmatrix}^{-1}$$

Further, Numeral 87 is satisfied and thus Numeral 88 is satisfied.

[Numeral 87]

$$\frac{1}{(e^{j\frac{\alpha}{2}} + e^{-j\frac{\alpha}{2}})} = \frac{1}{2 \cdot \cos\left(\frac{\alpha}{2}\right)}, \quad \frac{1}{-j(e^{j\frac{\alpha}{2}} - e^{-j\frac{\alpha}{2}})} = \frac{1}{2 \cdot \sin\left(\frac{\alpha}{2}\right)}$$

[Numeral 88]

$$U = \begin{bmatrix} 1 & e^{-j\alpha} \cdot e^{j\Phi} \\ e^{-j\alpha} \cdot e^{j\phi} & 1 \cdot e^{j(\Phi+\phi)} \end{bmatrix} \cdot \begin{bmatrix} \dfrac{1}{2 \cdot \cos\left(\dfrac{\alpha}{2}\right)} & 0 \\ 0 & \dfrac{1}{2 \cdot \sin\left(\dfrac{\alpha}{2}\right)} \end{bmatrix} = \begin{bmatrix} \dfrac{1}{2 \cdot \cos\left(\dfrac{\alpha}{2}\right)} & \dfrac{e^{-j\alpha} \cdot e^{j\Phi}}{2 \cdot \sin\left(\dfrac{\alpha}{2}\right)} \\ \dfrac{e^{-j\alpha} \cdot e^{j\phi}}{2 \cdot \cos\left(\dfrac{\alpha}{2}\right)} & \dfrac{e^{j(\Phi+\phi)}}{2 \cdot \sin\left(\dfrac{\alpha}{2}\right)} \end{bmatrix}$$

However, the square norm of the vector is represented by Numeral 89.

[Numeral 89]

$$\frac{1}{4 \cdot \cos^2\left(\dfrac{\alpha}{2}\right)} + \frac{1}{4 \cdot \sin^2\left(\dfrac{\alpha}{2}\right)} = \frac{4}{16 \cdot \sin^2\left(\dfrac{\alpha}{2}\right) \cdot \cos^2\left(\dfrac{\alpha}{2}\right)} = \frac{1}{2 \cdot \sin^2(\alpha)}$$

Thus, U is no longer a unitary matrix. Therefore, in order to calculate the matrix $U^H$, inverse matrix calculation is required .

As a trial, when the channel matrix H is calculated using the obtained matrixes U, $\Lambda^{1/2}$, and $V^H$, Numeral 90 is satisfied.

[Numeral 90]

$$H = U \cdot \Lambda^{1/2} \cdot V^H = \begin{bmatrix} \dfrac{1}{2 \cdot \cos\left(\dfrac{\alpha}{2}\right)} & \dfrac{e^{-j\alpha} \cdot e^{j\Phi}}{2 \cdot \sin\left(\dfrac{\alpha}{2}\right)} \\ \dfrac{e^{-j\alpha} \cdot e^{j\phi}}{2 \cdot \cos\left(\dfrac{\alpha}{2}\right)} & \dfrac{e^{j(\Phi+\phi)}}{2 \cdot \sin\left(\dfrac{\alpha}{2}\right)} \end{bmatrix} \cdot \begin{bmatrix} 2 \cdot \cos\left(\dfrac{\alpha}{2}\right) & 0 \\ 0 & 2 \cdot \sin\left(\dfrac{\alpha}{2}\right) \end{bmatrix} \cdot \begin{bmatrix} 1 & 0 \\ 0 & 1 \end{bmatrix}$$

$$= \begin{bmatrix} 1 & e^{-j\alpha} \cdot e^{j\Phi} \\ e^{-j\alpha} \cdot e^{j\phi} & 1 \cdot e^{j(\Phi+\phi)} \end{bmatrix}$$

As can be seen from Numeral 90, the channel matrix H is effected.

Next, inverse matrix $U^{-1}$ of U is considered. A given matrix A represented by Numeral 91 is assumed.

[Numeral 91]

$$A = \begin{bmatrix} a_{11} & a_{12} \\ a_{21} & a_{22} \end{bmatrix}$$

The inverse matrix $A^{-1}$ of the above matrix A is represented by Numeral 92.

[Numeral 92]

$$A^{-1} = \frac{1}{a_{11}a_{22} - a_{12}a_{21}} \begin{bmatrix} a_{22} & -a_{12} \\ -a_{21} & a_{11} \end{bmatrix}$$

$$\left( \because \ AA^{-1} = \frac{1}{a_{11}a_{22} - a_{12}a_{21}} \begin{bmatrix} a_{11} & a_{12} \\ a_{21} & a_{22} \end{bmatrix} \cdot \begin{bmatrix} a_{22} & -a_{12} \\ -a_{21} & a_{11} \end{bmatrix} = \frac{1}{a_{11}a_{22} - a_{12}a_{21}} \begin{bmatrix} a_{11}a_{22} - a_{12}a_{21} & 0 \\ 0 & a_{11}a_{22} - a_{12}a_{21} \end{bmatrix} \right)$$

Therefore, Numeral 93 can be obtained.

[Numeral 93]

$$U^{-1} = \begin{bmatrix} \dfrac{1}{2 \cdot \cos\left(\frac{\alpha}{2}\right)} & \dfrac{e^{-j\alpha} \cdot e^{j\Phi}}{2 \cdot \sin\left(\frac{\alpha}{2}\right)} \\ \dfrac{e^{-j\alpha} \cdot e^{j\phi}}{2 \cdot \cos\left(\frac{\alpha}{2}\right)} & \dfrac{e^{j(\Phi+\phi)}}{2 \cdot \sin\left(\frac{\alpha}{2}\right)} \end{bmatrix}^{-1} = \dfrac{1}{\dfrac{1}{2 \cdot \cos\left(\frac{\alpha}{2}\right)} \cdot \dfrac{e^{j(\Phi+\phi)}}{2 \cdot \sin\left(\frac{\alpha}{2}\right)} - \dfrac{e^{-j\alpha} \cdot e^{j\Phi}}{2 \cdot \sin\left(\frac{\alpha}{2}\right)} \cdot \dfrac{e^{-j\alpha} \cdot e^{j\phi}}{2 \cdot \cos\left(\frac{\alpha}{2}\right)}} \begin{bmatrix} \dfrac{e^{j(\Phi+\phi)}}{2 \cdot \sin\left(\frac{\alpha}{2}\right)} & -\dfrac{e^{-j\alpha} \cdot e^{j\Phi}}{2 \cdot \sin\left(\frac{\alpha}{2}\right)} \\ -\dfrac{e^{-j\alpha} \cdot e^{j\phi}}{2 \cdot \cos\left(\frac{\alpha}{2}\right)} & \dfrac{1}{2 \cdot \cos\left(\frac{\alpha}{2}\right)} \end{bmatrix}$$

$$= \dfrac{2 \cdot \left(2 \cdot \sin\left(\frac{\alpha}{2}\right) \cdot \cos\left(\frac{\alpha}{2}\right)\right)}{1 - e^{-j2\alpha}} \begin{bmatrix} \dfrac{1}{2 \cdot \sin\left(\frac{\alpha}{2}\right)} & -\dfrac{e^{-j\alpha} \cdot e^{-j\phi}}{2 \cdot \sin\left(\frac{\alpha}{2}\right)} \\ -\dfrac{e^{-j\alpha} \cdot e^{-j\Phi}}{2 \cdot \cos\left(\frac{\alpha}{2}\right)} & \dfrac{e^{-j(\Phi+\phi)}}{2 \cdot \cos\left(\frac{\alpha}{2}\right)} \end{bmatrix} = \dfrac{2}{1 - e^{-j2\alpha}} \begin{bmatrix} \cos\left(\frac{\alpha}{2}\right) & -e^{-j\alpha} \cdot e^{-j\phi} \cos\left(\frac{\alpha}{2}\right) \\ -e^{-j\Phi} e^{-j\alpha} \sin\left(\frac{\alpha}{2}\right) & e^{-j(\Phi+\phi)} \sin\left(\frac{\alpha}{2}\right) \end{bmatrix}$$

$$= \dfrac{2}{e^{j\alpha} - e^{-j\alpha}} \begin{bmatrix} e^{j\alpha} \cos\left(\frac{\alpha}{2}\right) & -e^{-j\phi} \cos\left(\frac{\alpha}{2}\right) \\ -e^{-j\Phi} \sin\left(\frac{\alpha}{2}\right) & e^{-j(\Phi+\phi)} e^{j\alpha} \sin\left(\frac{\alpha}{2}\right) \end{bmatrix} = \dfrac{1}{j \sin\alpha} \begin{bmatrix} e^{j\alpha} \cos\left(\frac{\alpha}{2}\right) & -e^{-j\phi} \cos\left(\frac{\alpha}{2}\right) \\ -e^{-j\Phi} \sin\left(\frac{\alpha}{2}\right) & e^{-j(\Phi+\phi)} e^{j\alpha} \sin\left(\frac{\alpha}{2}\right) \end{bmatrix}$$

$$= \begin{bmatrix} -je^{j\alpha} \dfrac{\cos(\alpha/2)}{\sin\alpha} & je^{-j\phi} \dfrac{\cos(\alpha/2)}{\sin\alpha} \\ je^{-j\Phi} \dfrac{\sin(\alpha/2)}{\sin\alpha} & -je^{-j(\Phi+\phi)} e^{j\alpha} \dfrac{\sin(\alpha/2)}{\sin\alpha} \end{bmatrix} \qquad \text{where;} \quad \alpha = 2\pi\left(\dfrac{d_R^2}{2R}\right) / \gamma = \dfrac{\pi}{\gamma} \cdot \dfrac{d_R^2}{R}$$

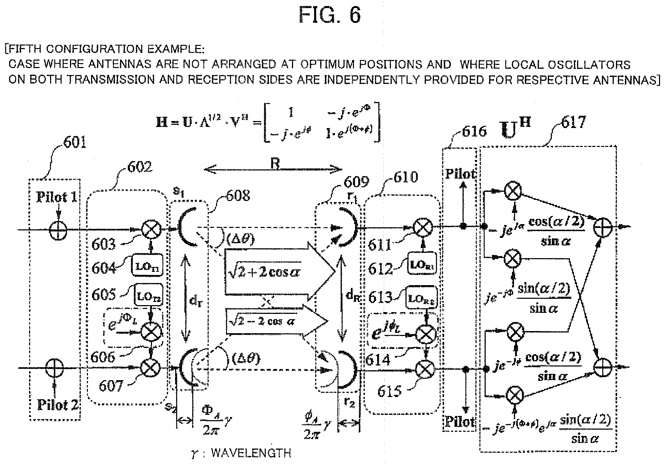

A configuration obtained based on the above result is shown in FIG. 6.

Although a case of the virtual orthogonal channels having different values has been described above, even if the local oscillators are provided for respective antennas on both the transmission and reception sides, it is possible to form the orthogonal channels by appropriately detecting the pilot signals . Since the matrix calculation is not performed on the transmission side, it is possible to eliminate the feedback information to be sent from the reception end to transmission end and to deal with a rapid phase variation such as transmission end phase difference $\Phi$ or reception end phase difference $\phi$.

Thus, it is possible to form orthogonal channels having different channel quality regardless of whether the optimum antenna position (R= 5000m and $d_T$=$d_R$=5m) is achieved or not without the transmission side matrix calculation processing. However, $U^H$ is no longer a unitary matrix but becomes an inverse matrix $U^{-1}$. Thus, characteristics are expected to degrade as compared to those of the SVD method. The difference in the characteristics between the SVD method and configuration of this example will be described later.

As shown in FIG. 6, transmission signals are added with pilot signals of respective antennas by a pilot signal generation section 601. The orthogonal pilot signals used may be an orthogonal pattern obtained from the Hadamard matrix or may be a CAZAC sequence. The transmission signals thus added with the pilot signals are frequency converted into signals of a radio frequency by a transmission side frequency conversion section 602 including transmission side local oscillators 604 and 605, mixers 603 and 607, and then transmitted from a fixed antenna section 608 including a plurality of antennas as $s_1$ and $s_2$. The notation of the $s_1$ and $s_2$ is based on equivalent baseband representation. It should be noted here that the local oscillators 604 and 605 are used independently for respective antennas. Thus, carrier synchronization is not achieved between carriers from the respective antennas, resulting in generation of phase noise $\Phi_L$. Reference numeral 606 is the modeling of the phase noise $\Phi_L$.

The signals thus transmitted are received by a reception side fixed antenna section 609 including a plurality of antennas as $r_1$ and $r_2$. The notation of the $r_1$ and $r_2$ is based on equivalent baseband representation. The reception signals $r_1$ and $r_2$ are frequency converted into signals of a baseband frequency by a reception side frequency conversion section 610 including local oscillators 612 and 613, mixers 611 and 615, passed through a pilot signal detection section 616, and processed by a reception side matrix calculation processing section 617 based on the unitary matrix U, whereby signal separation/detection in MIMO is completed.

In the processing on the reception side, the local oscillators 612 and 613 provided independently for respective antennas are used. Thus, phase noise $\phi_L$ is generated due to absence of carrier synchronization between antennas . Reference numeral 614 is the modeling of the phase noise $\phi_L$. The antennas to be used are not particularly limited and may be a parabola antenna or a horn antenna. The matrix calculation processing section 617 may be realized by program control or constructed by hardware such as ASIC or the like.

Since the orthogonal pilot signals are generated before the processing performed by the transmission side local oscillators and the pilot signals are detected after the processing performed by the reception side local oscillators , the pilot signal detection section 616 can detect $\Phi=\Phi_L+\Phi_A$ and $\phi=\phi_L+\phi_A$ in Numeral 93. The orthogonal pilot signals used is an orthogonal pattern such as the Hadamard sequence or CAZAC sequence, so that the $\Phi$ and $\phi$ can be detected using a simple correlator (not shown) . All matrix calculations can be done only on the reception side. That is, as can be seen from Numeral 93, the reception side matrix acts so as to compensate for a fluctuation between the channels caused due to external factors such as a fluctuation (modeled by $\Phi_A$ and $\phi_A$ in FIG. 6) of an antenna position highly sensitive to a subtle change of weather condition such as wind or surrounding temperature and phase noise $\Phi_L$ or $\phi_L$ caused due to absence of synchronization between carriers.

The greatest merit of the fifth example is that it is not necessary to send the feedback information for construction of the V matrix from the reception end to transmission end. The thick arrows of FIG. 6 denote virtual orthogonal channels having different widths, unlike the fourth example. However, as described later, the virtual orthogonal channels in this configuration have the same channel quality.

Although a case where two antennas are used has been described, the present invention is not limited to this, but a configuration using three or more antennas is possible.

In the following, a case where three or more antennas are used will be described. For simplification, only transmission/reception side-antennas are illustrated.

Sixth Example

(Case where three antennas are used and where unitary matrix calculation is performed only on reception side)

Next, as a sixth example (sixth configuration example) of the present invention, a configuration example in which three antennas are used will be described.

[Singular value orthogonal matrix $\Lambda^{1/2}$]

In this case, singular value orthogonal matrix $\Lambda^{1/2}$ is represented by Numeral 94.

[Numeral 94]

$$\Lambda^{1/2} = \begin{bmatrix} \sqrt{\lambda_1} & 0 & 0 \\ 0 & \sqrt{\lambda_2} & 0 \\ 0 & 0 & \sqrt{\lambda_3} \end{bmatrix} = \begin{bmatrix} \sqrt{3} & 0 & 0 \\ 0 & \sqrt{3} & 0 \\ 0 & 0 & \sqrt{3} \end{bmatrix}$$

[Channel matrix H]

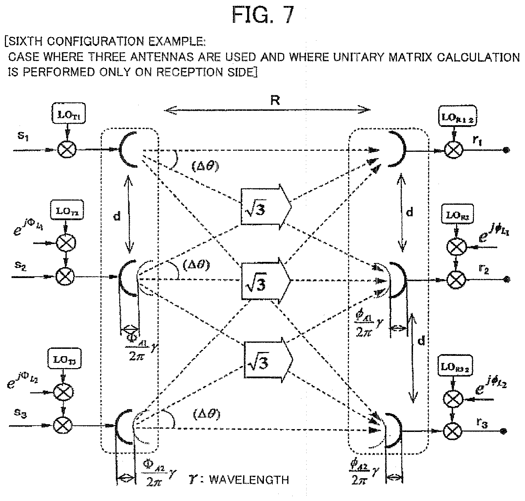

Based on FIG. 7, Numeral 95 is derived, and channel matrix H can be represented by Numeral 96.

[Numeral 95]

$$\frac{(n \cdot d)^2}{R} = \frac{n^2 \cdot \gamma}{3} \quad \text{where;} \quad n = 0,1,2$$

[Numeral 96]

$$
\mathbf{H} = \begin{bmatrix} 1 & 0 & 0 \\ 0 & e^{j\phi_1} & 0 \\ 0 & 0 & e^{j\phi_2} \end{bmatrix} \cdot \begin{bmatrix} 1 & e^{-j\frac{\pi}{3}} & e^{-j4\frac{\pi}{3}} \\ e^{-j\frac{\pi}{3}} & 1 & e^{-j\frac{\pi}{3}} \\ e^{-j4\frac{\pi}{3}} & e^{-j\frac{\pi}{3}} & 1 \end{bmatrix} \cdot \begin{bmatrix} 1 & 0 & 0 \\ 0 & e^{j\Phi_1} & 0 \\ 0 & 0 & e^{j\Phi_2} \end{bmatrix} \quad \text{where;} \quad \begin{cases} \Phi_1 = \Phi_{L_1} + \Phi_{A_1} \\ \Phi_2 = \Phi_{L_2} + \Phi_{A_2} \\ \phi_1 = \phi_{L_1} + \phi_{A_1} \\ \phi_2 = \phi_{L_2} + \phi_{A_2} \end{cases}
$$

$$
= \mathbf{U} \cdot \mathbf{\Lambda}^{1/2} \cdot \mathbf{V}^H = \mathbf{U} \cdot \begin{bmatrix} \sqrt{3} & 0 & 0 \\ 0 & \sqrt{3} & 0 \\ 0 & 0 & \sqrt{3} \end{bmatrix} \cdot \begin{bmatrix} 1 & 0 & 0 \\ 0 & 1 & 0 \\ 0 & 0 & 1 \end{bmatrix}
$$

$$
\therefore \quad \mathbf{U} = \begin{bmatrix} U_{11} & U_{12} & U_{13} \\ U_{21} & U_{22} & U_{23} \\ U_{31} & U_{32} & U_{33} \end{bmatrix} = \begin{bmatrix} 1 & e^{-j\frac{\pi}{3}} \cdot e^{j\Phi_1} & e^{-j4\frac{\pi}{3}} \cdot e^{j\Phi_2} \\ e^{-j\frac{\pi}{3}} \cdot e^{j\phi_1} & 1 \cdot e^{j(\phi_1+\Phi_1)} & e^{-j\frac{\pi}{3}} \cdot e^{j(\phi_1+\Phi_2)} \\ e^{-j4\frac{\pi}{3}} \cdot e^{j\phi_2} & e^{-j\frac{\pi}{3}} \cdot e^{j(\phi_2+\Phi_1)} & 1 \cdot e^{j(\phi_2+\Phi_2)} \end{bmatrix} \cdot \begin{bmatrix} \frac{1}{\sqrt{3}} & 0 & 0 \\ 0 & \frac{1}{\sqrt{3}} & 0 \\ 0 & 0 & \frac{1}{\sqrt{3}} \end{bmatrix}
$$

$$
= \begin{bmatrix} \dfrac{1}{\sqrt{3}} & \dfrac{e^{-j\frac{\pi}{3}} \cdot e^{j\Phi_1}}{\sqrt{3}} & \dfrac{e^{-j4\frac{\pi}{3}} \cdot e^{j\Phi_2}}{\sqrt{3}} \\[2mm] \dfrac{e^{-j\frac{\pi}{3}} \cdot e^{j\phi_1}}{\sqrt{3}} & \dfrac{1 \cdot e^{j(\phi_1+\Phi_1)}}{\sqrt{3}} & \dfrac{e^{-j\frac{\pi}{3}} \cdot e^{j(\phi_1+\Phi_2)}}{\sqrt{3}} \\[2mm] \dfrac{e^{-j4\frac{\pi}{3}} \cdot e^{j\phi_2}}{\sqrt{3}} & \dfrac{e^{-j\frac{\pi}{3}} \cdot e^{j(\phi_2+\Phi_1)}}{\sqrt{3}} & \dfrac{1 \cdot e^{j(\phi_2+\Phi_2)}}{\sqrt{3}} \end{bmatrix} \quad \text{where;} \quad \alpha = \frac{\pi}{\gamma} \cdot \frac{d^2}{R} = \frac{\pi}{3}
$$

Thus, Numeral 97 can be obtained.

[Numeral 97]

$$
\therefore \quad \mathbf{U}^H = \begin{bmatrix} \dfrac{1}{\sqrt{3}} & \dfrac{e^{j\frac{\pi}{3}} \cdot e^{-j\phi_1}}{\sqrt{3}} & \dfrac{e^{j4\frac{\pi}{3}} \cdot e^{-j\phi_2}}{\sqrt{3}} \\[2mm] \dfrac{e^{j\frac{\pi}{3}} \cdot e^{-j\Phi_1}}{\sqrt{3}} & \dfrac{1 \cdot e^{-j(\phi_1+\Phi_1)}}{\sqrt{3}} & \dfrac{e^{j\frac{\pi}{3}} \cdot e^{-j(\phi_2+\Phi_1)}}{\sqrt{3}} \\[2mm] \dfrac{e^{j4\frac{\pi}{3}} \cdot e^{-j\Phi_2}}{\sqrt{3}} & \dfrac{e^{j\frac{\pi}{3}} \cdot e^{-j(\phi_1+\Phi_2)}}{\sqrt{3}} & \dfrac{1 \cdot e^{-j(\phi_2+\Phi_2)}}{\sqrt{3}} \end{bmatrix} \quad \text{where;} \quad \begin{cases} \Phi_1 = \Phi_{L_1} + \Phi_{A_1} \\ \Phi_2 = \Phi_{L_2} + \Phi_{A_2} \\ \phi_1 = \phi_{L_1} + \phi_{A_1} \\ \phi_2 = \phi_{L_2} + \phi_{A_2} \end{cases}
$$

$\Phi_A$ and $\phi_A$ in Numeral 97 each represent a carrier phase rotation caused due to a fluctuation of the transmission/reception side antennas highly sensitive to a subtle change of weather condition such as wind or surrounding temperature. Suffixes 1 and 2 represent a positional displacement of second and third antennas counting from the uppermost antennas.

Further, antenna separation length must be widened in view of a frequency to be used in the fixed point microwave communication system. Correspondingly, local oscillators are installed near the antennas. That is, the local oscillators are provided independently for respective antennas on both the transmission and reception sides . Accordingly, phase noise $\Phi_L$ or $\phi_L$ is caused due to absence of synchronization between carriers. Suffixes 1 and 2 represent a positional displacement of second and third antennas counting from the uppermost antennas.

A significant phase rotation due to movement in the antenna direction highly sensitive to a subtle change of weather condition such as wind or surrounding temperature can be traced to the same modeling as a phase rotation in the local oscillators provided for respective antennas both on the transmission and reception sides. Thus, the analysis based on Numeral 97 reveals that $\Phi_1 = \Phi_{L1} + \Phi_{A1}$ and $\Phi_2 = \Phi_{L2} + \Phi_{A2}$ are satisfied in the transmission side second and third antennas counting from the uppermost antenna and $\phi_1 = \phi_{L1} + \phi_{A1}$ and $\phi_2 = \phi_{L2} + \phi_{A2}$ are satisfied in the reception side second and third antennas counting from the uppermost antenna. That is, even in the configuration in which three antennas are used, the virtual orthogonal channels can be formed by the unitary matrix calculation only on the reception side. The thick arrows of FIG. 7 denote virtual orthogonal channels in which channel qualities thereof are proportional to $\sqrt{3}$, $\sqrt{3}$, and $\sqrt{3}$.

Further, it is possible to obtain characteristics equivalent to the SVD method by appropriately detecting the phase rotation using the pilot signals . The channel capacity becomes three times higher than the total power delivered to all antennas.

Seventh Example

(Case where four antennas are used, where unitary matrix calculation is performed only on reception side, and where local oscillators on both transmission and reception ends are independently provided for respective antennas)

Next, as a seventh example (seventh configuration example) of the present invention, a configuration example in which four antennas are used will be described.

[Singular value orthogonal matrix $\Lambda^{1/2}$]

In this case, singular value orthogonal matrix $\Lambda^{1/2}$ is represented by Numeral 98.

[Numeral 98]

$$\Lambda^{1/2} = \begin{bmatrix} \sqrt{\lambda_1} & 0 & 0 & 0 \\ 0 & \sqrt{\lambda_2} & 0 & 0 \\ 0 & 0 & \sqrt{\lambda_3} & 0 \\ 0 & 0 & 0 & \sqrt{\lambda_4} \end{bmatrix} = \begin{bmatrix} \sqrt{4} & 0 & 0 & 0 \\ 0 & \sqrt{4} & 0 & 0 \\ 0 & 0 & \sqrt{4} & 0 \\ 0 & 0 & 0 & \sqrt{4} \end{bmatrix}$$

[Channel matrix H]

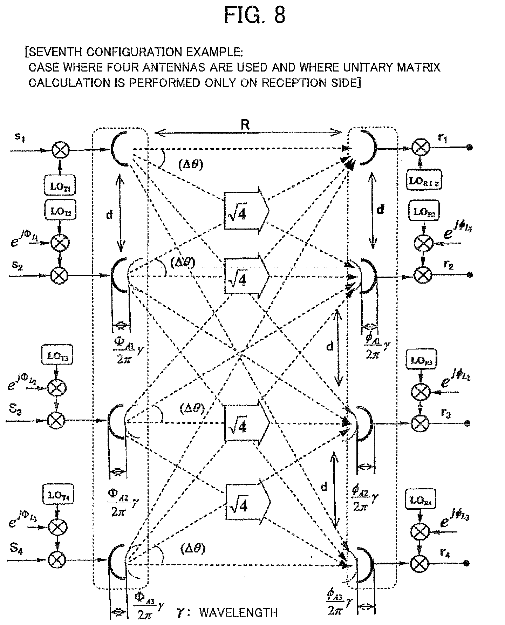

Based on FIG. 8, Numeral 99 is derived, and channel matrix H can be represented by Numeral 100.

[Numeral 99]

$$\frac{(n \cdot d)^2}{R} = \frac{n^2 \cdot \gamma}{4} \quad \text{where;} \quad n = 0,1,2,3$$

[Numeral 100]

$$\mathbf{H} = \begin{bmatrix} 1 & 0 & 0 & 0 \\ 0 & e^{j\phi_1} & 0 & 0 \\ 0 & 0 & e^{j\phi_2} & 0 \\ 0 & 0 & 0 & e^{j\phi_3} \end{bmatrix} \cdot \begin{bmatrix} 1 & e^{-j\frac{\pi}{4}} & e^{-j\frac{4\pi}{4}} & e^{-j\frac{9\pi}{4}} \\ e^{-j\frac{\pi}{4}} & 1 & e^{-j\frac{\pi}{4}} & e^{-j\frac{4\pi}{4}} \\ e^{-j\frac{4\pi}{4}} & e^{-j\frac{\pi}{4}} & 1 & e^{-j\frac{\pi}{4}} \\ e^{-j\frac{9\pi}{4}} & e^{-j\frac{4\pi}{4}} & e^{-j\frac{\pi}{4}} & 1 \end{bmatrix} \cdot \begin{bmatrix} 1 & 0 & 0 & 0 \\ 0 & e^{j\phi_1} & 0 & 0 \\ 0 & 0 & e^{j\phi_2} & 0 \\ 0 & 0 & 0 & e^{j\phi_3} \end{bmatrix}$$

$$= \mathbf{U} \cdot \Lambda^{1/2} \cdot \mathbf{V}^{H} = \mathbf{U} \cdot \begin{bmatrix} \sqrt{4} & 0 & 0 & 0 \\ 0 & \sqrt{4} & 0 & 0 \\ 0 & 0 & \sqrt{4} & 0 \\ 0 & 0 & 0 & \sqrt{4} \end{bmatrix} \cdot \begin{bmatrix} 1 & 0 & 0 & 0 \\ 0 & 1 & 0 & 0 \\ 0 & 0 & 1 & 0 \\ 0 & 0 & 0 & 1 \end{bmatrix}$$

where;

$$\begin{cases} \Phi_1 = \Phi_{L_1} + \Phi_{A_1} \\ \Phi_2 = \Phi_{L_2} + \Phi_{A_2} \\ \Phi_3 = \Phi_{L_3} + \Phi_{A_3} \\ \phi_1 = \phi_{L_1} + \phi_{A_1} \\ \phi_2 = \phi_{L_2} + \phi_{A_2} \\ \phi_3 = \phi_{L_3} + \phi_{A_3} \end{cases}$$

$$\therefore \; \mathbf{U} = \begin{bmatrix} 1 & e^{-j\frac{\pi}{4}} \cdot e^{j\Phi_1} & e^{-j\frac{4\pi}{4}} \cdot e^{j\Phi_2} & e^{-j\frac{9\pi}{4}} \cdot e^{j\Phi_3} \\ e^{-j\frac{\pi}{4}} \cdot e^{j\phi_1} & 1 \cdot e^{j(\phi_1+\Phi_1)} & e^{-j\frac{\pi}{4}} \cdot e^{j(\phi_1+\Phi_2)} & e^{-j\frac{4\pi}{4}} \cdot e^{j(\phi_1+\Phi_3)} \\ e^{-j\frac{4\pi}{4}} \cdot e^{j\phi_2} & e^{-j\frac{\pi}{4}} \cdot e^{j(\phi_2+\Phi_1)} & 1 \cdot e^{j(\phi_2+\Phi_2)} & e^{-j\frac{\pi}{4}} \cdot e^{j(\phi_2+\Phi_3)} \\ e^{-j\frac{9\pi}{4}} \cdot e^{j\phi_3} & e^{-j\frac{4\pi}{4}} \cdot e^{j(\phi_3+\Phi_1)} & e^{-j\frac{\pi}{4}} \cdot e^{j(\phi_3+\Phi_2)} & 1 \cdot e^{j(\phi_3+\Phi_3)} \end{bmatrix} \cdot \begin{bmatrix} 1/\sqrt{4} & 0 & 0 & 0 \\ 0 & 1/\sqrt{4} & 0 & 0 \\ 0 & 0 & 1/\sqrt{4} & 0 \\ 0 & 0 & 0 & 1/\sqrt{4} \end{bmatrix}$$

$$= \begin{bmatrix} \dfrac{1}{\sqrt{4}} & \dfrac{e^{-j\frac{\pi}{4}} \cdot e^{j\Phi_1}}{\sqrt{4}} & \dfrac{e^{-j\frac{4\pi}{4}} \cdot e^{j\Phi_2}}{\sqrt{4}} & \dfrac{e^{-j\frac{9\pi}{4}} \cdot e^{j\Phi_3}}{\sqrt{4}} \\[2ex] \dfrac{e^{-j\frac{\pi}{4}} \cdot e^{j\phi_1}}{\sqrt{4}} & \dfrac{1 \cdot e^{j(\phi_1+\Phi_1)}}{\sqrt{4}} & \dfrac{e^{-j\frac{\pi}{4}} \cdot e^{j(\phi_1+\Phi_2)}}{\sqrt{4}} & \dfrac{e^{-j\frac{4\pi}{4}} \cdot e^{j(\phi_1+\Phi_3)}}{\sqrt{4}} \\[2ex] \dfrac{e^{-j\frac{4\pi}{4}} \cdot e^{j\phi_2}}{\sqrt{4}} & \dfrac{e^{-j\frac{\pi}{4}} \cdot e^{j(\phi_2+\Phi_1)}}{\sqrt{4}} & \dfrac{1 \cdot e^{j(\phi_2+\Phi_2)}}{\sqrt{4}} & \dfrac{e^{-j\frac{\pi}{4}} \cdot e^{j(\phi_2+\Phi_3)}}{\sqrt{4}} \\[2ex] \dfrac{e^{-j\frac{9\pi}{4}} \cdot e^{j\phi_3}}{\sqrt{4}} & \dfrac{e^{-j\frac{4\pi}{4}} \cdot e^{j(\phi_3+\Phi_1)}}{\sqrt{4}} & \dfrac{e^{-j\frac{\pi}{4}} \cdot e^{j(\phi_3+\Phi_2)}}{\sqrt{4}} & \dfrac{1 \cdot e^{j(\phi_3+\Phi_3)}}{\sqrt{4}} \end{bmatrix}$$

where; $\alpha = \dfrac{\pi}{\gamma} \cdot \dfrac{d^2}{R} = \dfrac{\pi}{4}$

Thus, Numeral 101 can be obtained.

[Numeral 101]

$$\therefore \; \mathbf{U}^{H} = \begin{bmatrix} \dfrac{1}{\sqrt{4}} & \dfrac{e^{j\frac{\pi}{4}} \cdot e^{-j\phi_1}}{\sqrt{4}} & \dfrac{e^{j\frac{4\pi}{4}} \cdot e^{-j\phi_2}}{\sqrt{4}} & \dfrac{e^{j\frac{9\pi}{4}} \cdot e^{-j\phi_3}}{\sqrt{4}} \\[2ex] \dfrac{e^{j\frac{\pi}{4}} \cdot e^{-j\Phi_1}}{\sqrt{4}} & \dfrac{1 \cdot e^{-j(\phi_1+\Phi_1)}}{\sqrt{4}} & \dfrac{e^{j\frac{\pi}{4}} \cdot e^{-j(\phi_2+\Phi_1)}}{\sqrt{4}} & \dfrac{e^{j\frac{4\pi}{4}} \cdot e^{-j(\phi_3+\Phi_1)}}{\sqrt{4}} \\[2ex] \dfrac{e^{j\frac{4\pi}{4}} \cdot e^{-j\Phi_2}}{\sqrt{4}} & \dfrac{e^{j\frac{\pi}{4}} \cdot e^{-j(\phi_1+\Phi_2)}}{\sqrt{4}} & \dfrac{1 \cdot e^{-j(\phi_2+\Phi_2)}}{\sqrt{4}} & \dfrac{e^{j\frac{\pi}{4}} \cdot e^{-j(\phi_3+\Phi_2)}}{\sqrt{4}} \\[2ex] \dfrac{e^{j\frac{9\pi}{4}} \cdot e^{-j\Phi_3}}{\sqrt{4}} & \dfrac{e^{j\frac{4\pi}{4}} \cdot e^{-j(\phi_1+\Phi_3)}}{\sqrt{4}} & \dfrac{e^{j\frac{\pi}{4}} \cdot e^{-j(\phi_2+\Phi_3)}}{\sqrt{4}} & \dfrac{1 \cdot e^{-j(\phi_3+\Phi_3)}}{\sqrt{4}} \end{bmatrix}$$

where;

$$\begin{cases} \Phi_1 = \Phi_{L_1} + \Phi_{A_1} \\ \Phi_2 = \Phi_{L_2} + \Phi_{A_2} \\ \Phi_3 = \Phi_{L_3} + \Phi_{A_3} \\ \phi_1 = \phi_{L_1} + \phi_{A_1} \\ \phi_2 = \phi_{L_2} + \phi_{A_2} \\ \phi_3 = \phi_{L_3} + \phi_{A_3} \end{cases}$$

$\Phi_A$ and $\phi_A$ in Numeral 101 each represent a carrier phase rotation caused due to a fluctuation of the transmission/reception side antennas highly sensitive to a subtle change of weather condition such as wind or surrounding temperature. Suffixes 1, 2, and 3 represent a positional displacement of second, third, and fourth antennas counting from the uppermost antennas.

Antenna separation length must be widened in view of a frequency to be used in the fixed point microwave communication system. Correspondingly, local oscillators are installed near the antennas. That is, the local oscillators are provided independently for respective antennas on both the transmission and reception sides. Accordingly, phase noise $\Phi_L$ or $\Phi_L$ is caused due to absence of synchronization between carriers. Suffixes 1, 2, and 3 represent a positional displacement of second, third, and fourth antennas counting from the uppermost antennas.

A significant phase rotation due to movement in the antenna direction highly sensitive to a subtle change of weather condition such as wind or surrounding temperature can be traced to the same modeling as a phase rotation in the local oscillators provided for respective antennas both on the transmission and reception sides. Thus, the analysis based on Numeral 101 reveals that $\Phi_1 = \Phi_{L1} + \Phi_{A1}$, $\Phi_2 = \Phi_{L2} + \Phi_{A2}$, and $\Phi_3 = \Phi_{L3} + \Phi_{A3}$ are satisfied in the transmission side second, third, and fourth antennas counting from the uppermost antenna and $\phi_1 = \phi_{L1} + \phi_{A1}$, $\phi_2 = \phi_{L2} + \phi_{A2}$, and $\phi_3 = \phi_{L3} + \phi_{A3}$ are satisfied in the reception side second, third, and fourth antennas counting from the uppermost antenna. That is, even in the configuration in which four antennas are used, the virtual orthogonal channels can be formed by the unitary matrix calculation only on the reception side. The thick arrows of FIG. 8 denote virtual orthogonal channels in which channel qualities thereof are proportional to $\sqrt{4}$, $\sqrt{4}$, $\sqrt{4}$, and $\sqrt{4}$.

Further, it is possible to obtain characteristics equivalent to the SVD method by appropriately detecting the phase rotation using the pilot signals. The channel capacity becomes four times higher than the total power delivered to all antennas.

In the following, a case where an arbitrary number of antennas are used will be described for respective cases where matrix calculation is performed only on the transmission side, where only on the reception side, and where both on the transmission and reception sides.

[Configuration using arbitrary number N of antennas (general solution)]

A configuration using an arbitrary number N of antennas is considered.

[Singular value orthogonal matrix $\Lambda^{1/2}$]

In this case, singular value orthogonal matrix $\Lambda^{1/2}$ is represented by Numeral 102.

[Numeral 102]

$$\Lambda^{1/2} = \begin{bmatrix} \sqrt{\lambda_1} & 0 & \cdots & 0 \\ 0 & \sqrt{\lambda_2} & \cdots & 0 \\ \vdots & \vdots & \ddots & \vdots \\ 0 & 0 & \cdots & \sqrt{\lambda_N} \end{bmatrix} = \begin{bmatrix} \sqrt{N} & 0 & \cdots & 0 \\ 0 & \sqrt{N} & \cdots & 0 \\ \vdots & \vdots & \ddots & \vdots \\ 0 & 0 & \cdots & \sqrt{N} \end{bmatrix}$$

[Channel matrix H]

Based on Numeral 103, an ideal line-of-sight channel matrix where there is no phase rotation on both the transmission and reception sides is represented as the channel matrix H by Numeral 104.

[Numeral 103]

$$\frac{(n \cdot d)^2}{R} = \frac{n^2 \cdot \gamma}{N} \quad \text{where;} \quad n = 0, 1, 2, 3, \cdots, N-1$$

[Numeral 104]

$$\mathbf{H}_o = \begin{bmatrix} 1 & e^{-j\frac{\pi}{N}} & \cdots & e^{-j\frac{(N-1)^2 \pi}{N}} \\ e^{-j\frac{\pi}{N}} & 1 & \ddots & e^{-j\frac{(N-2)^2 \pi}{N}} \\ \vdots & \ddots & \ddots & \vdots \\ e^{-j\frac{(N-1)^2 \pi}{N}} & e^{-j\frac{(N-2)^2 \pi}{N}} & \cdots & 1 \end{bmatrix}$$

A transmission side phase rotation matrix T is defined by Numeral 105.

[Numeral 105]

$$\mathbf{T} = \begin{bmatrix} 1 & 0 & \cdots & 0 \\ 0 & e^{j\Phi_1} & \cdots & 0 \\ \vdots & \vdots & \ddots & \vdots \\ 0 & 0 & \cdots & e^{j\Phi_{N-1}} \end{bmatrix}$$

Similarly, a reception side phase rotation matrix W is defined by Numeral 106.

[Numeral 106]

$$\mathbf{W} = \begin{bmatrix} 1 & 0 & \cdots & 0 \\ 0 & e^{j\phi_1} & \cdots & 0 \\ \vdots & \vdots & \ddots & \vdots \\ 0 & 0 & \cdots & e^{j\phi_{N-1}} \end{bmatrix}$$

Here, Numeral 107 and Numeral 108 are satisfied.

[Numeral 107]

$$\begin{cases} \phi_1 = \phi_{L_1} + \phi_{A_1} \\ \vdots \\ \phi_{N-1} = \phi_{L_{N-1}} + \phi_{A_{N-1}} \end{cases}$$

[Numeral 108]

$$\begin{cases} \Phi_1 = \Phi_{L_1} + \Phi_{A_1} \\ \vdots \\ \Phi_{N-1} = \Phi_{L_{N-1}} + \Phi_{A_{N-1}} \end{cases}$$

$\Phi_A$ and $\phi_A$ in Numeral 101 each represent a carrier phase rotation caused due to a fluctuation of the transmission/reception side antennas highly sensitive to a subtle change of weather condition such as wind or surrounding temperature. $\Phi_L$ or $\phi_L$ represents a phase variation caused due to absence of synchronization between carriers. Each suffix represents the order of antennas counting from the uppermost antennas.

Thus, an actual line-of-sight channel matrix where a phase rotation is present on both the transmission and reception sides is represented by Numeral 109.

[Numeral 109]

$$\mathbf{H} = \mathbf{W} \cdot \mathbf{H}_o \cdot \mathbf{T}$$

$$= \begin{bmatrix} 1 & 0 & \cdots & 0 \\ 0 & e^{j\phi_1} & \cdots & 0 \\ \vdots & \vdots & \ddots & \vdots \\ 0 & 0 & \cdots & e^{j\phi_{N-1}} \end{bmatrix} \cdot \begin{bmatrix} 1 & e^{-j\frac{\pi}{N}} & \cdots & e^{-j\frac{(N-1)^2\pi}{N}} \\ e^{-j\frac{\pi}{N}} & 1 & \ddots & e^{-j\frac{(N-2)^2\pi}{N}} \\ \vdots & \ddots & \ddots & \vdots \\ e^{-j\frac{(N-1)^2\pi}{N}} & e^{-j\frac{(N-2)^2\pi}{N}} & \cdots & 1 \end{bmatrix} \cdot \begin{bmatrix} 1 & 0 & \cdots & 0 \\ 0 & e^{j\Phi_1} & \cdots & 0 \\ \vdots & \vdots & \ddots & \vdots \\ 0 & 0 & \cdots & e^{j\Phi_{N-1}} \end{bmatrix}$$

(Case where unitary matrix calculation is performed only on reception side)

In this case, Numeral 110 is satisfied and therefore Numeral 111 is satisfied.

[Numeral 110]

$$\mathbf{H} = \mathbf{W} \cdot \mathbf{H}_o \cdot \mathbf{T} = \mathbf{U} \cdot \Lambda^{1/2} \cdot \mathbf{V}^H = \mathbf{U} \cdot \begin{bmatrix} \sqrt{N} & 0 & \cdots & 0 \\ 0 & \sqrt{N} & \cdots & 0 \\ \vdots & \vdots & \ddots & \vdots \\ 0 & 0 & \cdots & \sqrt{N} \end{bmatrix} \begin{bmatrix} 1 & 0 & \cdots & 0 \\ 0 & 1 & \cdots & 0 \\ \vdots & \vdots & \ddots & \vdots \\ 0 & 0 & \cdots & 1 \end{bmatrix}$$

[Numeral 111]

$$\mathbf{U} = \frac{1}{\sqrt{N}} \cdot \mathbf{W} \cdot \mathbf{H}_o \cdot \mathbf{T}$$

Therefore, Numeral 112 is obtained.

[Numeral 112]

$$\mathbf{U}^H = \frac{1}{\sqrt{N}} \cdot \mathbf{T}^H \cdot \mathbf{H}_o^{\ H} \cdot \mathbf{W}^H$$

$$= \frac{1}{\sqrt{N}} \cdot \begin{bmatrix} 1 & 0 & \cdots & 0 \\ 0 & e^{-j\Phi_1} & \cdots & 0 \\ \vdots & \vdots & \ddots & \vdots \\ 0 & 0 & \cdots & e^{-j\Phi_{N-1}} \end{bmatrix} \cdot \begin{bmatrix} 1 & e^{j\frac{\pi}{N}} & \cdots & e^{j\frac{(N-1)^2\pi}{N}} \\ e^{j\frac{\pi}{N}} & 1 & \ddots & e^{j\frac{(N-2)^2\pi}{N}} \\ \vdots & \ddots & \ddots & \vdots \\ e^{j\frac{(N-1)^2\pi}{N}} & e^{j\frac{(N-2)^2\pi}{N}} & \cdots & 1 \end{bmatrix} \cdot \begin{bmatrix} 1 & 0 & \cdots & 0 \\ 0 & e^{-j\phi_1} & \cdots & 0 \\ \vdots & \vdots & \ddots & \vdots \\ 0 & 0 & \cdots & e^{-j\phi_{N-1}} \end{bmatrix}$$

That is, even in the configuration in which arbitrary number N of antennas are used, the virtual orthogonal channels can be formed by the matrix calculation only on the reception side even in the case where the local oscillators are provided independently for respective antennas and where a displacement in the highly sensitive antenna direction occurs.

Incidentally, Numeral 113 is satisfied.

[Numeral 113]

$$\mathbf{U}^H \cdot \mathbf{U} = \frac{1}{\sqrt{N}} \cdot \mathbf{T}^H \cdot \mathbf{H}_o^H \cdot \mathbf{W}^H \cdot \frac{1}{\sqrt{N}} \cdot \mathbf{W} \cdot \mathbf{H}_o \cdot \mathbf{T} = \frac{1}{N} \mathbf{T}^H \cdot \mathbf{H}_o^H \cdot \mathbf{H}_o \cdot \mathbf{T}$$

Here, Numeral 114 is satisfied.

[Numeral 114]

$$\mathbf{H}_o^H \cdot \mathbf{H}_o = \begin{bmatrix} 1 & e^{j\frac{\pi}{N}} & \cdots & e^{j\frac{(N-1)^2\pi}{N}} \\ e^{j\frac{\pi}{N}} & 1 & \ddots & e^{j\frac{(N-2)^2\pi}{N}} \\ \vdots & \ddots & \ddots & \vdots \\ e^{j\frac{(N-1)^2\pi}{N}} & e^{j\frac{(N-2)^2\pi}{N}} & \cdots & 1 \end{bmatrix} \begin{bmatrix} 1 & e^{-j\frac{\pi}{N}} & \cdots & e^{-j\frac{(N-1)^2\pi}{N}} \\ e^{-j\frac{\pi}{N}} & 1 & \ddots & e^{-j\frac{(N-2)^2\pi}{N}} \\ \vdots & \ddots & \ddots & \vdots \\ e^{-j\frac{(N-1)^2\pi}{N}} & e^{-j\frac{(N-2)^2\pi}{N}} & \cdots & 1 \end{bmatrix}$$

$$= N \cdot \mathbf{I}$$

When N is an even number, an arbitrary column vector or arbitrary row vector is a vector obtained by cyclic-shifting Chu sequence, and the autocorrelation values thereof (E[a·a*]) are orthogonal to each other. When N is an odd number, cyclic shift does not appear. However, it can be understood from the following description that the orthogonal relationship has been established.

(Case where unitary matrix calculation is performed only on transmission side)

In this case, Numeral 115 is satisfied and therefore Numeral 116 is satisfied.

[Numeral 115]

$$\mathbf{H} = \mathbf{W} \cdot \mathbf{H}_o \cdot \mathbf{T} = \mathbf{U} \cdot \Lambda^{1/2} \cdot \mathbf{V}^H = \begin{bmatrix} 1 & 0 & \cdots & 0 \\ 0 & 1 & \cdots & 0 \\ \vdots & \vdots & \ddots & \vdots \\ 0 & 0 & \cdots & 1 \end{bmatrix} \cdot \begin{bmatrix} \sqrt{N} & 0 & \cdots & 0 \\ 0 & \sqrt{N} & \cdots & 0 \\ \vdots & \vdots & \ddots & \vdots \\ 0 & 0 & \cdots & \sqrt{N} \end{bmatrix} \cdot \mathbf{V}^H$$

[Numeral 116]

$$\mathbf{V}^{\mathbf{H}} = \frac{1}{\sqrt{N}} \cdot \mathbf{W} \cdot \mathbf{H}_o \cdot \mathbf{T}$$

Therefore, Numeral 117 is obtained.

[Numeral 117]

$$V = \frac{1}{\sqrt{N}} \cdot \mathbf{T}^H \cdot \mathbf{H}_o{}^H \cdot \mathbf{W}^H$$

$$= \frac{1}{\sqrt{N}} \cdot \begin{bmatrix} 1 & 0 & \cdots & 0 \\ 0 & e^{-j\Phi_1} & \cdots & 0 \\ \vdots & \vdots & \ddots & \vdots \\ 0 & 0 & \cdots & e^{-j\Phi_{N-1}} \end{bmatrix} \cdot \begin{bmatrix} 1 & e^{j\frac{\pi}{N}} & \cdots & e^{j\frac{(N-1)^2\pi}{4}} \\ e^{j\frac{\pi}{N}} & 1 & \ddots & e^{j\frac{(N-2)^2\pi}{4}} \\ \vdots & \ddots & \ddots & \vdots \\ e^{j\frac{(N-1)^2\pi}{4}} & e^{j\frac{(N-2)^2\pi}{4}} & \cdots & 1 \end{bmatrix} \cdot \begin{bmatrix} 1 & 0 & \cdots & 0 \\ 0 & e^{-j\phi_1} & \cdots & 0 \\ \vdots & \vdots & \ddots & \vdots \\ 0 & 0 & \cdots & e^{-j\phi_{N-1}} \end{bmatrix}$$

That is, even in the configuration in which arbitrary number N of antennas are used, the virtual orthogonal channels can be formed by the matrix calculation processing V only on the transmission side even in the case where the local oscillators are provided independently for respective antennas and where a displacement in the highly sensitive antenna direction occurs.

(Case where unitary matrix calculation is performed both on transmission and reception sides)

[Singular value orthogonal matrix $\Lambda^{1/2}$]

In this case, singular value orthogonal matrix $\Lambda^{1/2}$ is represented by Numeral 118.

[Numeral 118]

$$\Lambda^{1/2} = \begin{bmatrix} \sqrt{\lambda_1} & 0 & \cdots & 0 \\ 0 & \sqrt{\lambda_2} & \cdots & 0 \\ \vdots & \vdots & \ddots & \vdots \\ 0 & 0 & \cdots & \sqrt{\lambda_N} \end{bmatrix} = \begin{bmatrix} \sqrt{N} & 0 & \cdots & 0 \\ 0 & \sqrt{N} & \cdots & 0 \\ \vdots & \vdots & \ddots & \vdots \\ 0 & 0 & \cdots & \sqrt{N} \end{bmatrix}$$

Thus, Numeral 119 is satisfied.

[Numeral 119]

$$\mathbf{H} = \mathbf{W} \cdot \mathbf{H}_o \cdot \mathbf{T} = \mathbf{U} \cdot \mathbf{\Lambda}^{1/2} \cdot \mathbf{V}^H = \sqrt{N} \cdot \mathbf{U} \cdot \mathbf{V}^H$$

When an arbitrary unitary matrix is used as V, Numeral 120 is obtained.

[Numeral 120]

$$\mathbf{U} = \frac{1}{\sqrt{N}} \cdot \mathbf{W} \cdot \mathbf{H}_o \cdot \mathbf{T} \cdot \mathbf{V}$$

Incidentally, Numeral 121 is satisfied.

[Numeral 121]

$$\mathbf{U}^H \cdot \mathbf{U} = \frac{1}{\sqrt{N}} \cdot \mathbf{V}^H \cdot \mathbf{T}^H \cdot \mathbf{H}_o{}^H \cdot \mathbf{W}^H \cdot \frac{1}{\sqrt{N}} \cdot \mathbf{W} \cdot \mathbf{H}_o \cdot \mathbf{T} \cdot \mathbf{V} = \frac{1}{N} \cdot N \cdot \mathbf{I} = \mathbf{I}$$

Thus, even when an arbitrary unitary matrix is used as V, U becomes a unitary matrix.
Thus, Numeral 122 is obtained.

[Numeral 122]

$$\mathbf{U}^H = \frac{1}{\sqrt{N}} \cdot \mathbf{V}^H \cdot \mathbf{T}^H \cdot \mathbf{H}_o{}^H \cdot \mathbf{W}^H$$

$$= \frac{\mathbf{V}^H}{\sqrt{N}} \cdot \begin{bmatrix} 1 & 0 & \cdots & 0 \\ 0 & e^{-j\Phi_1} & \cdots & 0 \\ \vdots & \vdots & \ddots & \vdots \\ 0 & 0 & \cdots & e^{-j\Phi_{N-1}} \end{bmatrix} \cdot \begin{bmatrix} 1 & e^{j\frac{\pi}{N}} & \cdots & e^{j\frac{(N-1)^2\pi}{N}} \\ e^{j\frac{\pi}{N}} & 1 & \ddots & e^{j\frac{(N-2)^2\pi}{N}} \\ \vdots & \ddots & \ddots & \vdots \\ e^{j\frac{(N-1)^2\pi}{N}} & e^{j\frac{(N-2)^2\pi}{N}} & \cdots & 1 \end{bmatrix} \begin{bmatrix} 1 & 0 & \cdots & 0 \\ 0 & e^{-j\phi_1} & \cdots & 0 \\ \vdots & \vdots & \ddots & \vdots \\ 0 & 0 & \cdots & e^{-j\phi_{N-1}} \end{bmatrix}$$

That is, even when an arbitrary number N of antennas are used in the configuration using a unitary matrix both on the transmission and reception sides, the virtual orthogonal channels can be formed by the matrix calculation only on the reception side even in the case where the local oscillators are provided independently for respective antennas and where a displacement in the highly sensitive antenna direction occurs.
At this time, a fixed transmission matrix V may be any one as long as it is a unitary matrix, and a reception side unitary matrix calculation is represented by Numeral 123 to act so as to compensate for a fluctuation caused by the local oscillators or due to antenna displacement.

[Numeral 123]

$$U^H = \frac{V^H}{\sqrt{N}} \cdot T^H \cdot H_o{}^H \cdot W^H$$

(Example)

As a simple example, the above formula is applied to a configuration in which two antennas are used. As a fixed arbitrary transmission matrix, a matrix represented by Numeral 124 is selected.

[Numeral 124]

$$V = \begin{bmatrix} \dfrac{-1}{\sqrt{2}} & \dfrac{1}{\sqrt{2}} \\ \dfrac{-1}{\sqrt{2}} & \dfrac{-1}{\sqrt{2}} \end{bmatrix}$$

Here, Numeral 125 is satisfied and therefore Numeral 126 is satisfied.

[Numeral 125]

$$H_o = \begin{bmatrix} 1 & -j \\ -j & 1 \end{bmatrix}$$

[Numeral 126]

$$\mathbf{U}^{H} = \frac{\mathbf{V}^{H}}{\sqrt{N}} \cdot \mathbf{T}^{H} \cdot \mathbf{H}_{o}^{\ H} \cdot \mathbf{W}^{H} = \begin{bmatrix} \dfrac{-1}{2} & \dfrac{-1}{2} \\ \dfrac{1}{2} & \dfrac{-1}{2} \end{bmatrix} \cdot \begin{bmatrix} 1 & 0 \\ 0 & e^{-j\Phi_1} \end{bmatrix} \begin{bmatrix} 1 & j \\ j & 1 \end{bmatrix} \begin{bmatrix} 1 & 0 \\ 0 & e^{-j\phi_1} \end{bmatrix}$$

$$= \begin{bmatrix} \dfrac{-1-je^{-j\Phi_1}}{2} & \dfrac{-je^{-j\phi_1}-je^{-j(\Phi_1+\phi_1)}}{2} \\ \dfrac{1-je^{-j\Phi_1}}{2} & \dfrac{je^{-j\phi_1}-je^{-j(\Phi_1+\phi_1)}}{2} \end{bmatrix}$$

In the following, the orthogonal relationship used in Numeral 114 will be described.

Here, a product of arbitrary m-row vectors and arbitrary n-column vectors in Numeral 127 is calculated.

[Numeral 127]

$$\mathbf{H}_{o}^{\ H} \cdot \mathbf{H}_{o} = \begin{bmatrix} 1 & e^{j\frac{\pi}{N}} & \cdots & e^{j\frac{(N-1)^2\pi}{N}} \\ e^{j\frac{\pi}{N}} & 1 & \ddots & e^{j\frac{(N-2)^2\pi}{N}} \\ \vdots & \ddots & \ddots & \vdots \\ e^{j\frac{(N-1)^2\pi}{N}} & e^{j\frac{(N-2)^2\pi}{N}} & \cdots & 1 \end{bmatrix} \cdot \begin{bmatrix} 1 & e^{-j\frac{\pi}{N}} & \cdots & e^{-j\frac{(N-1)^2\pi}{N}} \\ e^{-j\frac{\pi}{N}} & 1 & \ddots & e^{-j\frac{(N-2)^2\pi}{N}} \\ \vdots & \ddots & \ddots & \vdots \\ e^{-j\frac{(N-1)^2\pi}{N}} & e^{-j\frac{(N-2)^2\pi}{N}} & \cdots & 1 \end{bmatrix}$$

When m<n, Numeral 128 is satisfied.

[Numeral 128]

$$\sum_{k=1}^{m} e^{j\frac{(m-k)^2\pi}{N}} \cdot e^{-j\frac{(n-k)^2\pi}{N}} + \sum_{k=m+1}^{n} e^{j\frac{(k-m)^2\pi}{N}} \cdot e^{-j\frac{(n-k)^2\pi}{N}} + \sum_{k=n+1}^{N} e^{j\frac{(k-m)^2\pi}{N}} \cdot e^{-j\frac{(k-n)^2\pi}{N}}$$

$$= \sum_{k=1}^{N} e^{j\frac{(m-k)^2\pi}{N}} \cdot e^{-j\frac{(n-k)^2\pi}{N}} = \sum_{k=1}^{N} e^{j\frac{(m^2-n^2-2k(m-n))\pi}{N}} = e^{j\frac{(m^2-n^2)\pi}{N}} \cdot \sum_{k=1}^{N} e^{-j\frac{2k(m-n)\pi}{N}}$$

Here, assuming that Numeral 129 is satisfied, Numeral 130 is satisfied.

[Numeral 129]

$$S = \sum_{k=1}^{N} e^{-j\frac{2k(m-n)\pi}{N}} = \sum_{k=1}^{N}\left(e^{-j\frac{2(m-n)\pi}{N}}\right)^{k}$$

[Numeral 130]

$$\left(1 - e^{-j\frac{2(m-n)\pi}{N}}\right)\cdot S = e^{-j\frac{2(m-n)\pi}{N}} - \left(e^{-j\frac{2(m-n)\pi}{N}}\right)^{N+1} = e^{-j\frac{2(m-n)\pi}{N}}\cdot\left\{1 - \left(e^{-j\frac{2(m-n)\pi}{N}}\right)^{N}\right\} = 0 \quad \therefore S = 0$$

Thus, the orthogonal relationship is established.
When m>n, Numeral 131 is satisfied.

[Numeral 131]

$$\sum_{k=1}^{n} e^{j\frac{(m-k)^2\pi}{N}}\cdot e^{-j\frac{(n-k)^2\pi}{N}} + \sum_{k=n+1}^{m} e^{j\frac{(m-k)^2\pi}{N}}\cdot e^{-j\frac{(k-n)^2\pi}{N}} + \sum_{k=m+1}^{N} e^{j\frac{(k-m)^2\pi}{N}}\cdot e^{-j\frac{(k-n)^2\pi}{N}}$$

$$= \sum_{k=1}^{N} e^{j\frac{(m-k)^2\pi}{N}}\cdot e^{-j\frac{(n-k)^2\pi}{N}} = \sum_{k=1}^{N} e^{j\frac{(m^2-n^2-2k(m-n))\pi}{N}} = e^{j\frac{(m^2-n^2)\pi}{N}}\cdot\sum_{k=1}^{N} e^{-j\frac{2k(m-n)\pi}{N}}$$

Similarly, Numeral 132 is satisfied.

[Numeral 132]

$$S = \sum_{k=1}^{N} e^{-j\frac{2k(m-n)\pi}{N}} = \sum_{k=1}^{N}\left(e^{-j\frac{2(m-n)\pi}{N}}\right)^{k} = 0$$

Thus, the orthogonal relationship is established.
From above, Numeral 133 is satisfied.

[Numeral 133]

$$\mathbf{H}_o{}^H \cdot \mathbf{H}_o = \begin{bmatrix} 1 & e^{j\frac{\pi}{N}} & \cdots & e^{j\frac{(N-1)^2\pi}{N}} \\ e^{j\frac{\pi}{N}} & 1 & \ddots & e^{j\frac{(N-2)^2\pi}{N}} \\ \vdots & \ddots & \ddots & \vdots \\ e^{j\frac{(N-1)^2\pi}{N}} & e^{j\frac{(N-2)^2\pi}{N}} & \cdots & 1 \end{bmatrix} \cdot \begin{bmatrix} 1 & e^{-j\frac{\pi}{N}} & \cdots & e^{-j\frac{(N-1)^2\pi}{N}} \\ e^{-j\frac{\pi}{N}} & 1 & \ddots & e^{-j\frac{(N-2)^2\pi}{N}} \\ \vdots & \ddots & \ddots & \vdots \\ e^{-j\frac{(N-1)^2\pi}{N}} & e^{-j\frac{(N-2)^2\pi}{N}} & \cdots & 1 \end{bmatrix} = N \cdot \mathbf{I}$$

The configuration using a plurality of antennas, in which a displacement in the highly sensitive antenna direction occurs and phase noise caused due to absence of synchronization between carriers are compensated only by the reception side unitary matrix , and communication capacity becomes a multiple of the number of antennas has been described.

In the following, characteristics in a condition where an ideal antenna separation length is not set, i.e., where the virtual orthogonal channels have different widths will be described. The fifth configuration example is used as an example.

[Analysis of characteristics in SVD method based on line-of-sight fixed channels and in proposed fifth configuration example]

(Case where virtual orthogonal channels have different widths, where matrix calculation is performed only on reception side, and where local oscillators are provided independently for respective antennas both on transmission and reception sides)

Characteristics analysis is performed for the fifth configuration example in which antenna separation length is set based on antenna positions different from optimum antenna positions for flexibility, while comparing to the SVD method.

First, referring to the fifth configuration example, assuming that reception signal vector is r, a signal vector after the matrix calculation on the reception side is represented by Numeral 134.

[Numeral 134]

$$\mathbf{U}^{-1} \cdot \mathbf{r} = \mathbf{U}^{-1} \cdot \left( \mathbf{H} \cdot \mathbf{S} + \mathbf{n} \right) = \mathbf{U}^{-1} \cdot \left( \mathbf{U} \cdot \Lambda^{1/2} \cdot \mathbf{S} + \mathbf{n} \right) = \Lambda^{1/2} \cdot \mathbf{S} + \mathbf{U}^{-1} \cdot \mathbf{n} \quad \because \quad \mathbf{V} = \mathbf{I}$$

In the above formula, S denotes a transmission signal vector, and n denotes a noise vector.

Further, from the fifth configuration example, Numeral 135 is satisfied.

[Numeral 135]

$$\mathbf{U}^{-1} = \begin{bmatrix} -je^{j\alpha}\dfrac{\cos(\alpha/2)}{\sin\alpha} & je^{-j\phi}\dfrac{\cos(\alpha/2)}{\sin\alpha} \\ je^{-j\Phi}\dfrac{\sin(\alpha/2)}{\sin\alpha} & -je^{-j(\Phi+\phi)}e^{j\alpha}\dfrac{\sin(\alpha/2)}{\sin\alpha} \end{bmatrix}$$

Thus, the transmission vector S and noise vector n are set as Numeral 136.

[Numeral 136]

$$\mathbf{S} = \begin{bmatrix} s_1 \\ s_2 \end{bmatrix}, \quad \mathbf{n} = \begin{bmatrix} n_1 \\ n_2 \end{bmatrix}$$

Further, normalization is applied to obtain Numeral 137 for comparison using relative values.

[Numeral 137]

$$E[|s_1|^2] = E[|s_2|^2] = 1, \quad E[|n_1|^2] = E[|n_2|^2] = 1$$

Thus, the SNR (Signal to Noise ratio)$_1$ of $\lambda_1$ channel is represented by Numeral 138.

[Numeral 138]

$$SNR_1 = \frac{|\lambda_1 \cdot s_1|^2}{E\left[\left| -je^{j\alpha} \frac{\cos(\alpha/2)}{\sin\alpha} \cdot n_1 + je^{-j\phi} \frac{\cos(\alpha/2)}{\sin\alpha} \cdot n_2 \right|^2\right]} = \frac{2+2\cos\alpha}{\left(2 \cdot \frac{\cos(\alpha/2)}{\sin\alpha}\right)^2} = \frac{4 \cdot \cos^2(\alpha/2)}{4 \cdot \frac{\cos^2(\alpha/2)}{\sin^2\alpha}}$$

$$= \sin^2\alpha$$

Similarly, the $SNR_2$ of $\lambda_2$ channel is represented by Numeral 139.

[Numeral 139]

$$SNR_2 = \frac{|\lambda_2 \cdot s_2|^2}{E\left[\left| je^{-j\Phi} \frac{\sin(\alpha/2)}{\sin\alpha} \cdot n_1 - je^{-j(\Phi+\phi)}e^{j\alpha} \frac{\sin(\alpha/2)}{\sin\alpha} \cdot n_2 \right|^2\right]} = \frac{2-2\cos\alpha}{\left(2 \cdot \frac{\sin(\alpha/2)}{\sin\alpha}\right)^2} = \frac{4 \cdot \sin^2(\alpha/2)}{4 \cdot \frac{\sin^2(\alpha/2)}{\sin^2\alpha}}$$

$$= \sin^2\alpha$$

Thus, although the orthogonal channels have different widths of $\lambda_1$ = 2+2cos $\alpha$ and $\lambda_2$ = 2-2cos $\alpha$, both the $SNR_1$ and $SNR_2$ become sin$^2$ $\alpha$.

(SVD method)

For comparison to the fifth configuration example, characteristics analysis of the SVD method is performed.

First, from the configuration diagram of FIG. 1, a reception signal vector after unitary matrix calculation according to the SVD method is represented by Numeral 140.

[Numeral 140]

$$\mathbf{U}^H \cdot \mathbf{r} = \mathbf{U}^H \cdot \left( \mathbf{H} \cdot \mathbf{V} \cdot \mathbf{S} + \mathbf{n} \right) = \mathbf{U}^H \cdot \left( \mathbf{U} \cdot \Lambda^{1/2} \cdot \mathbf{V}^H \cdot \mathbf{V} \cdot \mathbf{S} + \mathbf{n} \right) = \Lambda^{1/2} \cdot \mathbf{S} + \mathbf{U}^H \cdot \mathbf{n}$$

Then, from Numeral 43, Numeral 141 is satisfied.

[Numeral 141]

$$\mathbf{U}^H = \begin{bmatrix} \dfrac{-e^{j\frac{\alpha}{2}}}{\sqrt{2}} & \dfrac{-e^{j\frac{\alpha}{2}}}{\sqrt{2}} \\ \dfrac{-je^{j\frac{\alpha}{2}}}{\sqrt{2}} & \dfrac{j \cdot e^{j\frac{\alpha}{2}}}{\sqrt{2}} \end{bmatrix}$$

Thus, the SNR$_1$ of $\lambda_1$ channel after normalization is represented by Numeral 142.

[Numeral 142]

$$SNR_1 = \frac{\left| \lambda_1 \cdot s_1 \right|^2}{E\left[ \left| \dfrac{-e^{j\alpha/2}}{\sqrt{2}} \cdot n_1 + \dfrac{-e^{j\alpha/2}}{\sqrt{2}} \cdot n_2 \right|^2 \right]} = \frac{2 + 2\cos\alpha}{\left( 2 \cdot \dfrac{1}{\sqrt{2}} \right)^2} = 1 + \cos\alpha$$

Similarly, the SNR$_2$ of $\lambda_2$ channel is represented by Numeral 143.

[Numeral 143]

$$SNR_2 = \frac{\left| \lambda_2 \cdot s_2 \right|^2}{E\left[ \left| \dfrac{-je^{j\alpha/2}}{\sqrt{2}} \cdot n_1 + \dfrac{je^{j\alpha/2}}{\sqrt{2}} \cdot n_2 \right|^2 \right]} = \frac{2 - 2\cos\alpha}{\left( 2 \cdot \dfrac{1}{\sqrt{2}} \right)^2} = 1 - \cos\alpha$$

Thus, the widths of the orthogonal channels are proportional to $\lambda_1 = 2+2\cos\alpha$ and $\lambda_2 = 2-2\cos\alpha$ and, accordingly, the SNR$_1$ and SNR$_2$ become 1+1cos a and 1-1cos $\alpha$, respectively.

(Comparison between SNRs of orthogonal channels based on respective methods in terms of antenna separation length)

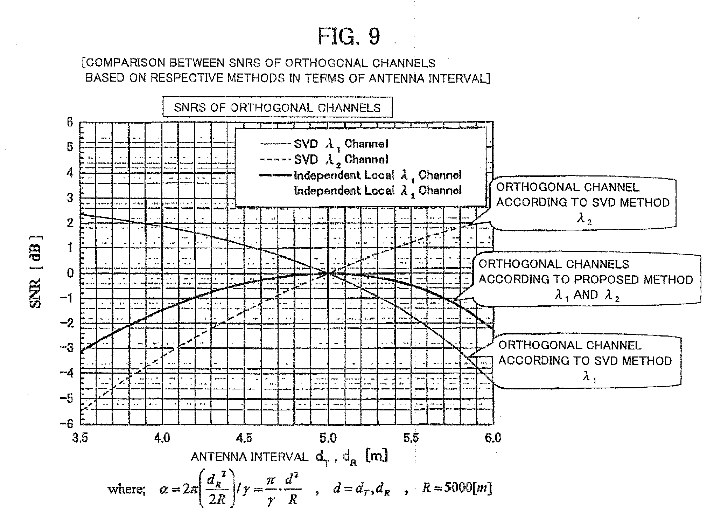

When the characteristics analysis results of the configuration example 5 and SVD method are compared with each other in terms of antenna separation lengths $d_T$ and $d_R$, a graph of FIG. 9 is obtained.

The proposed method exhibits the same SNR value between the orthogonal channels $\lambda_1$ and $\lambda_2$ and thus it can be understood that a fluctuation with respect to the antenna separation length is small.

For achievement of a practical and flexible configuration, the analysis has been made with the assumption that matrix calculation processing is performed only on the reception side so as to eliminate the need to use the feedback information to be sent to the transmission side in a configuration different from one in which there exists an inter-antenna position at which an eigenvalue is multiplicity condition to generate a singular point.

Signal power after the matrix calculation on the reception side is proportional to eigenvalue both in the proposed method and SVD method. In the case of the SVD method, the matrix calculation on the reception side is based on the unitary matrix, so that noise power does not change but keeps a constant value even if the eigenvalue changes. Therefore, the SNRs of the respective paths in the SNR method become different values which are proportional to the eigenvalue and change in accordance with the antenna separation length On the other hand, in the proposed method, the matrix calculation on the reception side is not based on the unitary matrix, so that noise power changes in accordance with eigenvalue. Thus, an analysis result of FIG. 9 reveals that although signal power exhibits high power and low power in proportion to the eigenvalue, the SNRs of the respective paths always exhibit the same value and change in accordance with the antenna separation length in the same proportion.

Thus, in the proposed method, the SNR with respect to the virtual orthogonal channel does not change even when the antenna separation length changes and, if a change occurs, the change amount is small, so that it can be said that the proposed method is more practical and easier to use than the SVD method.

The content of theoretical analysis with the assumption that the local oscillators are provided independently for respective antennas can be traced to the same modeling also with respect to the movement in the highly sensitive antenna direction, thus fully covering influence by a subtle change of weather condition such as wind.

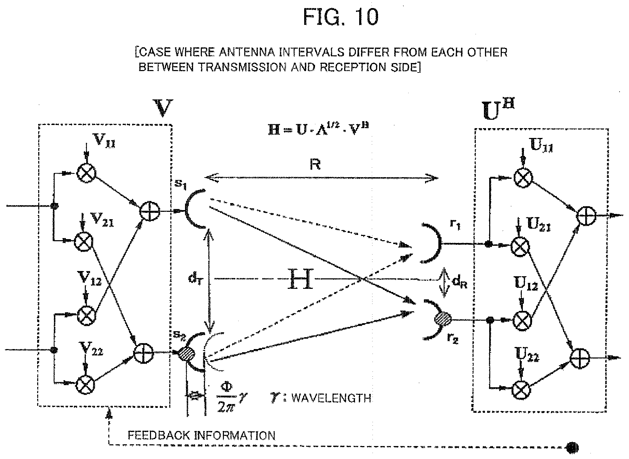

Next, arrangement considering actual installation locations will be described. It is likely to be difficult to ensure antenna installation location nearer to the user side. On the other hand, it is more likely to be easier to ensure antenna installation locations on the backbone network side opposed to the user side. In the following, a configuration shown in FIG. 10 in which antenna separation lengths differ from each other between the transmission and reception side will be described.

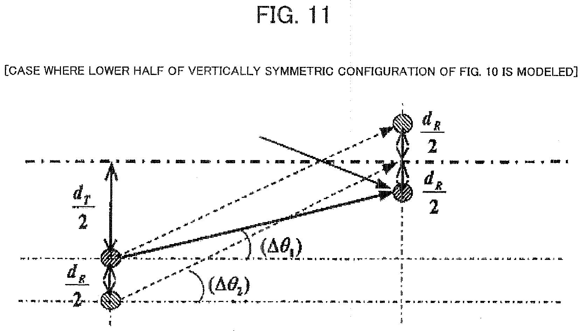

FIG. 11 which is obtained by modeling the lower half of the vertically symmetric configuration of FIG. 10 is used to perform analysis as follows.

The propagation loss and common phase shift based on a transmitter-receiver distance R are not essential so those terms are ignored. In the following, R is set as a reference. Then, the channel difference of a diagonal channel of angle $\Delta\theta_1$ with respect to R is represented by Numeral 144.

[Numeral 144]

$$R \cdot (1 - \cos(\Delta\theta_1)) \approx R \cdot \left(\frac{(\Delta\theta_1)^2}{2}\right) = R \cdot \left(\frac{1}{2}\left(\frac{d_T - d_R}{2R}\right)^2\right) = \frac{(d_T - d_R)^2}{8R} \quad \because \frac{\frac{d_T}{2} - \frac{d_R}{2}}{R} = \frac{d_T - d_R}{2R} = \tan(\Delta\theta_1) \approx (\Delta\theta_1)$$

Similarly, the channel difference of a diagonal channel of angle $\Delta\theta_2$ with respect to R is represented by Numeral 145.

[Numeral 145]

$$R \cdot (1 - \cos(\Delta\theta_1)) \approx R \cdot \left(\frac{(\Delta\theta_2)^2}{2}\right) = R \cdot \left(\frac{1}{2}\left(\frac{d_T + d_R}{2R}\right)^2\right) = \frac{(d_T + d_R)^2}{8R} \quad \because \frac{\frac{d_T}{2} + \frac{d_R}{2}}{R} = \frac{d_T + d_R}{2R} = \tan(\Delta\theta_2) \approx (\Delta\theta_2)$$

The phase rotation $\alpha$ obtained based on the channel difference between two waves at the reception points is represented by Numeral 146.

[Numeral 146]

$$\alpha = 2\pi \left( \frac{(d_T + d_R)^2 - (d_T - d_R)^2}{8R} \right) / \gamma = \frac{\pi}{\gamma} \cdot \frac{4 \cdot d_T \cdot d_R}{4 \cdot R} = \frac{\pi}{\gamma} \cdot \frac{d_T \cdot d_R}{R}$$

Incidentally, assuming that RF frequency=30GHz, R=2000m, $d_T$=5m, and $d_R$=2m, Numeral 147 is satisfied.

[Numeral 147]

$$\alpha = \frac{\pi}{\gamma} \cdot \frac{d_T \cdot d_R}{R} = \frac{\pi}{(3 \cdot 10^8)/(30 \cdot 10^9)} \cdot \frac{5 \times 2}{2000} = \frac{\pi}{2}$$

With phase shift $\Phi$ caused due to a fluctuation of a transmission antenna position for transmitting a signal $s_2$ taken into consideration, the channel matrix H normalized by the diagonal channel of angle $\Delta\theta_1$ is represented by Numeral 148.

[Numeral 148]

$$\mathbf{H} = \begin{bmatrix} 1 & e^{-j\alpha} \cdot e^{j\Phi} \\ e^{-j\alpha} & 1 \cdot e^{j\Phi} \end{bmatrix}$$

Thus, the same condition as results that have so far been obtained is exhibited.
Further, from Numeral 149, Numeral 150 is obtained.

[Numeral 149]

$$\mathbf{\Omega} = \mathbf{H}^H \cdot \mathbf{H} = \begin{bmatrix} 1 & e^{j\alpha} \\ e^{j\alpha} \cdot e^{-j\Phi} & e^{-j\Phi} \end{bmatrix} \cdot \begin{bmatrix} 1 & e^{-j\alpha} \cdot e^{j\Phi} \\ e^{-j\alpha} & e^{j\Phi} \end{bmatrix} = \begin{bmatrix} 2 & e^{j\Phi}(e^{j\alpha} + e^{-j\alpha}) \\ e^{-j\Phi}(e^{j\alpha} + e^{-j\alpha}) & 2 \end{bmatrix}$$

$$= \begin{bmatrix} 2 & 2 \cdot \cos\alpha \cdot e^{j\Phi} \\ 2 \cdot \cos\alpha \cdot e^{-j\Phi} & 2 \end{bmatrix}$$

[Numeral 150]

$$\left| \begin{matrix} 2-\lambda & 2 \cdot \cos\alpha \cdot e^{j\Phi} \\ 2 \cdot \cos\alpha \cdot e^{-j\Phi} & 2-\lambda \end{matrix} \right| = \lambda^2 + 4 - 4\lambda - 4\cos^2\alpha = \lambda^2 - 4\lambda - 4\sin^2\alpha = 0$$

$$\therefore \quad \lambda = 2 \pm \sqrt{4 - 4\sin^2\alpha} = 2 \pm 2\cos\alpha$$

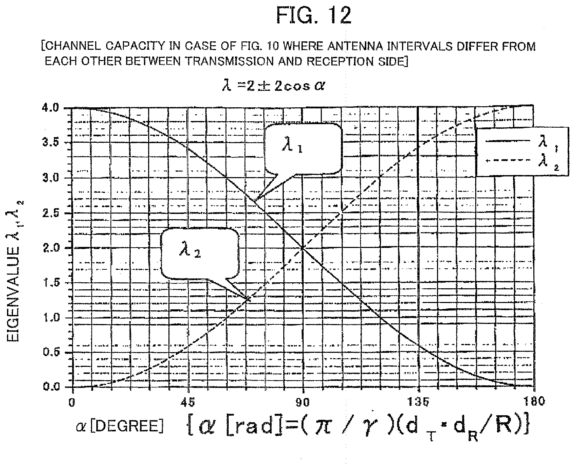

FIG. 12 is a graph showing this result.

When Numeral 151 is constructed from the above result, the same result as those that have so far been is obtained.

[Numeral 151]

$$\alpha = \frac{\pi}{\gamma} \cdot \frac{d_R^{\;2}}{R} \quad \Rightarrow \quad \alpha = \frac{\pi}{\gamma} \cdot \frac{d_T \cdot d_R}{R}$$

Thus, it can be understood that the proposed method can be used without modification.

A case where a diamond-shaped misalignment occurs in the antenna arrangement direction between the transmission and reception antennas will be described.

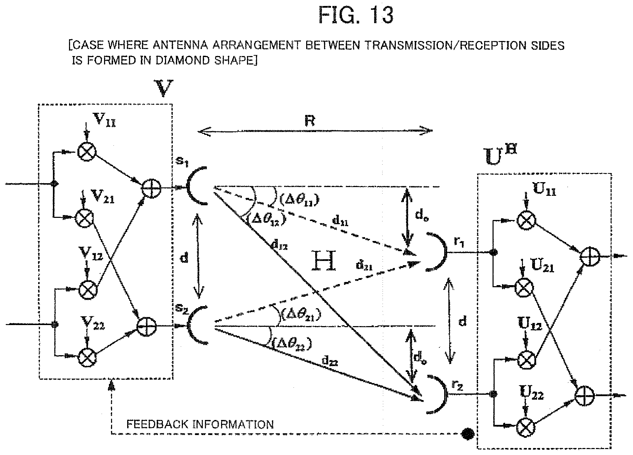

In FIG. 13, R is set as a reference, as in the above case. Then, in the case of $d_{11}$, the channel difference of a diagonal channel with respect to R is represented by Numeral 152.

[Numeral 152]

$$R \cdot \left(1 - \cos(\Delta\theta_{11})\right) \approx R \cdot \left(\frac{(\Delta\theta_{11})^2}{2}\right) = R \cdot \left(\frac{1}{2}(\frac{d_o}{R})^2\right) = \frac{d_o^{\;2}}{2R} \quad \because \frac{d_o}{R} = \tan(\Delta\theta_{11}) \approx (\Delta\theta_{11})$$

Similarly, in the case of $d_{12}$, the channel difference of a diagonal channel with respect to R is represented by Numeral 153.

[Numeral 153]

$$R \cdot \left(1 - \cos(\Delta\theta_{12})\right) \approx R \cdot \left(\frac{(\Delta\theta_{12})^2}{2}\right) = R \cdot \left(\frac{1}{2}(\frac{d+d_o}{R})^2\right) = \frac{(d+d_o)^2}{2R} = \frac{d^2 + d_o^{\;2} + 2dd_o}{2R} \quad \because \frac{d+d_o}{R} = \tan(\Delta\theta_{12}) \approx (\Delta\theta_{12})$$

Similarly, in the case of $d_{21}$, the channel difference of a diagonal channel with respect to R is represented by Numeral 154.

[Numeral 154]

$$R \cdot \left(1 - \cos(\Delta\theta_{21})\right) \approx R \cdot \left(\frac{(\Delta\theta_{21})^2}{2}\right) = R \cdot \left(\frac{1}{2}(\frac{d-d_o}{R})^2\right) = \frac{(d-d_o)^2}{2R} = \frac{d^2 + d_o^{\;2} - 2dd_o}{2R} \quad \because \frac{d-d_o}{R} = \tan(\Delta\theta_{21}) \approx (\Delta\theta_{21})$$

Similarly, in the case of $d_{22}$, the channel difference of a diagonal channel with respect to R is represented by

Numeral 155.

[Numeral 155]

$$R \cdot \left(1 - \cos(\Delta\theta_{22})\right) \approx R \cdot \left(\frac{(\Delta\theta_{22})^2}{2}\right) = R \cdot \left(\frac{1}{2}(\frac{d_o}{R})^2\right) = \frac{d_o^2}{2R} \quad \because \frac{d_o}{R} = \tan(\Delta\theta_{22}) \approx (\Delta\theta_{22})$$

It is assumed that the phase rotation obtained based on the channel difference is represented by Numeral 156.

[Numeral 156]

$$\alpha = 2\pi\left(\frac{d^2}{2R}\right)/\gamma = \frac{\pi}{\gamma} \cdot \frac{d^2}{R}, \quad \xi = 2\pi\left(\frac{2 \cdot d \cdot d_o}{2R}\right)/\gamma = \frac{\pi}{\gamma} \cdot \frac{2 \cdot d \cdot d_o}{R}$$

In this case, the channel matrix H normalized by the channel $d_{11}$ is represented by Numeral 157.

[Numeral 157]

$$H = \begin{bmatrix} 1 & e^{-j\alpha} \cdot e^{j\xi} \\ e^{-j\alpha} \cdot e^{-j\xi} & 1 \end{bmatrix}$$

Thus, Numeral 158 is satisfied.

[Numeral 158]

$$\Omega = H^H \cdot H = \begin{bmatrix} 1 & e^{j\alpha} \cdot e^{j\xi} \\ e^{j\alpha} \cdot e^{-j\xi} & 1 \end{bmatrix} \cdot \begin{bmatrix} 1 & e^{-j\alpha} \cdot e^{j\xi} \\ e^{-j\alpha} \cdot e^{-j\xi} & 1 \end{bmatrix} = \begin{bmatrix} 2 & e^{j\xi}(e^{j\alpha} + e^{-j\alpha}) \\ e^{-j\xi}(e^{j\alpha} + e^{-j\alpha}) & 2 \end{bmatrix}$$
$$= \begin{bmatrix} 2 & 2 \cdot \cos\alpha \cdot e^{j\xi} \\ 2 \cdot \cos\alpha \cdot e^{-j\xi} & 2 \end{bmatrix}$$

From Numeral 158, Numeral 159 is derived.

[Numeral 159]

$$\begin{vmatrix} 2-\gamma & 2 \cdot \cos\alpha \cdot e^{j\xi} \\ 2 \cdot \cos\alpha \cdot e^{-j\xi} & 2-\gamma \end{vmatrix} = \gamma^2 + 4 - 4\gamma - 4\cos^2\alpha = \gamma^2 - 4\gamma - 4\sin^2\alpha = 0$$
$$\therefore \quad \gamma = 2 \pm \sqrt{4 - 4\sin^2\alpha} = 2 \pm 2\cos\alpha$$

Thus, it can be understood that even if a diamond-shaped misalignment occurs, there is no influence on the eigenvalues corresponding to the widths of the respective paths.

(Singular value decomposition H = U·Λ$^{1/2}$·V$^H$)

The singular value decomposition of the channel matrix H is represented by Numeral 160.

[Numeral 160]

$$
H = U \cdot \Lambda^{1/2} \cdot V^H = \begin{bmatrix} \dfrac{-e^{-j\frac{\alpha}{2}}}{\sqrt{2}} & \dfrac{j \cdot e^{-j\frac{\alpha}{2}}}{\sqrt{2}} \\ \dfrac{-e^{-j\frac{\alpha}{2}} \cdot e^{-j\xi}}{\sqrt{2}} & \dfrac{-j \cdot e^{-j\frac{\alpha}{2}} \cdot e^{-j\xi}}{\sqrt{2}} \end{bmatrix} \cdot \begin{bmatrix} (e^{j\frac{\alpha}{2}} + e^{-j\frac{\alpha}{2}}) & 0 \\ 0 & -j(e^{j\frac{\alpha}{2}} - e^{-j\frac{\alpha}{2}}) \end{bmatrix} \cdot \begin{bmatrix} \dfrac{-1}{\sqrt{2}} & \dfrac{-e^{j\xi}}{\sqrt{2}} \\ \dfrac{1}{\sqrt{2}} & \dfrac{-e^{j\xi}}{\sqrt{2}} \end{bmatrix}
$$

$$
= \begin{bmatrix} \dfrac{-(1+e^{-j\alpha})}{\sqrt{2}} & \dfrac{(1-e^{-j\alpha})}{\sqrt{2}} \\ \dfrac{-(1+e^{-j\alpha}) \cdot e^{-j\xi}}{\sqrt{2}} & \dfrac{-(1-e^{-j\alpha}) \cdot e^{-j\xi}}{\sqrt{2}} \end{bmatrix} \cdot \begin{bmatrix} \dfrac{-1}{\sqrt{2}} & \dfrac{-e^{j\xi}}{\sqrt{2}} \\ \dfrac{1}{\sqrt{2}} & \dfrac{-e^{j\xi}}{\sqrt{2}} \end{bmatrix} = \begin{bmatrix} 1 & e^{-j\alpha} \cdot e^{j\xi} \\ e^{-j\alpha} \cdot e^{-j\xi} & 1 \end{bmatrix}
$$

Further, the U and V are represented by Numeral 161.

[Numeral 161]

$$
U^H \cdot U = \begin{bmatrix} \dfrac{-e^{j\frac{\alpha}{2}}}{\sqrt{2}} & \dfrac{-e^{j\frac{\alpha}{2}} \cdot e^{j\xi}}{\sqrt{2}} \\ \dfrac{-j \cdot e^{j\frac{\alpha}{2}}}{\sqrt{2}} & \dfrac{j \cdot e^{j\frac{\alpha}{2}} \cdot e^{j\xi}}{\sqrt{2}} \end{bmatrix} \cdot \begin{bmatrix} \dfrac{-e^{-j\frac{\alpha}{2}}}{\sqrt{2}} & \dfrac{j \cdot e^{-j\frac{\alpha}{2}}}{\sqrt{2}} \\ \dfrac{-e^{-j\frac{\alpha}{2}} \cdot e^{-j\xi}}{\sqrt{2}} & \dfrac{-j \cdot e^{-j\frac{\alpha}{2}} \cdot e^{-j\xi}}{\sqrt{2}} \end{bmatrix} = \begin{bmatrix} 1 & 0 \\ 0 & 1 \end{bmatrix}
$$

$$
V \cdot V^H = \begin{bmatrix} \dfrac{-1}{\sqrt{2}} & \dfrac{1}{\sqrt{2}} \\ \dfrac{-e^{-j\xi}}{\sqrt{2}} & \dfrac{-e^{-j\xi}}{\sqrt{2}} \end{bmatrix} \cdot \begin{bmatrix} \dfrac{-1}{\sqrt{2}} & \dfrac{-e^{j\xi}}{\sqrt{2}} \\ \dfrac{1}{\sqrt{2}} & \dfrac{-e^{j\xi}}{\sqrt{2}} \end{bmatrix} = \begin{bmatrix} 1 & 0 \\ 0 & 1 \end{bmatrix}
$$

Thus, it can be understood that the singular value decomposition of H is achieved by the unitary matrixes of U and V.

That is, even if a diamond-shaped misalignment occurs, the eigenvalues corresponding to the widths of the respective paths before generation of the misalignment can be kept, and the singular value decomposition of the channel matrix H is achieved by the unitary matrixes of U and V. It goes without saying that the same configuration as above can be obtained even if the phase shift Φ is caused due to a fluctuation of a transmission antenna position.

Next, how the proposed configuration in which the matrix calculation is performed only on the reception end operates in the case where such a diamond-shaped misalignment occurs will be described.

[Case where matrix calculation is performed only on reception side and where antenna arrangement between transmission/reception sides is formed in diamond shape]

A case where a diamond shape misalignment occurs in the antenna arrangement direction between transmission and reception antennas in the configuration according to the present invention in which the matrix calculation is performed only on the reception end will be described. Here, the diamond-shaped channel matrix H obtained in the above examination is used without modification.

[Singular value orthogonal matrix $\Lambda^{1/2}$]

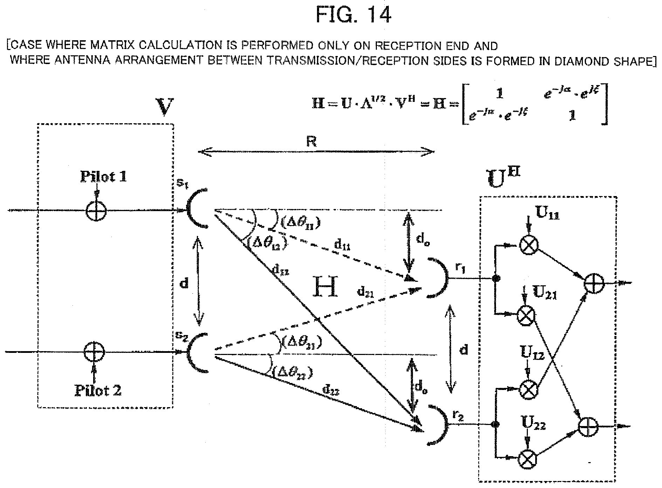

From FIG. 14, considering an inter-antenna position where $e^{j\alpha}=j$ is satisfied, singular value orthogonal matrix $\Lambda^{1/2}$ is represented by Numeral 162.

[Numeral 162]

$$\Lambda^{1/2} = \begin{bmatrix} \sqrt{\lambda_1} & 0 \\ 0 & \sqrt{\lambda_2} \end{bmatrix} = \begin{bmatrix} \sqrt{2+2\cos\alpha} & 0 \\ 0 & \sqrt{2-2\cos\alpha} \end{bmatrix} = \begin{bmatrix} \sqrt{2} & 0 \\ 0 & \sqrt{2} \end{bmatrix}$$

[Channel matrix H]

Further, the channel matrix H is represented by Numeral 163.

[Numeral 163]

$$\mathbf{H} = \begin{bmatrix} 1 & -j\cdot e^{j\xi} \\ -j\cdot e^{-j\xi} & 1 \end{bmatrix} = \mathbf{U}\cdot\Lambda^{1/2}\cdot\mathbf{V}^H = \mathbf{U}\cdot\begin{bmatrix} \sqrt{2} & 0 \\ 0 & \sqrt{2} \end{bmatrix}\cdot\begin{bmatrix} 1 & 0 \\ 0 & 1 \end{bmatrix} \quad \text{where;} \quad \alpha = \frac{\pi}{2}, \xi = \frac{2\pi\cdot d\cdot d_o}{\gamma R}$$

$$\therefore \ \mathbf{U} = \begin{bmatrix} U_{11} & U_{12} \\ U_{21} & U_{22} \end{bmatrix} = \begin{bmatrix} 1 & -j\cdot e^{j\xi} \\ -j\cdot e^{-j\xi} & 1 \end{bmatrix}\cdot\begin{bmatrix} 1/\sqrt{2} & 0 \\ 0 & 1/\sqrt{2} \end{bmatrix} = \begin{bmatrix} 1/\sqrt{2} & -j\cdot e^{j\xi}/\sqrt{2} \\ -j\cdot e^{-j\xi}/\sqrt{2} & 1/\sqrt{2} \end{bmatrix}$$

$$\therefore \ \mathbf{U}^H = \begin{bmatrix} 1/\sqrt{2} & j\cdot e^{j\xi}/\sqrt{2} \\ j\cdot e^{-j\xi}/\sqrt{2} & 1/\sqrt{2} \end{bmatrix} \quad \text{where;} \quad \alpha = \frac{\pi}{\gamma}\cdot\frac{d^2}{R} = \frac{\pi}{2}, \ \xi = \frac{2\pi\cdot d\cdot d_o}{\gamma R}$$

Here, Numeral 164 is satisfied.

[Numeral 164]

$$\mathbf{U}^H\cdot\mathbf{U} = \begin{bmatrix} 1/\sqrt{2} & j\cdot e^{j\xi}/\sqrt{2} \\ j\cdot e^{-j\xi}/\sqrt{2} & 1/\sqrt{2} \end{bmatrix}\cdot\begin{bmatrix} 1/\sqrt{2} & -j\cdot e^{j\xi}/\sqrt{2} \\ -j\cdot e^{-j\xi}/\sqrt{2} & 1/\sqrt{2} \end{bmatrix} = \begin{bmatrix} 1 & 0 \\ 0 & 1 \end{bmatrix}$$

Thus, even if a diamond-shaped misalignment occurs, the configuration in which the unitary matrix calculation is performed only on the reception side is effected. Note that even if phase shift $\Phi$ or $\phi$ caused by the local oscillators or due to antenna displacement, the same configuration as above can be obtained.

[Case where antenna arrangement shape between transmission/reception sides is further generalized]

A case where the antenna arrangement shape between the transmission and reception sides is further generalized will be described. This is an application example, including a wireless LAN or the like constructed in a line-of-sight communication system, having high flexibility of installation position.

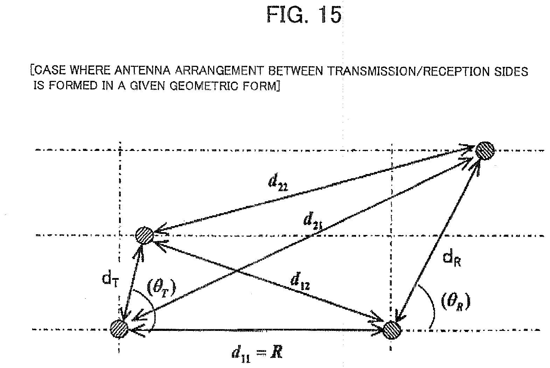

From FIG. 15, $d_{11}$, $d_{12}$, $d_{21}$, and $d_{22}$ are represented by Numeral 165.

[Numeral 165]

$$d_{11} = R$$

$$d_{12} = \left\{ (R - d_T\cos(\theta_T))^2 + (d_T\sin(\theta_T))^2 \right\}^{1/2} \approx (R - d_T\cos(\theta_T))\left( 1 + \frac{(d_T\sin(\theta_T))^2}{2(R - d_T\cos(\theta_T))^2} \right)$$

$$\approx R - d_T\cos(\theta_T) + \frac{(d_T\sin(\theta_T))^2}{2(R - d_T\cos(\theta_T))} \approx R - d_T\cos(\theta_T) + \frac{(d_T\sin(\theta_T))^2}{2R}$$

$$d_{21} = \left\{ (R + d_R\cos(\theta_R))^2 + (d_R\sin(\theta_R))^2 \right\}^{1/2} \approx (R + d_R\cos(\theta_R))\left( 1 + \frac{(d_R\sin(\theta_R))^2}{2(R + d_R\cos(\theta_R))^2} \right)$$

$$\approx R + d_R\cos(\theta_R) + \frac{(d_R\sin(\theta_R))^2}{2(R + d_R\cos(\theta_R))} \approx R + d_R\cos(\theta_R) + \frac{(d_R\sin(\theta_R))^2}{2R}$$

$$d_{22} = \left\{ (R - d_T\cos(\theta_T) + d_R\cos(\theta_R))^2 + (d_R\sin(\theta_R) - d_T\sin(\theta_T))^2 \right\}^{1/2}$$

$$\approx (R - d_T\cos(\theta_T) + d_R\cos(\theta_R))\left( 1 + \frac{(d_R\sin(\theta_R) - d_T\sin(\theta_T))^2}{2(R - d_T\cos(\theta_T) + d_R\cos(\theta_R))^2} \right)$$

$$\approx R - d_T\cos(\theta_T) + d_R\cos(\theta_R) + \frac{(d_R\sin(\theta_R) - d_T\sin(\theta_T))^2}{2(R - d_T\cos(\theta_T) + d_R\cos(\theta_R))}$$

$$\approx R - d_T\cos(\theta_T) + d_R\cos(\theta_R) + \frac{(d_R\sin(\theta_R) - d_T\sin(\theta_T))^2}{2R}$$

Further, from FIG. 15, the channel matrix H focusing only on a phase difference between reception antennas is represented by Numeral 166.

[Numeral 166]

$$H = \begin{bmatrix} 1 & e^{j\frac{2\pi}{\gamma}(d_{12} - d_{11})} \\ e^{j\frac{2\pi}{\gamma}(d_{21} - d_{22})} & 1 \end{bmatrix}$$

From the channel matrix H of Numeral 166, Numeral 167 is satisfied.

[Numeral 167]

$$\Omega = \mathbf{H}^H \cdot \mathbf{H} = \begin{bmatrix} 1 & e^{j\frac{2\pi}{\gamma}(d_{21}-d_{22})} \\ e^{j\frac{2\pi}{\gamma}(d_{12}-d_{11})} & 1 \end{bmatrix} \cdot \begin{bmatrix} 1 & e^{j\frac{2\pi}{\gamma}(d_{12}-d_{11})} \\ e^{j\frac{2\pi}{\gamma}(d_{21}-d_{22})} & 1 \end{bmatrix}$$

$$= \begin{bmatrix} 2 & e^{j\frac{2\pi}{\gamma}(d_{12}-d_{11})} + e^{j\frac{2\pi}{\gamma}(d_{21}-d_{22})} \\ e^{j\frac{2\pi}{\gamma}(d_{12}-d_{11})} + e^{-j\frac{2\pi}{\gamma}(d_{21}-d_{22})} & 2 \end{bmatrix} \Rightarrow \begin{bmatrix} 2 & 0 \\ 0 & 2 \end{bmatrix}$$

Thus, in order for the eigenvalue to be multiplicity condition, it is only necessary for the first term, i.e., Numeral 168 and the second term, i.e., Numeral 169 to have inversed phases with each other.

[Numeral 168]

$$\frac{2\pi}{\gamma}\left(d_{12}-d_{11}\right)$$

[Numeral 169]

$$-\frac{2\pi}{\gamma}\left(d_{21}-d_{22}\right)$$

That is, it is only necessary that Numeral 170 be satisfied.

[Numeral 170]

$$\frac{2\pi}{\gamma}\left(d_{12}-d_{11}\right) = \frac{2\pi}{\gamma}\left(d_{21}-d_{22}\right) \mod 2\pi$$

Alternatively, assuming that the difference between the first and second terms is $\pi$, it is only necessary that Numeral 171 be satisfied.

[Numeral 171]

$$\frac{2\pi}{\gamma}\left(d_{12}-d_{11}\right)+\frac{2\pi}{\gamma}\left(d_{21}-d_{22}\right) = \pi \quad \mathrm{mod}\, 2\pi$$

Thus, Numeral 172 is obtained.

[Numeral 172]

$$\therefore \quad \frac{2\pi}{\gamma}\left|d_{12}-d_{11}+d_{21}-d_{22}\right| = \pi\left(2n+1\right) \quad n \in Z^{+}$$

$$\therefore \quad \left|d_{12}-d_{11}+d_{21}-d_{22}\right| = \frac{\gamma}{2}\left(2n+1\right) \quad n \in Z^{+}$$

When $d_{11}$ to $d_{22}$ are assigned to the obtained relationship, Numeral 173 is satisfied and thereby Numeral 174 is obtained.

[Numeral 173]

$$\left|d_{12}-d_{11}+d_{21}-d_{22}\right| = \left|-d_T\cos(\theta_T)+\frac{\left(d_T\sin(\theta_T)\right)^2}{2R}+\frac{\left(d_R\sin(\theta_R)\right)^2}{2R}+d_T\cos(\theta_T)-\frac{\left(d_R\sin(\theta_R)-d_T\sin(\theta_T)\right)^2}{2R}\right|$$

$$=\left|\frac{\left(d_T\sin(\theta_T)\right)^2}{2R}+\frac{\left(d_R\sin(\theta_R)\right)^2}{2R}+\frac{\left(d_R\sin(\theta_R)-d_T\sin(\theta_T)\right)^2}{2R}\right|$$

$$=\left|\frac{-2\cdot d_T\cdot d_R\cdot\sin(\theta_T)\cdot\sin(\theta_R)}{2R}\right| = \frac{d_T\cdot d_R\cdot\sin(\theta_T)\cdot\sin(\theta_R)}{R}$$

[Numeral 174]

$$\frac{d_T\cdot d_R\cdot\sin(\theta_T)\cdot\sin(\theta_R)}{R} = \frac{\gamma}{2}\left(2n+1\right) \quad n \in Z^{+}$$

Thus, as a condition that the eigenvalue becomes multiplicity condition, Numeral 175 is obtained.

[Numeral 175]

$$\therefore \quad d_T \cdot d_R = \frac{R}{\sin(\theta_T) \cdot \sin(\theta_R)} \cdot \gamma \cdot \left(n + \frac{1}{2}\right) \quad n \in Z^+$$

Various antenna configuration can be possible with the paths having the same width as long as the above condition is satisfied. It should be noted that definitions of the R (second R) used here and abovementioned R (first R) are slightly different from each other. That is, the transmission and reception antennas are not arranged in parallel to each other in FIG. 15, so that the antenna separation length between the transmission and reception sides is set to the second R, which corresponds to $d_{11}$, between transmission and reception antenna elements located on the bottom side (see [Numeral 165]). On the other hand, in other configurations, the transmission and reception antennas are arranged in parallel to each other, the antenna separation length between the transmission and reception sides is set to the first R.

In the above description, the pilot signals are used as a detectionmeans fordetectinga fluctuationof an antenna position or a fluctuation of channels caused by an external factors or a phase variation caused due to use of the local oscillators provided independently for respective antennas. However, the above fluctuations can be detected by a configuration not using the pilot signals. For example, a method that uses data for conveying information may be employed. Further, although not shown, a method that estimates a phase variation using a determination result after equalization or method that estimates a phase variation by re-encoding a signal after error correction may be employed. In the following, the method that detects the above fluctuations without use of the pilot signals will be described taking a case where two antennas are used as an example.

Here, description is made using the channel matrix described above, i.e., channel matrix represented by Numeral 176.

[Numeral 176]

$$\mathbf{H} = \begin{bmatrix} 1 & -j \cdot e^{j\Phi} \\ -j \cdot e^{j\phi} & 1 \cdot e^{j(\Phi+\phi)} \end{bmatrix}$$

First, it is assumed that transmission and reception signal vectors are represented by Numeral 177.

[Numeral 177]

$$\mathbf{S} = \begin{bmatrix} s_1 \\ s_2 \end{bmatrix}, \quad \mathbf{Y} = \begin{bmatrix} y_1 \\ y_2 \end{bmatrix}$$

In this case, Numeral 178 can be obtained.

[Numeral 178]

$$Y = \begin{bmatrix} y_1 \\ y_2 \end{bmatrix} = H \cdot S = \begin{bmatrix} 1 & -j \cdot e^{j\Phi} \\ -j \cdot e^{j\phi} & 1 \cdot e^{j(\Phi+\phi)} \end{bmatrix} \cdot \begin{bmatrix} s_1 \\ s_2 \end{bmatrix}$$

Assuming that $s_1$ and $s_2$ in the above formula have been obtained properly from a determination result after equalization or signal reproduction after error correction, Numeral 180 is obtained from Numeral 179.

[Numeral 179]

$$y_1 = s_1 - j \cdot e^{j\Phi} \cdot s_2$$

[Numeral 180]

$$e^{j\Phi} = \frac{s_1 - y_1}{j \cdot s_2}$$

From this, $\Phi$ can be detected.
Then, the detected $\phi$ is used. Before that, from Numeral 178, Numeral 181 is satisfied.

[numeral 181]

$$y_2 = -j \cdot e^{j\phi} \cdot s_1 + e^{j(\Phi+\phi)} \cdot s_2$$

Thus , Numeral 182 is obtained and thereby $\phi$ can be detected.

[numeral 182]

$$e^{j\phi} = \frac{y_2}{e^{j\Phi} \cdot s_2 - j \cdot s_1}$$

As described above, not by using pilot signal, but by using data conveying information, it is possible to detect a fluctuation in the antennas or channels caused by an external factors or a phase variation caused due to use of the local oscillators provided independently for respective antennas. In the above example, operation after start-up processing has been described. That is, once the start-up processing is completed, data flows constantly, so that the detection of a phase variation is constantly executed.

Based on the above results, an example in which the method of the present invention is applied to channels other than a microwave communication apparatus will be described below.

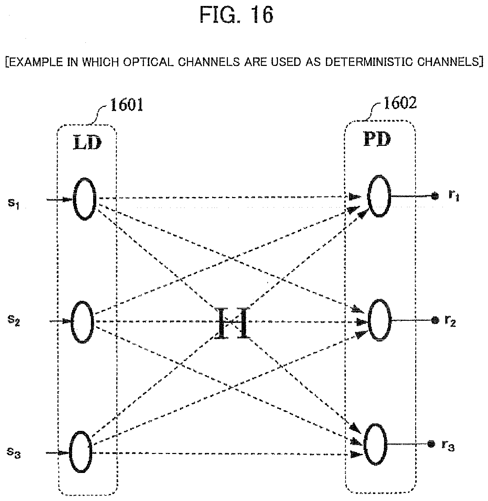

FIG. 16 is an example in which optical channels are used as deterministic channels. In FIG. 16, as an optical antenna, a laser diode (LD) 1601 and a photodetector (PD) 1602 are used on the transmission side and reception side, respectively. Also with this configuration, the line-of-sight MIMO can be realized as in the case of the line-of-sight MIMO using electrical waves.

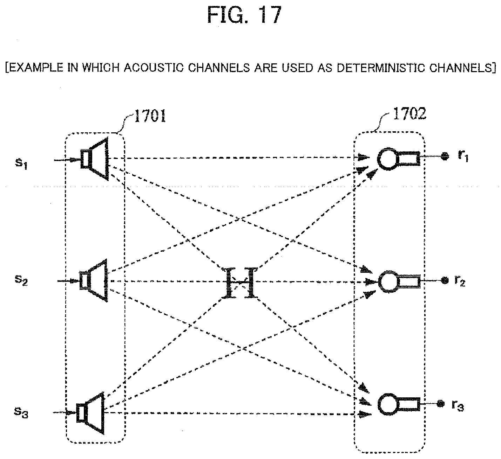

FIG. 17 is an example in which acousto-optic channels are used as deterministic channels. In FIG. 17, an ultrasonic oscillator 1701 and an ultrasonic microphone 1702 are used on the transmission side and reception side, respectively. Also with this configuration, the line-of-sight MIMO can be realized as in the case of the line-of-sight MIMO using electrical waves.

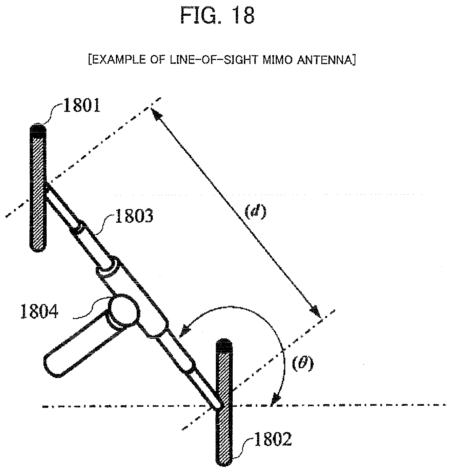

FIG. 18 is an example of a MIMO antenna used in line-of-sight channels such as a simple radio apparatus (including a wireless LAN) used as deterministic channels. Unlike a fixed point microwave communication system having a regular structure, the simple radio apparatus has line-of-sight channels having a complicated structure. It is possible to increase communication capacity in the line-of-sight MIMO as long as the condition of Numeral 175 is satisfied regardless of the type of a geometric form of the line-of-sight channels.

The MIMO antenna of FIG. 18 has a configuration in which antenna separation length (d) between antenna elements 1801 and 1802 can be freely varied by a connection bar 1803. Further, angle ($\theta$) formed between the antenna elements 1801 and 1802 can be freely controlled by a hinge 1804.

The derived Numeral 175 represents that it is possible to achieve the maximum communication capacity by controlling the antenna separation lengths $d_T$, $d_R$ and angles $\theta_T$, $\theta_R$. It follows that, by controlling the antenna separation length (d) and angle ($\theta$) in the MIMO antenna, it is possible to achieve the maximum communication capacity regardless of the type of a geometric form of the line-of-sight channels.

Another exemplary embodiment of the present invention will be described below.

The MIMO communication system according to the present exemplary embodiment includes a plurality of channels. Further, the system includes a channel matrix calculation processing section on a transmission or reception side or both of the transmission and reception sides . The channel matrix calculation processing section updates an orthogonal channel formation matrix in accordance with a fluctuation of a transmission antenna position (e.g., a transmission antenna, light-emitting device, speaker, and the like used in electric wave propagation) or reception antenna (e.g., a reception antenna, light-receiving device, microphone, and the like used in electric wave propagation) or a fluctuation of the channels. With this configuration, it is possible to absorb a fluctuation of a transmission antenna position or reception antenna position or a fluctuation of the channels, thereby providing a MIMO communication system capable of achieving the maximum communication capacity.

Further, for formation of virtual orthogonal channels, a configuration may be adopted in which geometric parameters of the channels are set so that the eigenvalue of the channel matrix becomes multiplicity condition, and calculation of a unitary matrix constituted based on an eigenvector obtained from the eigenvalue or an eigenvector obtained from the linear sum of eigenvector is performed on one of the transmission side or reception side. This enables flexible system design and can realize a configuration in which there is no need to use an inverse channel for exchanging the feedback information and a configuration in which only transmission processing is performed.

Further, the MIMO communication system may be a fixed point microwave communication system using a plurality of antennas and constituted by using local oscillators provided independently for respective antennas on one or both of the transmission and reception sides . With this configuration, it is possible to solve the problem of the necessity of achievement of carrier synchronization between antennas that imposes restriction on construction of the fixed point microwave communication system.

Further, the MIMO communication system may include a means for detecting a fluctuation of a transmission antenna position or reception antenna position or a fluctuation of the channels and use a detection result from the means to update a virtual orthogonal channel formation matrix. With this configuration, a problem-free MIMO communication system with satisfactory installation condition and rigid structure can be provided.

Further, matrix calculation processing for formation of the virtual orthogonal channels may be performed only on the reception side. With this configuration, a MIMO communication system where there is no need to use an inverse channel for periodically and frequently exchanging the feedback information for transmission side matrix calculation processing can be provided.

Further, the MIMO communication system may include a means for transmitting pilot signals from the transmission side to reception side. In this case, a fluctuation of a transmission antenna position or reception antenna position or a fluctuation of the channels is detected by the pilot signals and a virtual orthogonal channel formation matrix is updated based on a result of the detection. With this configuration, a problem-free MIMO communication system with satisfactory installation condition and rigid structure can be provided in simple configuration.

Further, the MIMO communication system may include a means for transmitting pilot signals of respective antennas from the transmission side to reception side and, based on the pilot signals , perform matrix calculation processing for formation of the virtual orthogonal channels only on the reception side. With this simple processing, a MIMO communication system where there is no need to use an inverse channel for periodically and frequently exchanging the feedback information for transmission side matrix calculation processing can be provided.

Further, the pilot signals to be transmitted from the transmission side to reception side may be generated before processing performed by the local oscillators. With this configuration, phase noise between local oscillators generated on the transmission side can be detected on the reception end, and the generated phase noise can be compensated for by updating the matrix.

Further, the detection of the pilot signals that have been transmitted from the transmission side to reception side may be performed after processing performed by the local oscillators on the reception side. With this configuration, phase noise between local oscillators generated on the reception side can be detected on the reception end, and the generated phase noise can be compensated for by updating the matrix.

Further, the pilot signals transmitted from the transmission side to reception side may be orthogonal between transmission antennas . With this configuration, phase noise between the local oscillators and a displacement in the highly sensitive antenna direction caused due to weather condition can be detected by a simple correlator, and the detected phase noise or displacement can be compensated for by updating the matrix.

Further, the line-of-sight channels may be used as optical channels or acoustic channels , as well as electrical wave channels . Also in this case, the MIMO communication system can be provided.

Further, one or both of the antenna separation length between a plurality of transmission antennas or a plurality of reception antennas and direction of a plurality of transmission antennas or a plurality of reception antennas may be made changeable . With this configuration, it is possible to provide a MIMO communication system where the maximum communication capacity can always be achieved by controlling one or both of the antenna separation length between the transmission antennas or reception antennas and axial direction of the transmission antennas or reception antennas, regardless of the type of a geometric form of the line-of-sight channels.

In the present invention, the abovementioned effects need not be achieved simultaneously but at least one of the effects may be achieved.

While the invention has been particularly shown and described with reference to the exemplary embodiments and examples thereof, the invention is not limited to these exemplary embodiments and examples. It will be understood by those of ordinary skill in the art that various changes in form and details may be made therein without departing from the scope of the present invention as defined by the claims.

This present application is based upon and claims the benefit of priority from Japanese patent application No. 2006-312277, filed on November 17, 2006.

## Claims

1. A line-of-sight Multiple-Input Multiple-Output, MIMO, communication system including a plurality of channels and being used for deterministic channels whose eigenvalues do not change, comprising:

   a channel matrix calculation processing section on a transmission or reception side or both of the transmission and reception sides, wherein
   the channel matrix calculation processing section updates an orthogonal channel formation matrix in accordance with a fluctuation of a transmission antenna position or reception antenna position or a fluctuation of the channels, the orthogonal channel formation matrix representing a result of a matrix calculation process for forming a geometric position of channels and orthogonal channels corresponding to the geometrical positional relationship between transmission and reception antennas, the channels being arranged in such a way that a plurality of eigenvalues of the deterministic channels are in a multiplicity condition.

2. The MIMO communication system according to claim 1, wherein,
   for formation of virtual orthogonal channels, geometric parameters of the channels are set so that the eigenvalue of the channel matrix become multiplicity condition, and calculation of a unitary matrix constituted based on an eigenvector obtained from the eigenvalue or an eigenvector obtained from the linear sum of eigenvector is performed on one of the transmission side or reception side.

3. The MIMO communication system according to claim 1, wherein
   the communication system is a fixed point microwave communication system using a plurality of antennas and is constituted by using local oscillators provided independently for respective antennas on one or both of the transmission and reception sides.

4. The MIMO communication system according to claim 3, wherein
the matrix calculation processing for formation of the virtual orthogonal channels is performed only on the reception side.

5. The MIMO communication system according to claim 1, being configured to:

   detect a fluctuation of a transmission antenna position or reception antenna position or a fluctuation of the channels; and
   update, based on a result of the detection, a virtual orthogonal channel formation matrix.

6. The MIMO communication system according to claim 5, being configured to:

   transmit pilot signals from the transmission side to reception side;
   detect a fluctuation of a transmission antenna position or reception antenna position or a fluctuation of the channels by the pilot signals; and
   update a virtual orthogonal channel formation matrix based on a result of the detection.

7. The MIMO communication system according to claim 1, wherein
the plurality of channels are selected from the group of optical channels, line-of-sight radio channels, and line-of-sight acoustic channels.

8. The MIMO communication system according to claim 2, wherein
at least one of an antenna separation length of a plurality of transmission antennas, an antenna separation length of a plurality of reception antennas, axial direction of a plurality of transmission antennas, and axial direction of a plurality of reception antennas is made changeable.

9. A Multiple-Input Multiple-Output, MIMO, communication method for use in a line-of-sight communication system including a plurality of channels and being used for deterministic channels whose eigenvalues do not change, comprising:

   a step of performing channel matrix calculation processing on a transmission or reception side or both of the transmission and reception sides, wherein,
   the step of performing updates an orthogonal channel formation matrix in accordance with a fluctuation of a transmission antenna position or reception antenna position or a fluctuation of the channels, the orthogonal channel formation matrix representing a result of a matrix calculation process for forming a geometric position of channels and orthogonal channels corresponding to the geometrical positional relationship between transmission and reception antennas, the channels being arranged in such a way that a plurality of eigenvalues of the deterministic channels are in a multiplicity condition.

10. The MIMO communication method according to claim 9, wherein,
for formation of virtual orthogonal channels, geometric parameters of the channels are set so that the eigenvalue of the channel matrix become multiplicity condition, and calculation of a unitary matrix constituted based on an eigenvector obtained from the eigenvalue or an eigenvector obtained from the linear sum of eigenvector is performed on one of the transmission side or reception side.

11. The MIMO communication method according to claim 9, wherein
the communication system is a fixed point microwave communication system using a plurality of antennas and is constituted by using local oscillators provided independently for respective antennas on one or both of the transmission and reception sides.

12. The MIMO communication method according to claim 11, wherein
the matrix calculation processing for formation of the virtual orthogonal channels is performed only on the reception side.

13. The MIMO communication method according to claim 9, further comprising:

   detecting a fluctuation of a transmission antenna position or reception antenna position or a fluctuation of the channels; and

updating, based on a result of the detection, a virtual orthogonal channel formation matrix.

14. The MIMO communication method according to claim 13, further comprising:

transmitting pilot signals from the transmission side to reception side;
detecting a fluctuation of a transmission antenna position or reception antenna position or a fluctuation of the channels by the pilot signals; and
updating a virtual orthogonal channel formation matrix based on a result of the detection.

15. The MIMO communication method according to claim 9, wherein
the plurality of channels are selected from the group of optical channels, line-of-sight radio channels, and line-of-sight acoustic channels.

16. The MIMO communication method according to claim 10, wherein
at least one of an antenna separation length of a plurality of transmission antennas, an antenna separation length of a plurality of reception antennas, axial direction of a plurality of transmission antennas, and axial direction of a plurality of reception antennas is made changeable.


**Patentansprüche**

1. LOS- (Line-of-Sight, Sichtverbindung) MIMO- (Multiple-Input Multiple-Output) Kommunikationssystem mit mehreren Kanälen, das für deterministische Kanäle verwendet wird, deren Eigenwerte sich nicht ändern, mit:

einem Kanalmatrixberechnungsverarbeitungsabschnitt auf einer Sende- oder auf einer Empfangsseite oder sowohl auf der Sende- als auch auf der Empfangsseite, wobei
der Kanalmatrixberechnungsverarbeitungsabschnitt eine Orthogonalkanalerzeugungsmatrix gemäß einer Fluktuation einer Sendeantennenposition oder einer Empfangsantennenposition oder einer Fluktuation der Kanäle aktualisiert, wobei die Orthogonalkanalerzeugungsmatrix ein Ergebnis eines Matrixberechnungsprozesses zum Bilden einer geometrischen Position von Kanälen und von Orthogonalkanälen entsprechend der geometrischen Positionsbeziehung zwischen Sende- und Empfangsantennen darstellt, wobei die Kanäle derart angeordnet sind, dass mehrere Eigenwerte der deterministischen Kanäle in einem Vielfachheitszustand vorliegen.

2. MIMO-Kommunikationssystem nach Anspruch 1, wobei
zum Erzeugen virtueller Orthogonalkanäle geometrische Parameter der Kanäle derart festgelegt werden, dass der Eigenwert der Kanalmatrix einen Vielfachheitszustand annimmt, und wobei die Berechnung einer unitären Matrix, die basierend auf einem Eigenvektor gebildet wird, der von dem Eigenwert erhalten wird, oder basierend auf einem Eigenvektor, der von der linearen Summe des Eigenvektors erhalten wird, entweder auf der Sendeseite oder auf der Empfangsseite ausgeführt wird.

3. MIMO-Kommunikationssystem nach Anspruch 1, wobei
das Kommunikationssystem ein Mikrowellenkommunikationssystem mit festem Bezugspunkt ist, das mehrere Antennen verwendet und unter Verwendung lokaler Oszillatoren gebildet wird, die für jeweilige Antennen auf der Sende- und/oder auf der Empfangsseite unabhängig bereitgestellt werden.

4. MIMO-Kommunikationssystem nach Anspruch 3, wobei
die Matrixberechnungsverarbeitung zum Erzeugen der virtuellen Orthogonalkanäle nur auf der Empfangsseite ausgeführt wird.

5. MIMO-Kommunikationssystem nach Anspruch 1, das dafür konfiguriert ist:

eine Fluktuation einer Sendeantennenposition oder einer Empfangsantennenposition oder eine Fluktuation der Kanäle zu erfassen; und
basierend auf einem Ergebnis der Erfassung eine virtuelle Orthogonalkanalerzeugungsmatrix zu aktualisieren.

6. MIMO-Kommunikationssystem nach Anspruch 5, das dafür konfiguriert ist:

Pilotsignale von der Sendeseite zur Empfangsseite zu übertragen;

eine Fluktuation einer Sendeantennenposition oder einer Empfangsantennenposition oder eine Fluktuation der Kanäle durch die Pilotsignale zu erfassen; und
eine virtuelle Orthogonalkanalerzeugungsmatrix basierend auf einem Ergebnis der Erfassung zu aktualisieren.

**7.** MIMO-Kommunikationssystem nach Anspruch 1, wobei
die mehreren Kanäle ausgewählt sind aus der Gruppe bestehend aus optischen Kanälen, LOS-Funkkanälen und LOS-Akustikkanälen.

**8.** MIMO-Kommunikationssystem nach Anspruch 2, wobei
mindestens ein Parameter unter einem Antennenabstand mehrerer Sendeantennen, einem Antennenabstand mehrerer Empfangsantennen, einer axialen Richtung mehrerer Sendeantennen und einer axialen Richtung mehrerer Empfangsantennen änderbar ist.

**9.** MIMO-Kommunikationsverfahren zur Verwendung in einem LOS-Kommunikationssystem, das mehrere Kanäle aufweist und für deterministische Kanäle verwendet wird, deren Eigenwerte sich nicht ändern, mit:

einem Schritt zum Ausführen einer Kanalmatrixberechnungsverarbeitung auf einer Sende- oder Empfangsseite oder sowohl auf der Sende- als auch auf der Empfangsseite, wobei
im Ausführungsschritt eine Orthogonalkanalerzeugungsmatrix gemäß einer Fluktuation einer Sendeantennenposition oder einer Empfangsantennenposition oder einer Fluktuation der Kanäle aktualisiert wird, wobei die Orthogonalkanalerzeugungsmatrix ein Ergebnis eines Matrixberechnungsprozesses zum Erzeugen einer geometrischen Position von Kanälen und von Orthogonalkanälen entsprechend der geometrischen Positionsbeziehung zwischen Sende- und Empfangsantennen darstellt, wobei die Kanäle derart angeordnet sind, dass mehrere Eigenwerte der deterministischen Kanäle in einem Vielfachheitszustand vorliegen.

**10.** MIMO-Kommunikationsverfahren nach Anspruch 9, wobei
zum Erzeugen virtueller Orthogonalkanäle geometrische Parameter der Kanäle derart eingestellt werden, dass der Eigenwert der Kanalmatrix einen Vielfachheitszustand aufweist, und wobei eine Berechnung einer unitären Matrix, die basierend auf einem Eigenvektor gebildet wird, der von dem Eigenwert erhalten wird, oder basierend auf einem Eigenvektor, der von der linearen Summe des Eigenvektors erhalten wird, auf der Sendeseite oder auf der Empfangsseite ausgeführt wird.

**11.** MIMO-Kommunikationsverfahren nach Anspruch 9, wobei
das Kommunikationssystem ein Mikrowellenkommunikationssystem mit festem Bezugspunkt ist, das mehrere Antennen verwendet, und unter Verwendung lokaler Oszillatoren gebildet wird, die für jeweilige Antennen auf der Sende- und/oder der Empfangsseite unabhängig bereitgestellt werden.

**12.** MIMO-Kommunikationsverfahren nach Anspruch 11, wobei
die Matrixberechnungsverarbeitung zum Erzeugen der virtuellen Orthogonalkanäle nur auf der Empfangsseite ausgeführt wird.

**13.** MIMO-Kommunikationsverfahren nach Anspruch 9, ferner mit den Schritten:

Erfassen einer Fluktuation einer Sendeantennenposition oder einer Empfangsantennenposition oder einer Fluktuation der Kanäle; und
Aktualisieren einer virtuellen Orthogonalkanalerzeugungsmatrix basierend auf einem Ergebnis der Erfassung.

**14.** MIMO-Kommunikationsverfahren nach Anspruch 13, ferner mit den Schritten:

Übertragen von Pilotsignalen von der Sendeseite zur Empfangsseite;
Erfassen einer Fluktuation einer Sendeantennenposition oder einer Empfangsantennenposition oder einer Fluktuation der Kanäle durch die Pilotsignale; und
Aktualisieren einer virtuellen Orthogonalkanalerzeugungsmatrix basierend auf einem Ergebnis der Erfassung.

**15.** MIMO-Kommunikationsverfahren nach Anspruch 9, wobei
die mehreren Kanäle ausgewählt sind aus der Gruppe bestehend aus optischen Kanälen, LOS-Funkkanälen und LOS-Akustikkanälen.

**16.** MIMO-Kommunikationsverfahren nach Anspruch 10, wobei mindestens ein Parameter unter einem Antennenabstand mehrerer Sendeantennen, einem Antennenabstand mehrerer Empfangsantennen, einer axialen Richtung mehrerer Sendeantennen und einer axialen Richtung mehrerer Empfangsantennen änderbar ist.

**Revendications**

**1.** Système de communication à entrées multiples et sorties multiples, MIMO, en visibilité directe comprenant une pluralité de canaux et étant utilisé pour des canaux déterministes dont des valeurs propres ne changent pas, comprenant :

une section de traitement de calcul matriciel de canaux sur un côté transmission ou réception ou à la fois les côtés transmission et réception, dans lequel la section de traitement de calcul matriciel de canaux met à jour une matrice de formation de canaux orthogonaux en fonction d'une variation d'une position d'antenne de transmission ou d'une position d'antenne de réception ou d'une variation des canaux, la matrice de formation de canaux orthogonaux représentant un résultat d'un processus de calcul matriciel pour former une position géométrique de canaux et de canaux orthogonaux correspondant à la relation de position géométrique entre des antennes de transmission et de réception, les canaux étant agencés de telle manière qu'une pluralité de valeurs propres des canaux déterministes soient dans une condition de multiplicité.

**2.** Système de communication MIMO selon la revendication 1, dans lequel, pour la formation de canaux orthogonaux virtuels, des paramètres géométriques des canaux sont fixés de manière que la valeur propre de la matrice de canaux devienne une condition de multiplicité, et un calcul d'une matrice unitaire constituée sur la base d'un vecteur propre obtenu à partir de la valeur propre ou d'un vecteur propre obtenu à partir de la somme linéaire de vecteurs propres est effectué sur un du côté transmission ou du côté réception.

**3.** Système de communication MIMO selon la revendication 1, dans lequel le système de communication est un système de communication hyperfréquence à point fixe utilisant une pluralité d'antennes et est constitué en utilisant des oscillateurs locaux disposés indépendamment pour des antennes respectives sur un ou les deux des côtés transmission et réception.

**4.** Système de communication MIMO selon la revendication 3, dans lequel le traitement de calcul matriciel pour la formation de canaux orthogonaux virtuels est effectué seulement sur le côté réception.

**5.** Système de communication MIMO selon la revendication 1, étant configuré pour :

détecter une variation d'une position d'antenne de transmission ou d'une position d'antenne de réception ou d'une variation des canaux ; et mettre à jour, sur la base d'un résultat de la détection, une matrice de formation de canaux orthogonaux virtuels.

**6.** Système de communication MIMO selon la revendication 5, étant configuré pour :

transmettre des signaux pilotes du côté transmission au côté réception ; détecter une variation d'une position d'antenne de transmission ou d'une position d'antenne de réception ou d'une variation des canaux par les signaux pilotes ; et mettre à jour une matrice de formation de canaux orthogonaux virtuels sur la base d'un résultat de la détection.

**7.** Système de communication MIMO selon la revendication 1, dans lequel la pluralité de canaux est sélectionnée à partir du groupe de canaux optiques, de canaux radio en visibilité directe et de canaux acoustiques en visibilité directe.

**8.** Système de communication MIMO selon la revendication 2, dans lequel au moins une parmi une longueur de séparation d'antennes d'une pluralité d'antennes de transmission, une longueur de séparation d'antennes d'une pluralité d'antennes de réception, une direction axiale d'une pluralité d'antennes de transmission et une direction axiale d'une pluralité d'antennes de réception est rendue modifiable.

9. Procédé de communication à entrées multiples et sorties multiples, MIMO, pour l'utilisation dans un système de communication en visibilité directe comprenant une pluralité de canaux et étant utilisé pour des canaux déterministes dont des valeurs propres ne changent pas, comprenant :

une étape d'exécution d'un traitement de calcul matriciel de canaux sur un côté transmission ou réception ou à la fois les côtés transmission et réception, dans lequel,
l'étape d'exécution met à jour une matrice de formation de canaux orthogonaux en fonction d'une variation d'une position d'antenne de transmission ou d'une position d'antenne de réception ou d'une variation des canaux, la matrice de formation de canaux orthogonaux représentant un résultat d'un processus de calcul matriciel pour former une position géométrique de canaux et de canaux orthogonaux correspondant à la relation de position géométrique entre des antennes de transmission et de réception, les canaux étant agencés de telle manière qu'une pluralité de valeurs propres des canaux déterministes soient dans une condition de multiplicité.

10. Procédé de communication MIMO selon la revendication 9, dans lequel,
pour la formation de canaux orthogonaux virtuels, des paramètres géométriques des canaux sont fixés de manière que la valeur propre de la matrice de canaux devienne une condition de multiplicité, et un calcul d'une matrice unitaire constituée sur la base d'un vecteur propre obtenu à partir de la valeur propre ou d'un vecteur propre obtenu à partir de la somme linéaire de vecteurs propres est effectué sur un du côté transmission ou du côté réception.

11. Procédé de communication MIMO selon la revendication 9, dans lequel
le système de communication est un système de communication hyperfréquence à point fixe utilisant une pluralité d'antennes et est constitué en utilisant des oscillateurs locaux disposés indépendamment pour des antennes respectives sur un ou les deux des côtés transmission et réception.

12. Procédé de communication MIMO selon la revendication 11, dans lequel
le traitement de calcul matriciel pour la formation de canaux orthogonaux virtuels est effectué seulement sur le côté réception.

13. Procédé de communication MIMO selon la revendication 9, comprenant en outre :

la détection d'une variation d'une position d'antenne de transmission ou d'une position d'antenne de réception ou d'une variation des canaux ; et
la mise à jour, sur la base d'un résultat de la détection, d'une matrice de formation de canaux orthogonaux virtuels.

14. Procédé de communication MIMO selon la revendication 13, comprenant en outre :

la transmission de signaux pilotes du côté transmission au côté réception ;
la détection d'une variation d'une position d'antenne de transmission ou d'une position d'antenne de réception ou d'une variation des canaux par les signaux pilotes ; et
la mise à jour d'une matrice de formation de canaux orthogonaux virtuels sur la base d'un résultat de la détection.

15. Procédé de communication MIMO selon la revendication 9, dans lequel
la pluralité de canaux est sélectionnée à partir du groupe de canaux optiques, de canaux radio en visibilité directe et de canaux acoustiques en visibilité directe.

16. Procédé de communication MIMO selon la revendication 10, dans lequel
au moins une parmi une longueur de séparation d'antennes d'une pluralité d'antennes de transmission, une longueur de séparation d'antennes d'une pluralité d'antennes de réception, une direction axiale d'une pluralité d'antennes de transmission et une direction axiale d'une pluralité d'antennes de réception est rendue modifiable.

## FIG. 1

# FIG. 2

[FIRST CONFIGURATION EXAMPLE]

$$\mathbf{H} = \mathbf{U} \cdot \Lambda^{1/2} \cdot \mathbf{V}^{\mathbf{H}}$$

$\gamma$ : WAVELENGTH

FEEDBACK INFORMATION

# FIG. 3

[SECOND CONFIGURATION EXAMPLE]

$$\mathbf{H} = \mathbf{U} \cdot \Lambda^{1/2} \cdot \mathbf{V}^{H} = \begin{bmatrix} 1 & e^{-j\alpha} \cdot e^{j\Phi} \\ e^{-j\alpha} & 1 \cdot e^{j\Phi} \end{bmatrix}$$

FEEDBACK INFORMATION

# FIG. 4

[THIRD CONFIGURATION EXAMPLE;
CASE WHERE UNITARY MATRIX CALCULATION IS PERFORMED ONLY ON RECEPTION SIDE AND
WHERE LOCAL OSCILLATORS ON TRANSMISSION SIDE ARE PROVIDED INDEPENDENTLY FOR
RESPECTIVE ANTENNAS]

$$\mathbf{H} = \mathbf{U} \cdot \Lambda^{1/2} \cdot \mathbf{V}^{H} = \begin{bmatrix} 1 & -j \cdot e^{j\Phi} \\ -j & 1 \cdot e^{j\Phi} \end{bmatrix}$$

$\gamma$ : WAVELENGTH

EP 2 091 168 B1

75

## FIG. 5

[FOURTH CONFIGURATION EXAMPLE:
CASE WHERE UNITARY MATRIX CALCULATION IS PERFORMED ONLY ON RECEPTION SIDE AND
WHERE LOCAL OSCILLATORS ON BOTH TRANSMISSION AND RECEPTION SIDES ARE
INDEPENDENTLY PROVIDED FOR RESPECTIVE ANTENNAS]

$$\mathbf{H} = \mathbf{U} \cdot \Lambda^{1/2} \cdot \mathbf{V}^H = \begin{bmatrix} 1 & -j \cdot e^{j\Phi} \\ -j \cdot e^{j\phi} & 1 \cdot e^{j(\Phi+\phi)} \end{bmatrix}$$

$\gamma$ : WAVELENGTH

# FIG. 6

[FIFTH CONFIGURATION EXAMPLE:
CASE WHERE ANTENNAS ARE NOT ARRANGED AT OPTIMUM POSITIONS AND WHERE LOCAL OSCILLATORS
ON BOTH TRANSMISSION AND RECEPTION SIDES ARE INDEPENDENTLY PROVIDED FOR RESPECTIVE ANTENNAS]

$$H = U \cdot \Lambda^{1/2} \cdot V^H = \begin{bmatrix} 1 & -j \cdot e^{j\Phi} \\ -j \cdot e^{j\theta} & 1 \cdot e^{j(\Phi+\phi)} \end{bmatrix}$$

$\gamma$ : WAVELENGTH

# FIG. 7

[SIXTH CONFIGURATION EXAMPLE:
CASE WHERE THREE ANTENNAS ARE USED AND WHERE UNITARY MATRIX CALCULATION
IS PERFORMED ONLY ON RECEPTION SIDE]

$\gamma$ : WAVELENGTH

EP 2 091 168 B1

# FIG. 8

[SEVENTH CONFIGURATION EXAMPLE:
CASE WHERE FOUR ANTENNAS ARE USED AND WHERE UNITARY MATRIX
CALCULATION IS PERFORMED ONLY ON RECEPTION SIDE]

## FIG. 9

[COMPARISON BETWEEN SNRS OF ORTHOGONAL CHANNELS
BASED ON RESPECTIVE METHODS IN TERMS OF ANTENNA INTERVAL]

SNRS OF ORTHOGONAL CHANNELS

Legend:
— SVD $\lambda_1$ Channel
---- SVD $\lambda_2$ Channel
━━ Independent Local $\lambda_1$ Channel
Independent Local $\lambda_2$ Channel

ORTHOGONAL CHANNEL
ACCORDING TO SVD METHOD
$\lambda_2$

ORTHOGONAL CHANNELS
ACCORDING TO PROPOSED METHOD
$\lambda_1$ AND $\lambda_2$

ORTHOGONAL CHANNEL
ACCORDING TO SVD METHOD
$\lambda_1$

SNR [dB]

ANTENNA INTERVAL $d_T$, $d_R$ [m]

where; $\alpha = 2\pi\left(\dfrac{d_R^{\,2}}{2R}\right) / \gamma = \dfrac{\pi}{\gamma} \cdot \dfrac{d^2}{R}$ , $d = d_T, d_R$ , $R = 5000[m]$

EP 2 091 168 B1

# FIG. 10

[CASE WHERE ANTENNA INTERVALS DIFFER FROM EACH OTHER
BETWEEN TRANSMISSION AND RECEPTION SIDE]

$$H = U \cdot \Lambda^{1/2} \cdot V^H$$

$\gamma$: WAVELENGTH

FEEDBACK INFORMATION

# FIG. 11

[CASE WHERE LOWER HALF OF VERTICALLY SYMMETRIC CONFIGURATION OF FIG. 10 IS MODELED]

## FIG. 12

[CHANNEL CAPACITY IN CASE OF FIG. 10 WHERE ANTENNA INTERVALS DIFFER FROM EACH OTHER BETWEEN TRANSMISSION AND RECEPTION SIDE]

$$\lambda = 2 \pm 2\cos\alpha$$

$\alpha$ [DEGREE] $\quad [\alpha \text{ [rad]} = (\pi / \gamma)(d_T \cdot d_R / R)]$

EP 2 091 168 B1

FIG. 13

[CASE WHERE ANTENNA ARRANGEMENT BETWEEN TRANSMISSION/RECEPTION SIDES IS FORMED IN DIAMOND SHAPE]

# FIG. 14

[CASE WHERE MATRIX CALCULATION IS PERFORMED ONLY ON RECEPTION END AND
WHERE ANTENNA ARRANGEMENT BETWEEN TRANSMISSION/RECEPTION SIDES IS FORMED IN DIAMOND SHAPE]

$$\mathbf{H} = \mathbf{U} \cdot \mathbf{\Lambda}^{1/2} \cdot \mathbf{V}^H = \mathbf{H} = \begin{bmatrix} 1 & e^{-j\alpha} \cdot e^{j\xi} \\ e^{-j\alpha} \cdot e^{-j\xi} & 1 \end{bmatrix}$$

EP 2 091 168 B1

# FIG. 15

[CASE WHERE ANTENNA ARRANGEMENT BETWEEN TRANSMISSION/RECEPTION SIDES IS FORMED IN A GIVEN GEOMETRIC FORM]

EP 2 091 168 B1

FIG. 16

[EXAMPLE IN WHICH OPTICAL CHANNELS ARE USED AS DETERMINISTIC CHANNELS]

FIG. 17

[EXAMPLE IN WHICH ACOUSTIC CHANNELS ARE USED AS DETERMINISTIC CHANNELS]

# FIG. 18

[EXAMPLE OF LINE-OF-SIGHT MIMO ANTENNA]

EP 2 091 168 B1

## FIG. 19

$$\lambda = 2 \pm 2\cos\alpha$$

$\alpha$ [DEGREE] $\{\alpha \text{ [rad]}=(\pi / \gamma)(d_R^2/R)\}$

FIG. 20

[APPLICATION EXAMPLE OF CONFIGURATION IN WHICH MATRIX CALCULATION
IS PERFORMED ONLY ON TRANSMISSION SIDE]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006104142 A1
- US 2005128953 A1
- EP 1237291 A2
- JP 2006312277 A

### Non-patent literature cited in the description

- *IEEE TRANSACTIONS ON COMMUNICATIONS,* February 1999, vol. 47 (2), 173-176